# FASCICULE DE BREVET EUROPEEN

(11) **EP 4 313 628 B1**
(45) Date de publication et mention de la délivrance du brevet: **15.01.2025**
(21) Numéro de dépôt: 22714489.6
(22) Date de dépôt: 17.03.2022
(51) Int. Cl.: B60C 9/02

(54) **PNEUMATIQUE COMPRENANT UNE DÉCOUPURE CIRCONFERENTIELLE ET UNE STRUCTURE DE RIGIDIFICATION ENDURANTE ET PERMETTANT UNE MISE A PLAT OPTIMISÉE**
REIFEN MIT UMFANGSAUSSCHNITT UND DAUERHAFTER VERSTEIFUNGSSTRUKTUR UND OPTIMIERTER LAUFFLÄCHENABFLACHUNG
TYRE COMPRISING A CIRCUMFERENTIAL CUT-OUT AND A DURABLE STIFFENING STRUCTURE AND ENABLING OPTIMISED FLATTENING OF THE TREAD

(30) Priorité: 22.03.2021 FR 2102824
(43) Date de publication de la demande: 07.02.2024
(73) Titulaire: COMPAGNIE GENERALE DES ETABLISSEMENTS MICHELIN, 63000 Clermont-Ferrand (FR)
(72) Inventeur: BONNAMOUR, Matthieu, 63040 CLERMONT-FERRAND CEDEX 9 (FR); CHARASSON, Bruno, 63040 CLERMONT-FERRAND CEDEX 9 (FR); GIRARD, Mathieu, 63040 CLERMONT-FERRAND CEDEX 9 (FR); REYNAL-DE-ST-MICHEL, Rémi, 63040 CLERMONT-FERRAND CEDEX 9 (FR); VANDAELE, Mathieu, 63040 CLERMONT-FERRAND CEDEX 9 (FR)
(74) Mandataire: M.F.P. Michelin
(86) Numéro de dépôt international: PCT/FR2022/050487
(87) Numéro de publication internationale: WO 2022/200716

(56) Documents cités:
- WO-A1-2019/115917
- WO-A1-2020/079366
- GB-A- 2 299 554
- US-A- 3 010 504

## Description

La présente invention concerne un pneumatique, notamment pour véhicule de tourisme.

Par pneumatique, on entend un bandage destiné à former une cavité en coopérant avec un support de montage, par exemple une jante, cette cavité étant apte à être pressurisée à une pression supérieure à la pression atmosphérique. Un pneumatique selon l'invention présente une structure de forme sensiblement toroïdale de révolution autour d'un axe principal du pneumatique, cet axe principal étant confondu avec l'axe de rotation du pneumatique.

On connait de l'état de la technique un pneumatique destiné à équiper un véhicule de tourisme et décrit dans WO2020/128225. Le pneumatique décrit comprend un sommet prolongé radialement vers l'intérieur respectivement de chaque côté du plan médian du pneumatique par des premier et deuxième flancs puis par des premier et deuxième bourrelets destinés à entrer en contact avec un support de montage, par exemple une jante. Chaque premier et deuxième bourrelet comprend un élément de renforcement circonférentiel destiné à permettre l'accrochage du pneumatique sur le support de montage.

Le pneumatique comprend une surface interne délimitant une cavité torique de gonflage du pneumatique une fois ce dernier monté sur le support de montage.

Le pneumatique décrit dans WO2020/128225 comprend une structure de rigidification comprenant des premiers éléments filaires de rigidification s'étendant continûment dans la cavité torique depuis le premier bourrelet jusqu'au sommet et des deuxièmes éléments filaires de rigidification s'étendant continûment dans la cavité torique depuis le deuxième bourrelet jusqu'au sommet.

Chaque premier et deuxième élément de rigidification filaire est solidaire de chaque bourrelet depuis lequel il s'étend par une interface de bourrelet entre l'élément de rigidification filaire et une partie de la surface interne du bourrelet. De façon analogue, chaque premier et deuxième élément de rigidification filaire est solidaire du sommet du pneumatique par une interface de sommet entre l'élément de rigidification filaire et une partie de la surface interne du sommet. Chaque interface de bourrelet et de sommet comprend un coussin en mélange élastomérique positionné entre l'élément de rigidification filaire et la partie de la surface interne correspondante.

On a remarqué que chaque interface de bourrelet et de sommet était sollicitée en pelage. De telles interfaces sont sensibles aux sollicitations répétées qui peuvent conduire à une désolidarisation précoce entre les éléments filaires de rigidification et la surface interne du bourrelet et/ou la surface interne située radialement à l'intérieur du sommet et donc à une destruction précoce de la structure de rigidification.

En outre, on a noté que l'aire de contact du pneumatique de WO2020/128225 était irrégulière en comparaison avec l'aire de contact d'un pneumatique classique dépourvu de structure de rigidification.

On connait également d'autres ensembles ou pneumatiques de l'état de la technique, notamment de WO2019115917, GB2299554, FR3089870, FR2638398, US3010504 ou US2005279438.

L'invention a pour but d'améliorer l'endurance de la structure de rigidification ainsi que la régularité de l'aire de contact d'un pneumatique pourvu d'une structure de rigidification.

Ainsi, l'invention a pour objet un pneumatique comprenant un sommet prolongé radialement vers l'intérieur, par deux flancs puis par deux bourrelets, le sommet comprenant une bande de roulement, le pneumatique comprenant une surface interne délimitant une cavité torique de gonflage du pneumatique et une structure de rigidification comprenant au moins un élément de rigidification s'étendant continûment dans la cavité torique depuis au moins un des flancs ou un des bourrelets jusqu'au moins le sommet, pneumatique dans lequel le ou chaque élément de rigidification est ancré dans ledit flanc et/ou ledit bourrelet dans ou autour d'au moins une structure de renfort radialement intérieure agencée dans ledit flanc et/ou ledit bourrelet, le ou chaque élément de rigidification est ancré dans le sommet dans ou autour d'au moins une structure de renfort radialement extérieure agencée dans le sommet, le ou chaque élément de rigidification comprenant une portion s'étendant dans la cavité torique entre :
- un point d'ancrage radialement intérieur auquel le ou chaque élément de rigidification passe au travers de la surface interne pour aller s'ancrer dans ou autour de la ou d'une des structure(s) de renfort radialement intérieure(s),
- un point d'ancrage radialement extérieur auquel le ou chaque élément de rigidification passe au travers de la surface interne pour aller s'ancrer dans ou autour de la ou d'une des structure(s) de renfort radialement extérieure(s),
la bande de roulement présentant une hauteur de sculpture et comprenant une pluralité de nervures, deux nervures adjacentes étant séparées axialement l'une de l'autre par une découpure circonférentielle principale présentant une profondeur supérieure ou égale à 50% de la hauteur de sculpture, le point d'ancrage radialement extérieur est agencé au droit d'une des nervures.

Grâce aux structures de renfort radialement intérieure et extérieure, le ou chaque élément de rigidification est ancré d'une part, dans un des flancs et/ou un des bourrelets et, d'autre part, dans le sommet ce qui permet d'obtenir une solidarisation par ancrage du ou de chaque élément de rigidification dans le pneumatique. Une telle solidarisation par ancrage est significativement plus robuste que les interfaces de bourrelet et de sommet décrites dans WO2020/128225. En effet, l'ancrage permet d'éviter une sollicitation en pelage et un glissement du ou de chaque élément de rigidification radialement et axialement vers l'intérieur du pneumatique. Ainsi, l'endurance de la structure de rigidification du pneumatique selon l'invention est significativement améliorée comme le démontrent les tests menés et décrits ci-dessous.

Grâce à l'ancrage du ou de chaque élément de rigidification dans le sommet, le ou chaque élément de rigidification est fixe axialement et radialement par rapport à la partie du sommet dans lequel il est ancré. De façon analogue, grâce à l'ancrage du ou de chaque élément de rigidification dans le flanc et/ou le bourrelet, le ou chaque élément de rigidification est fixe axialement et radialement par rapport à la partie du flanc et/ou du bourrelet dans lequel il est ancré.

Chaque structure de renfort radialement intérieure et extérieure étant respectivement agencée dans le flanc ou le bourrelet et dans le sommet du pneumatique, c'est-à-dire agencée radialement à l'intérieur de la surface interne et noyée dans la masse de matériaux constituant le flanc ou le bourrelet et dans le sommet, le ou chaque élément de rigidification passe au travers de la surface interne pour aller s'ancrer dans ou autour de la structure de renfort radialement intérieure en un point d'ancrage radialement intérieur et au travers de la surface interne pour aller s'ancrer dans ou autour de la structure de renfort radialement extérieure en un point d'ancrage radialement extérieur. Cette caractéristique permet notamment de réduire le bruit engendré par la structure de rigidification, bruit qui est amorti par la structure du pneumatique séparant la ou chaque structure de renfort radialement intérieure et extérieure du support de montage.

Conformément à l'invention, le ou chaque élément de rigidification est ancré dans ou autour de chaque structure de renfort radialement intérieure et extérieure. Ainsi, dans une première variante, le ou chaque élément de rigidification peut s'ancrer dans la structure même d'une des ou des deux structures de renfort radialement intérieure et extérieure, c'est-à-dire que le ou chaque élément de rigidification pénètre au moins en partie dans cette structure, voire la traverse totalement de façon à ce que la structure forme un ancrage mécanique du ou de chaque élément de rigidification dans la structure. En particulier, dans le cas où la structure est un assemblage de plusieurs éléments filaires, le ou chaque élément de rigidification est ancré dans la structure signifie, par exemple, que le ou chaque élément de rigidification s'enroule autour de certains éléments filaires de la structure de façon à traverser la structure elle-même. Dans une deuxième variante, le ou chaque élément de rigidification peut s'ancrer autour de la structure même d'une des ou des deux structures de renfort radialement intérieure et extérieure, c'est-à-dire que le ou chaque élément de rigidification prend appui sur cette structure de façon à ce que la structure reprenne une partie des efforts exercés sur le ou chaque élément de rigidification et ancre la structure dans le flanc ou le bourrelet et le sommet. En particulier, dans le cas où la structure est un assemblage de plusieurs éléments filaires, le ou chaque élément de rigidification est ancré autour de la structure signifie, par exemple, que le ou chaque élément de rigidification s'enroule autour des éléments filaires périphériques de la structure sans la traverser.

Une nervure forme, à l'état neuf du pneumatique, une partie en saillie de la bande de roulement et porte une surface radialement extérieure destinée à entrer en contact avec le sol de roulage du pneumatique. A l'inverse, une découpure forme, à l'état neuf du pneumatique, une partie en creux de la bande de roulement et ne porte pas de surface destinée à entrer en contact avec le sol de roulage du pneumatique.

Ainsi, toujours conformément à l'invention, la bande de roulement comprend une pluralité de nervures, deux nervures adjacentes étant séparées axialement l'une de l'autre par une découpure circonférentielle principale, le point d'ancrage radialement extérieur est agencé au droit d'une des nervures. En effet, une découpure circonférentielle principale de la bande de roulement forme une zone relativement favorable à la flexion en raison de l'absence de matériau constituant par ailleurs la bande de roulement et ce, d'autant plus que la largeur axiale et la profondeur radiale de la découpure circonférentielle principale est importante. Au contraire, une nervure de la bande de roulement forme une zone relativement rigide en raison de la présence de matériau constituant la bande de roulement. L'invention permet, en agençant le point d'ancrage radialement extérieur au droit de la nervure d'appliquer les efforts dans la zone relativement rigide et donc peu déformable ce qui permet de limiter voire de supprimer les zones de flexion axiale de la bande de roulement par rapport à un pneumatique dans lequel le point d'ancrage radialement extérieure serait agencé au droit de la découpure circonférentielle principale. Ainsi, d'une part, on maintient une aire de contact régulière, et d'autre part on réduit le risque de détérioration de l'armature de sommet du pneumatique, notamment en évitant la mise en compression des différents éléments constitutifs de l'armature de sommet, par exemple des éléments de renfort filaires textiles et métalliques de l'armature de sommet, notamment dans le cas où le pneumatique est soumis à des efforts important en dérive.

Dans un premier cas, une nervure est dite latérale et, à ce titre est agencée axialement entre un bord axial de la bande de roulement et une découpure circonférentielle principale adjacente au bord axial de la bande de roulement. La découpure circonférentielle principale est adjacente au bord de la bande de roulement signifie qu'aucune découpure circonférentielle principale n'est agencée axialement entre ledit bord axial de la bande de roulement et ladite découpure circonférentielle principale adjacente. Dans un deuxième cas, une nervure est dite centrale et, à ce titre est agencée axialement entre deux découpures circonférentielles principales adjacentes l'une à l'autre. Deux découpures circonférentielles principales adjacentes l'une à l'autre signifie qu'aucune découpure circonférentielle principale n'est agencée axialement entre lesdites deux découpures circonférentielles principales adjacentes l'une à l'autre. La bande de roulement du pneumatique peut donc comporter deux nervures latérales et une seule découpure circonférentielle principale agencée axialement entre les deux nervures latérales ou bien comporter deux nervures latérales, une ou plusieurs nervures centrales et au moins deux découpures circonférentielles principales, ceci étant entendu que deux nervures adjacentes, qu'elles soient latérales ou centrales, sont séparées l'une de l'autre par une découpure circonférentielle principale.

Dans le cas d'une nervure latérale, de façon optionnelle, la ou chaque nervure latérale présente une largeur axiale allant de 20 mm à 100 mm. Dans le cas d'une nervure centrale, de façon optionnelle, la ou chaque nervure centrale présente une largeur axiale allant de 20 mm à 60 mm.

Une découpure circonférentielle principale est dite principale en raison de sa profondeur relativement importante. Une découpure circonférentielle principale présente une profondeur supérieure ou égale à 50%, de préférence supérieur ou égal à 75% de la hauteur de sculpture et forme donc une zone particulièrement favorable à la flexion. Conformément à l'invention dans laquelle le point d'ancrage radialement extérieur est agencé au droit de la nervure, le point d'ancrage radialement extérieur est donc exclu du droit de chaque découpure circonférentielle principale. De façon optionnelle, chaque découpure circonférentielle principale présente une largeur supérieure ou égale à 1,0 mm, de préférence supérieure ou égale à 5,0 mm et plus préférentiellement supérieure ou égale à 8,0 mm et encore plus préférentiellement allant de 8,0 mm à 15,0 mm.

La présence de la ou des découpures circonférentielles principales dont la profondeur est supérieure ou égale à 50% de la hauteur de sculpture n'exclue évidemment pas la présence, sur la bande de roulement, d'une ou de plusieurs découpures circonférentielles, dites secondaires, dont la profondeur est strictement inférieure à 50% de la hauteur de sculpture et qui forment donc des zones plus résistantes à la flexion. Ainsi, on pourra envisager, sans sortir du cadre de l'invention, une nervure dans laquelle est ménagée une rainure circonférentielle secondaire présentant une profondeur strictement inférieure à 50%, de préférence inférieure ou égale à 30% de la hauteur de sculpture et au droit de laquelle est agencée le point d'ancrage radialement extérieur.

La cavité torique de gonflage est destinée à être pressurisée par un gaz de gonflage une fois le pneumatique monté sur un support de montage, le plus souvent une jante.

Entre autres avantages, la structure de rigidification permet d'augmenter simultanément la rigidité radiale, la rigidité axiale et la rigidité de dérive du pneumatique par rapport à un pneumatique classique ne comprenant pas de structure de rigidification mais également par rapport à des pneumatiques comprenant d'autres structures de rigidification, comme celui décrit dans WO2017/005713. La rigidité radiale, exprimée en daN/mm, est la force radiale générée par le pneumatique lors de l'application d'un déplacement radial égal à 1 mm. La rigidité axiale, exprimée en daN/mm, est la force axiale générée par le pneumatique lors de l'application d'un déplacement axial égal à 1 mm. La rigidité de dérive, exprimée en daN/°, est la force axiale générée par le pneumatique lors d'un roulage avec un angle de 1° appliquée autour de l'axe radial.

En augmentant la rigidité radiale, la structure de rigidification limite la déformation radiale du sommet, lors du roulage, et en particulier, la contre-flèche, c'est-à-dire la déformation radiale, à l'opposé de l'aire de contact de la surface de roulement en contact avec le sol. Ainsi, au cours du roulage du pneumatique, au tour de roue, la structure de rigidification permet de limiter l'amplitude des déformations cycliques du pneumatique, et en particulier de sa bande de roulement, et donc de limiter la dissipation d'énergie résultante, ce qui contribue à la diminution de la résistance au roulement. En outre, sous sollicitation radiale, la valeur de l'aire de contact avec le sol n'est pas modifiée ce qui permet de conserver la même performance en adhérence que pour le pneumatique décrit dans WO2017/005713.

En augmentant la rigidité axiale et la rigidité de dérive, la structure de rigidification va contribuer à l'amélioration du comportement sous sollicitation transversale, par exemple lors d'un roulage en dérive. En outre, sous sollicitation transversale, l'aire de contact avec le sol garantit une répartition plus homogène des pressions de contact, ce qui permet d'augmenter l'adhérence transversale.

Par ailleurs, la structure de rigidification participe au moins partiellement au port de la charge appliquée au pneumatique de telle sorte que cette charge appliquée est reprise conjointement par le pneumatique, grâce à sa rigidité pneumatique et à sa rigidité structurelle intrinsèque et par la structure de rigidification. Ainsi, lorsque le pneumatique est soumis à une charge radiale nominale, le ou chaque élément de rigidification agencé à l'opposé de l'aire de contact est mis en tension. Dans certains modes de réalisation, à l'inverse, le ou chaque élément de rigidification agencé au droit de l'aire de contact est soumis à un flambage en compression.

Ainsi, La présence d'une structure de rigidification permet ainsi de diminuer la contribution du pneumatique au port de la charge et donc de pouvoir diminuer sa rigidité structurelle, par exemple en réduisant le volume des bourrelets. En effet, les bourrelets d'un pneumatique classique dissipent une quantité d'énergie significative, du fait de leur volume et du caractère hystérétique de leur mélange élastomérique constitutif. Réduire leur volume permet ainsi de réduire de façon significative la résistance au roulement.

Les éléments de rigidification sont deux à deux indépendants dans la cavité torique, c'est-à-dire non liés mécaniquement entre eux dans la cavité torique du pneumatique, de telle sorte qu'ils ont des comportements mécaniques indépendants. Par exemple, ils ne sont pas liés entre eux de façon à former un réseau ou un treillis dans la cavité.

Le pneumatique selon l'invention présente une forme sensiblement torique autour d'un axe de révolution sensiblement confondu avec l'axe de rotation du pneumatique. Cet axe de révolution définit trois directions classiquement utilisées par l'homme du métier : une direction axiale, une direction circonférentielle et une direction radiale.

Par direction axiale, on entend la direction sensiblement parallèle à l'axe de révolution du pneumatique, c'est-à-dire l'axe de rotation du pneumatique.

Par direction circonférentielle, on entend la direction qui est sensiblement perpendiculaire à la fois à la direction axiale et à un rayon du pneumatique (en d'autres termes, tangente à un cercle dont le centre est sur l'axe de rotation du pneumatique).

Par direction radiale, on entend la direction selon un rayon du pneumatique, c'est-à-dire une direction quelconque coupant l'axe de rotation du pneumatique et sensiblement perpendiculaire à cet axe.

Par plan médian du pneumatique (noté M), on entend le plan perpendiculaire à l'axe de rotation du pneumatique qui est situé à mi-distance axiale des deux bourrelets et passe par le milieu axial de l'armature de sommet.

Par plan circonférentiel équatorial du pneumatique (noté E), on entend, dans un plan de coupe méridienne, le plan passant par l'équateur du pneumatique, perpendiculaire au plan médian et à la direction radiale. L'équateur du pneumatique est, dans un plan de coupe méridienne (plan perpendiculaire à la direction circonférentielle et parallèle aux directions radiale et axiales) l'axe parallèle à l'axe de rotation du pneumatique et située à équidistance entre le point radialement le plus extérieur de la bande de roulement destiné à être au contact avec le sol et le point radialement le plus intérieur du pneumatique destiné à être en contact avec un support, par exemple une jante.

Par plan méridien, on entend un plan parallèle à et contenant l'axe de rotation du pneumatique et perpendiculaire à la direction circonférentielle.

Par radialement intérieur, respectivement radialement extérieur, on entend plus proche de l'axe de rotation du pneumatique, respectivement plus éloigné de l'axe de rotation du pneumatique. Par axialement intérieur, respectivement axialement extérieur, on entend plus proche du plan médian du pneumatique, respectivement plus éloigné du plan médian du pneumatique.

Par bourrelet, on entend la portion radiale du pneumatique destiné à permettre l'accrochage du pneumatique sur un support de montage, par exemple une roue comprenant une jante. Ainsi, chaque bourrelet est notamment destiné à être au contact d'un crochet de la jante permettant son accrochage. Le bourrelet est ainsi délimité radialement intérieurement par l'extrémité radialement intérieure du pneumatique et radialement extérieurement par une droite axiale passant par le point radialement le plus extérieur en contact avec une jante standard au sens de la norme de la European Tyre and Rim Technical Organisation ou « ETRTO », 2020.

Par flanc, on entend la portion radiale du pneumatique reliant le bourrelet au sommet. Le flanc est délimité radialement extérieurement par une droite perpendiculaire à la surface externe du pneumatique passant par le point pour lequel l'angle entre la tangente à la surface externe du pneumatique et une droite parallèle à la direction axiale passant par ce point est égal à 30°. Lorsqu'il existe sur un plan de coupe méridienne, plusieurs points pour lesquels ledit angle est égal en valeur absolue à 30°, on retient le point radialement le plus à l'extérieur. Le flanc est délimité radialement intérieurement par une droite axiale passant par le point radialement le plus extérieur en contact avec une jante standard au sens de la norme de la European Tyre and Rim Technical Organisation ou « ETRTO », 2020.

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Un point d'ancrage est agencé au droit d'une nervure lorsqu'il est, dans un plan méridien donné, axialement agencé entre des premier et deuxième plans d'extrémité de la nervure, chaque premier et deuxième plan d'extrémité de la nervure passant par chaque premier et deuxième bord axial délimitant la nervure et étant perpendiculaire à la direction axiale du pneumatique.

La ou chaque nervure comprend des bords axiaux axialement intérieur et extérieur délimitant axialement ladite nervure.

La profondeur d'une découpure est, sur un pneumatique neuf, la distance radiale maximale entre le fond de la découpure et son projeté sur le sol lors du roulage du pneumatique. La valeur maximale des profondeurs des découpures est nommée hauteur de sculpture.

Une découpure désigne soit une rainure, soit une incision et forme un espace débouchant sur la surface de roulement.

Une incision ou une rainure présente, sur la surface de roulement, deux dimensions principales caractéristiques : une largeur et une longueur curviligne telles que la longueur curviligne est au moins égale à deux fois la largeur. Une incision ou une rainure est donc délimitée par au moins deux faces latérales principales déterminant sa longueur curviligne et reliées par une face de fond, les deux faces latérales principales étant distantes l'une de l'autre d'une distance non nulle, dite largeur de la découpure.

La largeur d'une découpure est, sur un pneumatique neuf, la distance maximale entre les deux faces latérales principales mesurée, dans le cas où la découpure ne comprend pas de chanfrein, à une cote radiale de la surface de roulement, et dans le cas où la découpure comprend un chanfrein, à la cote radiale la plus radialement extérieure de la découpure et radialement intérieure au chanfrein. La largeur est mesurée sensiblement perpendiculairement aux faces latérales principales.

La largeur axiale d'une découpure est, quant à elle, mesurée selon la direction axiale du pneumatique, par exemple dans un plan de coupe méridien du pneumatique.

Une incision est telle que la distance entre les faces latérales principales est appropriée pour permettre la mise en contact au moins partielle des faces latérales principales délimitant ladite incision lors du passage dans l'aire de contact, notamment lorsque le pneumatique est à l'état neuf et dans des conditions usuelles de roulage, comprenant notamment le fait que le pneumatique soit à charge nominale et à pression nominale.

Une rainure est telle que la distance entre les faces latérales principales est telle que ces faces latérales principales ne peuvent venir en contact l'une contre l'autre dans des conditions usuelles de roulage, comprenant notamment le fait que le pneumatique soit à charge nominale et à pression nominale.

Une découpure circonférentielle est telle que la découpure s'étend selon une direction moyenne formant un angle inférieur ou égal à 30°, de préférence inférieur ou égal à 10° avec la direction circonférentielle du pneumatique. La direction moyenne est la courbe la plus courte joignant les deux extrémités de la découpure et parallèle à la surface de roulement. Dans le cas d'une découpure circonférentielle continue, les deux extrémités sont confondues l'une avec l'autre et sont jointes par une courbe faisant un tour complet du pneumatique. Une découpure circonférentielle peut être continue, c'est-à-dire ne pas être interrompue par un bloc de sculpture ou une autre découpure de sorte que les deux faces latérales principales déterminant sa longueur sont ininterrompues sur l'ensemble d'un tour du pneumatique. Une découpure circonférentielle peut également être discontinue, c'est-à-dire interrompue par un ou plusieurs blocs de sculpture et/ou une ou plusieurs découpures de sorte que les deux faces latérales principales déterminant sa longueur sont interrompues par un ou plusieurs blocs de sculpture et/ou une ou plusieurs découpures sur l'ensemble d'un tour du pneumatique.

Dans le cas d'une découpure circonférentielle située hors du plan médian du pneumatique, les faces latérales sont appelées faces axialement intérieure et face axialement extérieure, la face axialement intérieure étant agencée, à un azimut donné, axialement à l'intérieur de la face axialement extérieure par rapport au plan médian.

Chaque découpure circonférentielle comprend des bords axiaux axialement intérieur et extérieur délimitant axialement ladite découpure circonférentielle. Chaque bord axial axialement intérieur et extérieur de ladite découpure est un des deux bords axiaux de ladite découpure circonférentielle situé à une cote radiale de la surface de roulement, que la découpure circonférentielle comprenne ou non un chanfrein. Chaque bord axial axialement intérieur et extérieur de ladite découpure forme également un bord axial d'une nervure adjacente.

Une découpure circonférentielle doit notamment être distinguée d'une découpure transversale. Une découpure transversale est telle que la découpure s'étend selon une direction moyenne formant un angle strictement supérieur à 30°, de préférence supérieur ou égal à 45° avec la direction circonférentielle du pneumatique. La direction moyenne est la courbe la plus courte joignant les deux extrémités de la découpure et parallèle à la surface de roulement. Une découpure transversale peut être continue, c'est-à-dire ne pas être interrompue par un bloc de sculpture ou une autre découpure de sorte que les deux faces latérales principales déterminant sa longueur sont ininterrompues sur la longueur de la découpure transversale. Une découpure transversale peut également être discontinue, c'est-à-dire interrompue par un ou plusieurs blocs de sculpture et/ou une ou plusieurs découpures de sorte que les deux faces latérales principales déterminant sa longueur sont interrompues par un ou plusieurs blocs de sculpture et/ou une ou plusieurs découpures.

Dans le cas d'une découpure transversale, les faces latérales sont appelées face d'attaque et face de fuite, la face d'attaque étant celle dont le bord, pour une ligne circonférentielle donnée, entre dans l'aire de contact avant le bord de la face de fuite.

Dans des modes de réalisation, la ou chaque découpure circonférentielle est munie de chanfreins. Un chanfrein d'une découpure circonférentielle peut être un chanfrein droit ou un chanfrein arrondi. Un chanfrein droit est formé par une face plane inclinée par rapport à la face axialement intérieure et extérieure qu'elle prolonge jusqu'au bord axialement intérieur ou extérieur délimitant axialement la découpure circonférentielle. Un chanfrein arrondi est formé par une face courbe se raccordant tangentiellement à la face axialement intérieure ou extérieure qu'elle prolonge. Un chanfrein d'une découpure circonférentielle est caractérisé par une hauteur et une largeur égale respectivement à la distance radiale et à la distance axiale entre le point commun entre la face axialement intérieure ou extérieure prolongée par le chanfrein et le bord axialement intérieur ou extérieur délimitant axialement la découpure circonférentielle.

De façon classique, on détermine la surface de roulement sur un pneumatique monté sur une jante nominale et gonflé à la pression nominale au sens de la norme de la European Tyre and Rim Technical Organisation ou « ETRTO », 2020. Dans le cas d'une frontière évidente entre la surface de roulement et le reste du pneumatique, la largeur axiale de la surface de roulement est simplement mesurée. Dans le cas où la surface de roulement est continue avec les surfaces externes des flancs du pneumatique, le bord axial de la surface de roulement passe par le point pour lequel l'angle entre la tangente à la surface de roulement et une droite parallèle à la direction axiale passant par ce point est égal à 30°. Lorsqu'il existe sur un plan de coupe méridienne, plusieurs points pour lesquels ledit angle est égal en valeur absolue à 30°, on retient le point radialement le plus à l'extérieur.

Les pneumatiques de l'invention sont préférentiellement destinés à des véhicules de tourisme tels que définis au sens de la norme de la European Tyre and Rim Technical Organisation ou « ETRTO », 2020. Un tel pneumatique présente une section dans un plan de coupe méridien caractérisée par une hauteur de section H et une largeur de section nominale SW au sens de la norme de la European Tyre and Rim Technical Organisation ou « ETRTO », 2020. Les valeurs de SW et H sont indiquées sur le marquage du flanc du pneumatique, par exemple tel que défini selon le manuel ETRTO, 2020.

De façon préférée, les pneumatiques pour véhicule de tourisme auxquels on appliquera avantageusement l'invention sont tels que le rapport H/S, exprimé en pourcentage, est au plus égal à 90, de préférence au plus égal à 80 et plus préférentiellement au plus égal à 70 et est au moins égal à 20, de préférence au moins égal à 30, et la largeur de section nominale SW est au moins égale à 115 mm, de préférence au moins égale à 155 mm et plus préférentiellement au moins égale à 175 mm et au plus égal à 385 mm, de préférence au plus égal à 315 mm, plus préférentiellement au plus égal à 285 mm. En outre le diamètre au crochet D, définissant le diamètre de la jante de montage du pneumatique, est au moins égal à 12 pouces, de préférence au moins égal à 16 pouces et au plus égal à 24 pouces, de préférence au plus égal à 21 pouces.

De façon classique, dans un pneumatique comprenant une armature de sommet et une armature de carcasse, le sommet comprend une bande de roulement destinée à venir en contact avec le sol de roulage et une armature de sommet agencée radialement à l'intérieur de la bande de roulement. Le pneumatique comprend également une armature de carcasse ancrée dans chaque bourrelet et s'étendant radialement dans chaque flanc et axialement dans le sommet radialement à l'intérieur de l'armature de sommet. De façon conventionnelle, l'armature de sommet comprend au moins une couche de sommet comprenant des éléments de renforcement. Ces éléments de renforcement sont préférentiellement des éléments filaires textiles ou métalliques. L'armature de carcasse est ancrée dans chaque bourrelet au moyen du ou des éléments de renforcements circonférentiels.

Dans des modes de réalisation permettant l'obtention des performances de pneumatiques dits radiaux comme défini par l'ETRTO, l'armature de carcasse comprend au moins une couche de carcasse, la ou chaque couche de carcasse comprenant des éléments de renforcement filaires de carcasse, chaque élément de renforcement filaire de carcasse s'étendant sensiblement selon une direction principale formant avec la direction circonférentielle du pneumatique, un angle, en valeur absolue, allant de 80° à 90°.

Dans un mode de réalisation, chaque bourrelet comprenant au moins un élément de renforcement circonférentiel destiné à permettre l'accrochage du pneumatique sur un support de montage du pneumatique, la structure de renfort radialement intérieure est distincte du ou de chaque élément de renforcement circonférentiel situé du même côté du plan médian du pneumatique que ledit flanc et/ou ledit bourrelet.

Dans ce mode de réalisation, la ou chaque structure de renfort radialement intérieure est distincte du ou de chaque élément de renforcement circonférentiel situé du même côté du plan médian du pneumatique ce qui permet de réduire très significativement la propagation du bruit engendré par la structure de rigidification depuis la structure de rigidification vers le véhicule au travers du support de montage du pneumatique. En effet, les inventeurs émettent l'hypothèse que le bruit engendré par la structure de rigidification est amorti par la structure du pneumatique séparant la ou chaque structure de renfort radialement intérieure de chaque élément de renforcement circonférentiel destiné à permettre l'accrochage du pneumatique sur son support de montage. Cet amortissement est le résultat du fait qu'en étant distincte du ou de chaque élément de renforcement circonférentiel situé du même côté du plan médian du pneumatique, la structure de renfort radialement intérieure est mécaniquement découplée du ou de chaque élément de renforcement circonférentiel situé du même côté du plan médian du pneumatique. En d'autres termes, la structure de renfort radialement intérieure et le ou chaque élément de renforcement circonférentiel situé du même côté du plan médian du pneumatique sont séparés physiquement l'un de l'autre par un ou plusieurs matériaux de découplage, par exemple des matériaux élastomériques, permettant de découpler mécaniquement l'un de l'autre.

Dans un mode de réalisation préféré, la structure de rigidification comprend plusieurs éléments de rigidification répartis circonférentiellement dans la cavité torique.

Ainsi, la structure de rigidification exerce sa fonction sur toute la circonférence du pneumatique.

La répartition circonférentielle peut être obtenue par une structure de rigidification dans laquelle les éléments de rigidification sont répartis selon un pas circonférentiel constant sur toute la circonférence du pneumatique ou bien par une structure de rigidification dans laquelle les éléments de rigidification sont répartis périodiquement sur toute la circonférence du pneumatique ou bien encore par une structure de rigidification dans laquelle les éléments de rigidification sont répartis aléatoirement sur toute la circonférence du pneumatique.

Dans un mode de réalisation avantageux, le ou chaque élément de rigidification n'est pas étanche à un gaz de gonflage du pneumatique. Ainsi, le ou chaque élément de rigidification laisse passer le gaz de gonflage. En d'autres termes, le ou chaque élément de rigidification ne délimite pas de cavité secondaire sous pression du pneumatique. Par pas étanche, on comprendra que l'élément de rigidification est perméable au gaz de gonflage de façon à ce que la pression soit homogène dans la cavité torique à tout moment et, notamment lors du gonflage du pneumatique.

Très avantageusement, de façon à permettre un procédé de fabrication relativement aisé à mettre en oeuvre, le pneumatique comprenant une armature de carcasse ancrée dans chaque bourrelet, le sommet comprenant une armature de sommet et une bande de roulement, l'armature de carcasse s'étendant dans chaque flanc et dans le sommet radialement intérieurement à l'armature de sommet, la ou chaque structure de renfort radialement extérieure est agencée radialement à l'intérieur de l'armature de carcasse.

De façon à limiter autant que possible les zones de flexion axiale de la bande de roulement, on positionne préférentiellement le ou chaque point d'ancrage radialement extérieur relativement éloigné des bords axiaux de la nervure au droit de laquelle le ou chaque point d'ancrage radialement extérieur est agencé. Ainsi, de façon optionnelle, la ou chaque nervure au droit de laquelle est agencé le ou chaque point d'ancrage radialement extérieur étant délimitée axialement par deux bords axiaux définissant la largeur L de la nervure et un plan médian de la nervure étant situé axialement à équidistance des deux bords axiaux, le ou chaque point d'ancrage radialement extérieur est agencé à une distance axiale I du plan médian telle que 2 x l / L ≤ 0,90, de préférence 2 x l / L ≤ 0,75 et plus préférentiellement 2 x l / L ≤ 0,50 et encore plus préférentiellement 2 x l / L ≤ 0,25.

Le plan médian de la nervure est le plan perpendiculaire à l'axe de rotation du pneumatique qui est situé à équidistance axiale de chaque bord axial de la nervure.

Dans un premier mode de réalisation, le sommet étant prolongé radialement vers l'intérieur respectivement de chaque côté du plan médian du pneumatique par un premier et un deuxième flanc puis par un premier et un deuxième bourrelet,
le ou chaque élément de rigidification est ancré dans ou autour de:
   - une première structure de renfort radialement intérieure agencée dans le premier flanc et/ou le premier bourrelet,
   - la ou plusieurs des structure(s) de renfort radialement extérieure,
   - une deuxième structure de renfort radialement intérieure agencée dans le deuxième flanc et/ou le deuxième bourrelet,
de sorte que le ou chaque élément de rigidification s'étend continûment depuis le premier flanc et/ou le premier bourrelet jusqu'au deuxième flanc et/ou deuxième bourrelet en passant dans le sommet,
le ou chaque élément de rigidification comprend une portion s'étendant dans la cavité torique entre :
   - un premier point d'ancrage radialement intérieur auquel le ou chaque élément de rigidification passe au travers de la surface interne pour aller s'ancrer dans ou autour de la première structure de renfort radialement intérieure,
   - un premier point d'ancrage radialement extérieur auquel le ou chaque élément de rigidification passe au travers de la surface interne pour aller s'ancrer dans ou autour de la ou de plusieurs des structure(s) de renfort radialement extérieure(s),
le ou chaque élément de rigidification comprend une portion s'étendant dans la cavité torique entre :
   - un deuxième point d'ancrage radialement intérieur auquel le ou chaque élément de rigidification passe au travers de la surface interne pour aller s'ancrer dans ou autour de la deuxième structure de renfort radialement intérieure,
   - un deuxième point d'ancrage radialement extérieur auquel le ou chaque élément de rigidification passe au travers de la surface interne pour aller s'ancrer dans ou autour de la ou de plusieurs des structure(s) de renfort radialement extérieure(s),
chaque premier et deuxième point d'ancrage radialement extérieur est agencé au droit d'une des nervures.

Dans ce premier mode de réalisation, le ou chaque élément de rigidification est continu entre les premier et deuxième flancs ou bourrelets. Ainsi, il n'existe pas d'extrémité de l'élément de rigidification à ancrer dans le sommet ce qui, d'une part facilite la fabrication du pneumatique et, d'autre part, limite les risques de glissement d'une extrémité de l'élément de rigidification qui serait située dans le sommet. Le ou chaque élément de rigidification étant continu, cela améliore également la transmission des efforts entre chaque premier et deuxième flanc et/ou bourrelet qui sont ainsi répartis sur la totalité du pneumatique.

En outre, la structure de rigidification exerce sa fonction de part et d'autre du plan médian du pneumatique ce qui permet d'obtenir un comportement homogène du pneumatique.

Dans une variante préférée du premier mode de réalisation préférée, le ou chaque élément de rigidification est ancré dans ou autour de:
- la première structure de renfort radialement intérieure,
- des première et deuxième structures de renfort radialement extérieures agencées dans le sommet,
- la deuxième structure de renfort radialement intérieure.

Dans cette variante préférée, le pneumatique comprend des première et deuxième structures de renfort radialement extérieures distinctes l'une de l'autre. Cela permet de réduire la masse de structure de renfort permettant l'ancrage du ou des éléments de rigidification dans le sommet. De plus, pour une largeur axiale donnée, l'utilisation de première et deuxième structures de renfort radialement extérieures par rapport à une unique structure de renfort radialement extérieure permet de limiter le sur-frettage du sommet ce qui permet de conserver une aire de contact régulière.

De façon préférée mais optionnelle, la structure de rigidification comprend plusieurs éléments de rigidification formant un élément de rigidification continu de façon à décrire une trajectoire en boustrophédon entre le premier flanc et/ou le premier bourrelet et le deuxième flanc et/ou le deuxième bourrelet en passant par le sommet.

Ainsi, on améliore encore la robustesse de la structure de rigidification en supprimant des extrémités de l'élément de rigidification à ancrer dans chaque flanc ou chaque bourrelet. Dans cette variante, il est ainsi possible d'avoir un élément de rigidification continu formant la structure de rigidification sur l'ensemble de la circonférence du pneumatique. Il est également possible d'avoir plusieurs éléments de rigidification continus formant chacun une partie de la structure de rigidification sur une partie de la circonférence du pneumatique. En outre, une telle structure de rigidification est relativement simple à fabriquer car on utilise un seul élément de rigidification dont on peut faire varier la loi de pose en fonction des différentes dimensions de pneumatiques. Si on utilisait plusieurs éléments de rigidification distincts les uns des autres, il conviendrait alors d'ajuster leur longueur pour chaque dimension de pneumatique.

Dans un deuxième mode de réalisation, le sommet étant prolongé radialement vers l'intérieur respectivement de chaque côté du plan médian du pneumatique par un premier et un deuxième flanc puis par un premier et un deuxième bourrelet, la structure de rigidification comprend au moins des premier et deuxième éléments de rigidification,
le ou chaque premier élément de rigidification est ancré dans ou autour de:
   - une première structure de renfort radialement intérieure agencée dans le premier flanc et/ou le premier bourrelet,
   - la ou plusieurs des structure(s) de renfort radialement extérieure(s) agencée dans le sommet,
le ou chaque deuxième élément de rigidification est ancré dans ou autour de:
   - une deuxième structure de renfort radialement intérieure agencée dans le deuxième flanc et/ou le deuxième bourrelet, et
   - la ou plusieurs des structure(s) de renfort radialement extérieure(s) agencée dans le sommet,
de sorte que le ou chaque premier et deuxième élément de rigidification s'étend continûment dans la cavité torique respectivement depuis le premier flanc et/ou le premier bourrelet et le deuxième flanc et/ou le deuxième bourrelet jusqu'au sommet dans la cavité torique,
le ou chaque premier élément de rigidification comprend une portion s'étendant dans la cavité torique entre :
   - un premier point d'ancrage radialement intérieur auquel le ou chaque premier élément de rigidification passe au travers de la surface interne pour aller s'ancrer dans ou autour de la première structure de renfort radialement intérieure,
   - un premier point d'ancrage radialement extérieur auquel le ou chaque premier élément de rigidification passe au travers de la surface interne pour aller s'ancrer dans ou autour de la ou plusieurs des structure(s) de renfort radialement extérieure(s),
le ou chaque deuxième élément de rigidification comprend une portion s'étendant dans la cavité torique entre :
   - un deuxième point d'ancrage radialement intérieur auquel le ou chaque deuxième élément de rigidification passe au travers de la surface interne pour aller s'ancrer dans ou autour de la deuxième structure de renfort radialement intérieure,
   - un deuxième point d'ancrage radialement extérieur auquel le ou chaque deuxième élément de rigidification passe au travers de la surface interne pour aller s'ancrer dans ou autour de la ou plusieurs des structure(s) de renfort radialement extérieure(s),
chaque premier et deuxième point d'ancrage radialement extérieur étant agencé au droit d'une des nervures.

Dans ce deuxième mode de réalisation, contrairement au premier mode de réalisation, le ou chaque premier élément de rigidification est distinct du ou de chaque deuxième élément de rigidification et discontinu par rapport au ou à chaque deuxième élément de rigidification.

Dans une variante préférée de ce deuxième mode de réalisation, le ou chaque premier élément de rigidification est ancré dans ou autour de:
- la première structure de renfort radialement intérieure, et
- une première structure de renfort radialement extérieure agencée dans le sommet,
le ou chaque deuxième élément de rigidification est ancré dans ou autour de:
- la deuxième structure de renfort radialement intérieure, et
- une deuxième structure de renfort radialement extérieure agencée dans le sommet, distincte de la première structure de renfort radialement extérieure.

De façon préférée mais optionnelle, la structure de rigidification comprend :
- plusieurs premiers éléments de rigidification formant un premier élément de rigidification continu de façon à décrire une trajectoire en boustrophédon entre le premier flanc et/ou le premier bourrelet et le sommet,
- plusieurs deuxièmes éléments de rigidification formant un deuxième élément de rigidification continu de façon à décrire une trajectoire en boustrophédon entre le deuxième flanc et/ou le deuxième bourrelet et le sommet.

De façon analogue au premier mode de réalisation, de tels premiers et deuxièmes éléments de rigidification améliorent encore la robustesse de la structure de rigidification.

De façon avantageuse, les première et deuxième structures de renfort radialement extérieures sont optionnellement agencées axialement de part et d'autre du plan médian du pneumatique, de préférence sensiblement symétriquement par rapport au plan médian du pneumatique. Ainsi, on améliore la répartition axiale des efforts exercés par les éléments de rigidification sur chaque premier et deuxième flanc et/ou bourrelet et sur le sommet.

De façon à limiter encore plus les zones de flexion axiale de la bande de roulement et donc de façon à, d'une part, améliorer le maintient d'une aire de contact régulière, et d'autre part de réduire davantage le risque de détérioration de l'armature de sommet du pneumatique, que ce soit dans le premier ou le deuxième mode de réalisation, chaque premier et deuxième point d'ancrage radialement intérieur et extérieur est agencé de sorte que :
les premiers points d'ancrage radialement extérieur et radialement intérieur sont agencés axialement du même côté du plan médian du pneumatique,
les deuxièmes points d'ancrage radialement extérieur et radialement intérieur sont agencés axialement du même autre côté du plan médian du pneumatique, et
la portion s'étendant entre les premiers points d'ancrage radialement extérieur et radialement intérieur et la portion s'étendant entre les deuxièmes points d'ancrage radialement extérieur et radialement intérieur ne se croisent pas dans la cavité torique.

En effet, les portions s'étendant d'une part, entre les premiers points d'ancrage situés d'un même côté du plan médian et d'autre part, entre les deuxièmes points d'ancrage situés de l'autre côté du plan médian ne se croisent pas ce qui permet de limiter encore davantage les zones de flexion axiale de la bande de roulement, c'est-à-dire la compression axiale de la bande de roulement, notamment dans des conditions de sollicitations latérales élevées.

En variante, on pourra au contraire envisager que chaque premier et deuxième point d'ancrage radialement extérieur soit agencé de sorte que la portion s'étendant entre les premiers points d'ancrage et la portion s'étendant entre les deuxièmes points d'ancrage se croisent dans la cavité torique et/ou que les premiers points d'ancrage radialement extérieur et radialement intérieur sont agencés axialement de deux côtés différents du plan médian du pneumatique et/ou que les deuxièmes points d'ancrage radialement extérieur et radialement intérieur sont agencés axialement de deux côtés différents du plan médian du pneumatique.

De façon optionnelle, chaque premier et deuxième bourrelet comprenant au moins élément de renforcement circonférentiel destiné à permettre l'accrochage du pneumatique sur un support de montage du pneumatique,
la première structure de renfort radialement intérieure est distincte du ou de chaque élément de renforcement circonférentiel situé du même premier côté du plan médian du pneumatique que ledit premier flanc et/ou ledit premier bourrelet, et
la deuxième structure de renfort radialement intérieure est distincte du ou de chaque élément de renforcement circonférentiel situé du même deuxième côté du plan médian du pneumatique que ledit deuxième flanc et/ou ledit deuxième bourrelet.

Comme déjà expliqué ci-dessus, de telles caractéristiques optionnelles mais avantageuses permettent, dans le cas des premier et deuxième modes de réalisation, de réduire très significativement la propagation du bruit engendré par la structure de rigidification depuis la structure de rigidification vers le véhicule au travers du support de montage du pneumatique.

Dans un mode de réalisation, la pluralité de nervures comprenant au moins des première et deuxième nervures séparées axialement par la, une des ou plusieurs des découpure(s) circonférentielle(s) principale(s), chaque premier et deuxième point d'ancrage radialement extérieur est agencé respectivement au droit de chaque première et deuxième nervure. Dans ce mode de réalisation, chaque premier et deuxième point d'ancrage radialement extérieur est agencé au droit de deux nervures distinctes. Un tel mode de réalisation est notamment utilisé dans le cas où la bande de roulement comprend une découpure circonférentielle principale sensiblement alignée avec le plan médian du pneumatique.

Dans un autre mode de réalisation, chaque premier et deuxième point d'ancrage radialement extérieur est agencé respectivement au droit d'une même nervure parmi la pluralité de nervures.

Très avantageusement, le ou chaque élément de rigidification passe au travers de la surface interne pour aller s'ancrer dans ou autour de la ou une des structure(s) de renfort radialement intérieure(s) en un point d'ancrage radialement intérieur agencé radialement à une distance radiale allant de 0,10 x H à 0,50 x H, de préférence allant de 0,10 x H à 0,35 x H du point radialement le plus intérieur du pneumatique, H étant la hauteur de section du pneumatique.

Ainsi, on réduit encore davantage la propagation du bruit engendré par la structure de rigidification depuis la structure de rigidification vers le véhicule au travers du support de montage du pneumatique. En effet, au-delà d'une distance radiale égale à 0,10 x H, le point d'ancrage radialement intérieur est éloigné du bourrelet, et notamment des éléments de renforcement circonférentiels des bourrelets, par exemple des tringles, de sorte que, pour que les ondes sonores générées par la structure de rigidification soient amorties de façon importante par la structure du pneumatique avant d'atteindre l'élément de renforcement circonférentiel qui constitue un élément de transmission important du bruit entre le pneumatique et le support de montage. Néanmoins, il est préférable que le point d'ancrage radialement intérieur ne soit pas radialement trop éloigné de façon à permettre une reprise d'efforts axiaux efficace entre la structure de rigidification et le flanc ou le bourrelet par l'intermédiaire de l'élément de rigidification et ainsi participer à l'amélioration de la rigidité axiale.

Très avantageusement, le ou chaque élément de rigidification passe au travers de la surface interne pour aller s'ancrer dans ou autour de la ou une des structure(s) de renfort radialement extérieure(s) en un point d'ancrage radialement extérieur agencé axialement à une distance axiale au plus égale à 0,45 x SW, de préférence allant de 0,05 x SW à 0,45 x SW du plan médian du pneumatique, SW étant la largeur de section nominale du pneumatique.

Au-delà de 0,45xS, le ou chaque élément de rigidification s'étend selon une direction formant un angle trop faible par rapport à la direction radiale ce qui apporte une contribution moindre aux rigidités respectivement axiale et de dérive.

En ce qui concerne la structure de rigidification, chaque élément de rigidification peut être caractérisé géométriquement, en particulier par sa section moyenne Sm, cette caractéristique n'étant pas nécessairement identique pour l'ensemble des éléments de rigidification. La section moyenne Sm est la moyenne des sections obtenues par la coupe de l'élément de rigidification par toutes les surfaces cylindriques, coaxiales au pneumatique et radialement comprises dans la cavité torique intérieure. Dans le cas le plus fréquent d'une section constante, la section moyenne Sm est la section constante de l'élément de rigidification. La section moyenne Sm comprend une plus grande dimension caractéristique Dmax et une plus petite dimension caractéristique Dmin, dont le rapport R= Dmax/Dmin est appelé rapport de forme. A titre d'exemples, un élément de rigidification ayant une section moyenne Sm circulaire, ayant un diamètre égal à d, a un rapport de forme R=1, un élément de rigidification ayant une section moyenne Sm rectangulaire, ayant une longueur L et une largeur l, a un rapport de forme R=L/l, et un élément de rigidification ayant une section moyenne Sm elliptique, ayant un grand axe D et un petit axe d, a un rapport de forme R=D/d.

Un premier type d'élément de rigidification préféré, avec un rapport de forme R au plus égal à 3, est dit unidimensionnel. En d'autres termes, un élément de rigidification est considéré comme unidimensionnel, quand la plus grande dimension caractéristique Dmax de sa section moyenne Sm est au plus égale à 3 fois la plus petite dimension caractéristique Dmin de sa section moyenne Sm. Un élément de rigidification unidimensionnel a un comportement mécanique de type filaire, c'est-à-dire qu'il ne peut être soumis qu'à des efforts d'extension ou de compression selon sa ligne moyenne. C'est la raison pour laquelle un élément de rigidification unidimensionnel est usuellement appelé élément de rigidification filaire. Parmi les composants couramment utilisés dans le domaine du pneumatique, les éléments filaires textiles, constitués par un assemblage de monofilaments élémentaires textiles, ou les câbles métalliques, constitués par un assemblage de monofilaments élémentaires métalliques, peuvent être considérés comme des éléments de rigidification unidimensionnels, car leur section moyenne Sm étant sensiblement circulaire, le rapport de forme R est égal à 1, donc inférieur à 3.

Un deuxième type d'élément de rigidification, avec un rapport de forme R au moins égal à 3, est dit bidimensionnel. En d'autres termes, un élément de rigidification est considéré comme bidimensionnel, quand la plus grande dimension caractéristique Dmax de sa section moyenne Sm est au moins égale à 3 fois la plus petite dimension caractéristique Dmin de sa section moyenne Sm. Un élément de rigidification bidimensionnel a un comportement mécanique de type membranaire, c'est-à-dire qu'il ne peut être soumis qu'à des efforts d'extension ou de compression dans son épaisseur définie par la plus petite dimension caractéristique Dmin de sa section moyenne Sm. Selon une première variante, un élément de rigidification, avec un rapport de forme R au moins égal à 3 et au plus égal à 50, est dit bidimensionnel de type lanière. Selon une deuxième variante, un élément de rigidification, avec un rapport de forme R au moins égal à 50, est dit bidimensionnel de type film.

Selon une première variante de structure de l'élément de rigidification, tout élément de rigidification a une structure homogène, comprenant un seul constituant. C'est la structure la plus simple envisagée, telle que, par exemple, un monofilament élémentaire d'un unique matériau ou une couche d'un unique matériau. Selon une deuxième variante de structure, tout élément de rigidification a une structure composite, comprenant au moins deux constituants. C'est une structure constituée par un assemblage d'au moins deux éléments, telle que, à titre d'exemple, un assemblage comprenant plusieurs monofilaments élémentaires ou un assemblage d'une première couche d'un premier matériau et d'une deuxième couche d'un deuxième matériau.

Concernant le ou les matériaux composant l'élément de rigidification, dans une première variante de composition, tout élément de rigidification comprend un seul matériau: à titre d'exemple, un monofilament élémentaire d'un unique matériau ou un assemblage comprenant plusieurs monofilaments élémentaires d'un même matériau. Dans une deuxième variante de composition, tout élément de rigidification comprend au moins deux matériaux. Dans ce cas, on a une structure composite du point de vue des matériaux: par exemple, un assemblage comprenant des monofilaments élémentaire d'un premier matériau et des monofilaments élémentaires d'un deuxième matériau différent du premier matériau. ou une couche comprenant des monofilaments élémentaires ou des assemblages de monofilaments élémentaires noyés dans une matrice polymérique.

Dans un mode de réalisation très avantageux, le ou chaque élément de rigidification est un élément de rigidification filaire, de préférence un élément de rigidification filaire textile. De préférence, les éléments filaires de rigidification sont identiques, c'est-à-dire qu'ils ont des caractéristiques géométriques et des matériaux constitutifs identiques.

Ces éléments filaires de rigidification sont usuellement appelés haubans. L'intérêt d'utiliser des éléments filaires de rigidification est d'avoir une structure de rigidification ayant une faible masse et peu hystérétique. L'utilisation d'éléments filaires de rigidification identiques permet d'avoir une répartition homogène des efforts entre les éléments de rigidification.

Lorsqu'il est filaire, chaque élément de rigidification filaire est de préférence textile. Par textile, on entend que chaque élément de rigidification filaire est non métallique, par exemple réalisé dans un matériau choisi parmi un polyester, un polyamide, une polycétone, un alcool polyvinylique, une cellulose, une fibre minérale, une fibre naturelle, un matériau élastomérique ou un mélange de ces matériaux. Parmi les polyesters on citera par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate). Parmi les polyamides, on citera les polyamides aliphatiques tels que les polyamides 4-6, 6, 6-6 (nylon), 11 ou 12 et les polyamides aromatiques tels que l'aramide. De préférence, le matériau est un polyester ou un polyamide aliphatique.

Par exemple, chaque élément de rigidification filaire textile est un assemblage textile comprenant un ou plusieurs monofilaments élémentaires, retordus ensemble ou non. Ainsi, dans un mode de réalisation, on pourra avoir un assemblage dans lequel les monofilaments élémentaires sont sensiblement parallèles les unes aux autres. Dans un autre mode de réalisation, on pourra avoir également un assemblage dans lequel les monofilaments élémentaires sont enroulés en hélice. Dans encore un autre mode de réalisation, chaque élément de rigidification filaire est constitué d'un monofilament élémentaire. Chaque monofilament élémentaire présente un diamètre allant de 5 µm à 0,80 mm.

Dans une première variante, chaque élément de rigidification filaire textile comprend un ou plusieurs brin(s) multifilamentaire(s) comprenant chacun plusieurs monofilaments présentant un diamètre allant de 5 µm à 20 µm. Dans cette première variante, le nombre de monofilaments de chaque brin multifilamentaire va généralement de 100 à 10000. Afin de limiter la fuite du gaz de gonflage par l'intermédiaire des capillaires présents entre les monofilaments des éléments de rigidification filaires textiles selon cette première variante, on pourra avantageusement gainer chaque élément de rigidification filaire textile, par exemple à l'aide d'une ou de plusieurs compositions polymériques bien connues de l'homme du métier et ce afin de boucher ces capillaires. Dans une deuxième variante, chaque élément de rigidification filaire textile comprend un brin multifilamentaire comprenant plusieurs monofilaments enroulés en hélice et présentant chacun un diamètre allant de 0,10 mm à 0,80 mm. Dans cette deuxième variante, le nombre de monofilaments va généralement de 2 à 10. Dans cette deuxième variante, le nombre de capillaires entre les monofilaments étant faibles, il n'est pas utile de gainer l'élément de rigidification filaire textile même si cela peut bien entendu être envisagé.

De façon classique, chaque élément de rigidification filaire textile est revêtu d'au moins une composition adhésive aqueuse, par exemple d'une colle de type RFL ou bien telle que décrite dans les documents WO2013017422, WO2017168107.

Dans un autre mode de réalisation, chaque élément de rigidification filaire est métallique, par exemple un assemblage de monofilaments métalliques, chaque monofilament métallique présentant un diamètre typiquement inférieur à 50 µm, par exemple 10 µm. Dans un mode de réalisation, chaque élément de rigidification filaire est constitué d'un assemblage de plusieurs monofilaments métalliques. Dans un autre mode de réalisation, chaque élément de rigidification filaire est constitué d'un monofilament métallique.

Avantageusement, dans une variante permettant de fabriquer le pneumatique en mettant en oeuvre un procédé relativement simple, le ou chaque élément de rigidification filaire s'étend continûment dans la cavité torique depuis le flanc ou le bourrelet jusqu'au sommet selon une direction principale formant, avec la direction circonférentielle du pneumatique, un angle allant, en valeur absolue, de 85° à 90. Dans une autre variante permettant de fabriquer le pneumatique en mettant en oeuvre un procédé plus complexe mais permettant d'augmenter la rigidité circonférentielle, le ou chaque élément de rigidification filaire s'étend continûment dans la cavité torique depuis le flanc ou le bourrelet jusqu'au sommet selon une direction principale formant, avec la direction circonférentielle du pneumatique, un angle allant, en valeur absolue, de 45° à 75° comme cela est notamment expliqué dans WO2020128225.

Dans un mode de réalisation, la ou chaque structure de renfort radialement intérieure et/ou la ou chaque structure de renfort radialement extérieure comprend au moins un élément de renfort filaire s'étendant selon une direction principale formant avec la direction circonférentielle du pneumatique un angle inférieur ou égal à 10°, de préférence inférieur ou égal à 5° et plus préférentiellement sensiblement nul.

De façon optionnelle, le pneumatique présentant une forme sensiblement torique autour d'un axe de révolution, l'élément de renfort filaire de la structure de renfort radialement intérieure est enroulé circonférentiellement sur au plus deux tours complets, de préférence sur au plus un tour complet autour de l'axe de révolution.

On pourra ainsi envisager que l'élément de renfort filaire de la structure de renfort radialement intérieure soit un anneau dépourvu d'extrémités libres soit parce qu'elles sont aboutées, par exemple par un manchon, soit parce que l'anneau est monolithique. On pourra également envisager que l'élément de renfort filaire de la structure de renfort radialement intérieure présente deux extrémités libres.

De préférence, l'élément de renfort filaire de la structure de révolution radialement intérieure est métallique. Cela permet, avantageusement, dans certains modes de réalisation, d'utiliser un élément de renfort filaire métallique identique à celui utilisé pour fabriquer l'élément de renforcement circonférentiel.

Dans un mode de réalisation, le pneumatique présentant une forme sensiblement torique autour d'un axe de révolution, l'élément de renfort filaire de la ou de chaque structure de renfort radialement extérieure est enroulé circonférentiellement sur au moins deux tours complets autour de l'axe de révolution et sur au plus dix tours complets autour de l'axe de révolution.

De façon analogue à l'élément de renfort filaire de la structure de renfort radialement intérieure, on pourra ainsi envisager que l'élément de renfort filaire de la structure de renfort radialement extérieure soit un anneau dépourvu d'extrémités libres soit parce qu'elles sont aboutées, par exemple par un manchon, soit parce que l'anneau est monolithique. On pourra également envisager que l'élément de renfort filaire de la structure de renfort radialement extérieure présente deux extrémités libres.

De préférence, l'élément de renfort filaire de la structure de révolution radialement extérieure est textile. Cela permet d'éviter une rigidification localisée du sommet. Ainsi, on conserve une mise à plat correcte du pneumatique, par rapport au cas où l'élément de renfort filaire de la structure de révolution radialement extérieure est métallique. On privilégiera les éléments de renfort filaires textiles présentant une contraction thermique relativement faible.

Optionnellement, le ou chaque élément de rigidification est enroulé au moins en partie autour du ou de chaque élément de renfort filaire.

En étant enroulé au moins en partie autour de l'élément de renfort filaire, la direction selon laquelle s'étend l'élément de rigidification dans la cavité torique est non-colinéaire avec la direction selon laquelle s'étend l'élément de rigidification dans le flanc ou le bourrelet et dans le sommet.

Dans un quatrième mode de réalisation, la structure de rigidification comprend au moins un élément de rigidification à ancrage axialement intérieur et au moins un élément de rigidification à ancrage axialement extérieur, chaque élément de rigidification à ancrage axialement intérieur et extérieur s'étendant continûment dans la cavité torique depuis au moins un des flancs et/ou un des bourrelets jusqu'au moins le sommet,
le ou chaque élément de rigidification à ancrage axialement intérieur est ancré dans ou autour de:
   - une structure de renfort radialement intérieure d'ancrage du ou de chaque élément de rigidification à ancrage axialement intérieur agencée dans un des flancs et/ou un des bourrelets, et
   - au moins une structure de renfort radialement extérieure d'ancrage du ou de chaque élément de rigidification à ancrage axialement intérieur agencée dans le sommet,
le ou chaque élément de rigidification à ancrage axialement intérieur comprend une portion s'étendant dans la cavité torique entre :
   - un point d'ancrage radialement intérieur auquel le ou chaque élément de rigidification à ancrage axialement intérieur passe au travers de la surface interne pour aller s'ancrer dans ou autour de la structure de renfort radialement intérieure d'ancrage du ou de chaque élément de rigidification à ancrage axialement intérieur,
   - un point d'ancrage radialement extérieur auquel le ou chaque élément de rigidification à ancrage axialement intérieur passe au travers de la surface interne pour aller s'ancrer dans ou autour de la ou plusieurs des structure(s) de renfort radialement extérieure(s) d'ancrage du ou de chaque élément de rigidification à ancrage axialement intérieur,
le ou chaque élément de rigidification à ancrage axialement extérieur est ancré dans ou autour de:
   - une structure de renfort radialement intérieure d'ancrage du ou de chaque élément de rigidification à ancrage axialement extérieur agencée dans le même flanc et/ou le même bourrelet que la structure de renfort radialement intérieure autour ou dans laquelle est ancré le ou chaque élément de rigidification à ancrage axialement intérieur, et
   - au moins une structure de renfort radialement extérieure d'ancrage du ou de chaque élément de rigidification à ancrage axialement extérieur agencée dans le sommet,
le ou chaque élément de rigidification à ancrage axialement extérieur comprend une portion s'étendant dans la cavité torique entre :
   - un point d'ancrage radialement intérieur auquel le ou chaque élément de rigidification à ancrage axialement extérieur passe au travers de la surface interne pour aller s'ancrer dans ou autour de la structure de renfort radialement intérieure d'ancrage du ou de chaque élément de rigidification à ancrage axialement extérieur,
   - un point d'ancrage radialement extérieur auquel le ou chaque élément de rigidification à ancrage axialement extérieur passe au travers de la surface interne pour aller s'ancrer dans ou autour de la ou plusieurs des structure(s) de renfort radialement extérieure(s) d'ancrage du ou de chaque élément de rigidification à ancrage axialement extérieur,
le point d'ancrage radialement extérieur du ou de chaque élément de rigidification à ancrage axialement intérieur est agencé au droit d'une des nervures, et/ou
le point d'ancrage radialement extérieur du ou de chaque élément de rigidification à ancrage axialement extérieur est agencé au droit d'une des nervures.

On parle d'élément de rigidification à ancrage axialement intérieur et extérieur en raison du décalage axial du ou des points d'ancrage radialement extérieur(s) de chaque élément de rigidification dans le sommet. Ainsi, on dit d'un élément de rigidification qu'il est à ancrage axialement extérieur car son point d'ancrage dans le sommet est axialement plus éloigné du plan médian du pneumatique qu'un autre élément de rigidification à ancrage axialement intérieur dont le point d'ancrage dans le sommet est axialement plus proche du plan médian du pneumatique.

De préférence, le point d'ancrage radialement extérieur du ou de chaque élément de rigidification à ancrage axialement intérieur et extérieur est agencé au droit d'une des nervures. Néanmoins, on pourra envisager dans une variante que seulement le point d'ancrage radialement extérieur du ou de chaque élément de rigidification à ancrage axialement intérieur est agencé au droit d'une des nervures alors que le point d'ancrage radialement extérieur du ou de chaque élément de rigidification à ancrage axialement extérieur est agencé au droit d'une des découpures circonférentielles principales. A l'inverse, on pourra imaginer une variante dans laquelle seulement le point d'ancrage radialement extérieur du ou de chaque élément de rigidification à ancrage axialement extérieur est agencé au droit d'une des nervures alors que le point d'ancrage radialement extérieur du ou de chaque élément de rigidification à ancrage axialement intérieur est agencé au droit d'une des découpures circonférentielles principales.

De préférence, les points d'ancrage radialement extérieurs sont agencés du même côté du plan médian du pneumatique.

Dans une variante du quatrième mode de réalisation, le point d'ancrage radialement intérieur du ou de chaque élément de rigidification à ancrage axialement intérieur et le point d'ancrage radialement intérieur du ou de chaque élément de rigidification à ancrage axialement extérieur sont radialement et axialement alignés sur une même ligne circonférentielle. Dans une autre variante du quatrième mode de réalisation, le point d'ancrage radialement intérieur du ou de chaque élément de rigidification à ancrage axialement intérieur et le point d'ancrage radialement intérieur du ou de chaque élément de rigidification à ancrage axialement extérieur sont radialement décalés l'un par rapport à l'autre, comme cela est envisagé dans le cinquième mode de réalisation décrit ci-dessous.

Dans une variante du quatrième mode de réalisation, chaque point d'ancrage radialement intérieur et extérieur du ou de chaque élément de rigidification à ancrage axialement intérieur est dans un même plan de coupe méridien que chaque point d'ancrage radialement intérieur et extérieur du ou de chaque élément de rigidification à ancrage axialement extérieur. Dans une autre variante du quatrième mode de réalisation, chaque point d'ancrage radialement intérieur et extérieur du ou de chaque élément de rigidification à ancrage axialement intérieur est dans un plan de coupe méridien différent que chaque point d'ancrage radialement intérieur et extérieur du ou de chaque élément de rigidification à ancrage axialement extérieur.

Dans une configuration du quatrième mode de réalisation, le ou chaque élément de rigidification à ancrage axialement intérieur est ancré dans ou autour de:
- une première structure de renfort radialement intérieure d'ancrage du ou de chaque élément de rigidification à ancrage axialement intérieur agencée dans un premier flanc et/ou un premier bourrelet, et
- au moins une structure de renfort radialement extérieure d'ancrage du ou de chaque élément de rigidification à ancrage axialement intérieur agencée dans le sommet,
- une deuxième structure de renfort radialement intérieure d'ancrage du ou de chaque élément de rigidification à ancrage axialement intérieur agencée dans un deuxième flanc et/ou un deuxième bourrelet situé de l'autre côté que le premier flanc et/ou le premier bourrelet par rapport au plan médian du pneumatique,

de sorte que le ou chaque élément de rigidification à ancrage axialement intérieur s'étend continûment depuis le premier flanc et/ou le premier bourrelet jusqu'au deuxième flanc et/ou deuxième bourrelet en passant dans le sommet,
le ou chaque élément de rigidification à ancrage axialement intérieur comprend :
   - une première portion s'étendant dans la cavité torique entre :
   - un premier point d'ancrage radialement intérieur auquel le ou chaque élément de rigidification à ancrage axialement intérieur passe au travers de la surface interne pour aller s'ancrer dans ou autour de la première structure de renfort radialement intérieure d'ancrage du ou de chaque élément de rigidification à ancrage axialement intérieur,
   - un premier point d'ancrage radialement extérieur auquel le ou chaque élément de rigidification à ancrage axialement intérieur passe au travers de la surface interne pour aller s'ancrer dans ou autour de la ou plusieurs des structure(s) de renfort radialement extérieure(s) d'ancrage du ou de chaque élément de rigidification à ancrage axialement intérieur,
   - une deuxième portion s'étendant dans la cavité torique entre :
   - un deuxième point d'ancrage radialement intérieur auquel le ou chaque élément de rigidification à ancrage axialement intérieur passe au travers de la surface interne pour aller s'ancrer dans ou autour de la deuxième structure de renfort radialement intérieure d'ancrage du ou de chaque élément de rigidification à ancrage axialement intérieur,
   - un deuxième point d'ancrage radialement extérieur auquel le ou chaque élément de rigidification à ancrage axialement intérieur passe au travers de la surface interne pour aller s'ancrer dans ou autour de la ou plusieurs des structure(s) de renfort radialement extérieure(s) d'ancrage du ou de chaque élément de rigidification à ancrage axialement intérieur,
le ou chaque élément de rigidification à ancrage axialement extérieur est ancré dans ou autour de:
   - une première structure de renfort radialement intérieure d'ancrage du ou de chaque élément de rigidification à ancrage axialement extérieur agencée dans le premier flanc et/ou le premier bourrelet, et
   - au moins une structure de renfort radialement extérieure d'ancrage du ou de chaque élément de rigidification à ancrage axialement extérieur agencée dans le sommet,
   - une deuxième structure de renfort radialement intérieure d'ancrage du ou de chaque élément de rigidification à ancrage axialement extérieur agencée dans le deuxième flanc et/ou le deuxième bourrelet situé de l'autre côté que le premier flanc et/ou le premier bourrelet par rapport au plan médian du pneumatique,
de sorte que le ou chaque élément de rigidification à ancrage axialement extérieur s'étend continûment depuis le premier flanc et/ou le premier bourrelet jusqu'au deuxième flanc et/ou deuxième bourrelet en passant dans le sommet,
le ou chaque élément de rigidification à ancrage axialement extérieur comprend :
   - une première portion s'étendant dans la cavité torique entre :
   - un premier point d'ancrage radialement intérieur auquel le ou chaque élément de rigidification à ancrage axialement extérieur passe au travers de la surface interne pour aller s'ancrer dans ou autour de la première structure de renfort radialement intérieure d'ancrage du ou de chaque élément de rigidification à ancrage axialement extérieur,
   - un premier point d'ancrage radialement extérieur auquel le ou chaque élément de rigidification à ancrage axialement extérieur passe au travers de la surface interne pour aller s'ancrer dans ou autour de la ou plusieurs des structure(s) de renfort radialement extérieure(s) d'ancrage du ou de chaque élément de rigidification à ancrage axialement extérieur,
   - une deuxième portion s'étendant dans la cavité torique entre :
   - un deuxième point d'ancrage radialement intérieur auquel le ou chaque élément de rigidification à ancrage axialement extérieur passe au travers de la surface interne pour aller s'ancrer dans ou autour de la deuxième structure de renfort radialement intérieure d'ancrage du ou de chaque élément de rigidification à ancrage axialement extérieur,
   - un deuxième point d'ancrage radialement extérieur auquel le ou chaque élément de rigidification à ancrage axialement extérieur passe au travers de la surface interne pour aller s'ancrer dans ou autour de la ou plusieurs des structure(s) de renfort radialement extérieure(s) d'ancrage du ou de chaque élément de rigidification à ancrage axialement extérieur,
chaque premier et deuxième point d'ancrage radialement extérieur du ou de chaque élément de rigidification à ancrage axialement intérieur est agencé au droit d'une des nervures, et/ou chaque premier et deuxième point d'ancrage radialement extérieur du ou de chaque élément de rigidification à ancrage axialement extérieur est agencé au droit d'une des nervures.

De préférence, chaque premier et deuxième point d'ancrage radialement extérieur du ou de chaque élément de rigidification à ancrage axialement intérieur et extérieur est agencé au droit d'une des nervures. Néanmoins, on pourra envisager dans une variante que seulement chaque premier et deuxième point d'ancrage radialement extérieur du ou de chaque élément de rigidification à ancrage axialement intérieur est agencé au droit d'une des nervures alors que chaque premier et deuxième point d'ancrage radialement extérieur du ou de chaque élément de rigidification à ancrage axialement extérieur soit agencé au droit d'une des découpures circonférentielles principales. A l'inverse, on pourra imaginer une variante dans laquelle seulement chaque premier et deuxième point d'ancrage radialement extérieur du ou de chaque élément de rigidification à ancrage axialement extérieur est agencé au droit d'une des nervures alors que chaque premier et deuxième point d'ancrage radialement extérieur du ou de chaque élément de rigidification à ancrage axialement intérieur soit agencé au droit d'une des découpures circonférentielles principales.

Quelle que soit la configuration du quatrième mode de réalisation, dans une variante, chaque premier et deuxième point d'ancrage radialement intérieur du ou de chaque élément de rigidification à ancrage axialement intérieur et chaque premier et deuxième premier point d'ancrage radialement intérieur du ou de chaque élément de rigidification à ancrage axialement extérieur sont respectivement radialement alignés sur une même ligne circonférentielle. Dans une autre variante, chaque premier et deuxième premier point d'ancrage radialement intérieur du ou de chaque élément de rigidification à ancrage axialement intérieur et chaque premier et deuxième premier point d'ancrage radialement intérieur du ou de chaque élément de rigidification à ancrage axialement extérieur sont respectivement radialement décalés l'un par rapport à l'autre, comme cela est envisagé dans le cinquième mode de réalisation ci-dessous.

Quelle que soit la configuration du quatrième mode de réalisation, dans une variante, chaque premier et deuxième point d'ancrage radialement intérieur et extérieur du ou de chaque élément de rigidification à ancrage axialement intérieur est dans un même plan de coupe méridien que chaque premier et deuxième point d'ancrage radialement intérieur et extérieur du ou de chaque élément de rigidification à ancrage axialement extérieur. Dans une autre variante, chaque premier et deuxième point d'ancrage radialement intérieur et extérieur du ou de chaque élément de rigidification à ancrage axialement intérieur est dans un plan de coupe méridien différent que chaque premier et deuxième point d'ancrage radialement intérieur et extérieur du ou de chaque élément de rigidification à ancrage axialement extérieur.

De façon très avantageuse, chaque première et deuxième structure de renfort radialement intérieure d'ancrage du ou de chaque élément de rigidification à ancrage axialement intérieur est respectivement chaque première et deuxième structure de renfort radialement intérieure d'ancrage du ou de chaque élément de rigidification à ancrage axialement extérieur. En variante, chaque première et deuxième structure de renfort radialement intérieure d'ancrage du ou de chaque élément de rigidification à ancrage axialement intérieur est distincte de chaque première et deuxième structure de renfort radialement intérieure d'ancrage du ou de chaque élément de rigidification à ancrage axialement extérieur.

De façon très avantageuse, la ou les structure(s) de renfort radialement extérieure(s) d'ancrage du ou de chaque élément de rigidification à ancrage axialement intérieur est la ou sont les structure(s) de renfort radialement extérieure(s) d'ancrage du ou de chaque élément de rigidification à ancrage axialement extérieur. En variante, la ou les structure(s) de renfort radialement extérieure(s) d'ancrage du ou de chaque élément de rigidification à ancrage axialement intérieur de la ou des structure(s) de renfort radialement extérieure(s) d'ancrage du ou de chaque élément de rigidification à ancrage axialement extérieur.

Dans un cinquième mode de réalisation, la structure de rigidification comprend au moins un élément de rigidification à ancrage radialement intérieur et au moins un élément de rigidification à ancrage radialement extérieur, chaque élément de rigidification à ancrage radialement intérieur et extérieur s'étendant continûment dans la cavité torique depuis au moins un des flancs et/ou un des bourrelets jusqu'au moins le sommet,
le ou chaque élément de rigidification à ancrage radialement intérieur est ancré dans ou autour de:
   - une structure de renfort radialement intérieure d'ancrage du ou de chaque élément de rigidification à ancrage radialement intérieur agencée dans un des flancs et/ou un des bourrelets, et
   - au moins une structure de renfort radialement extérieure d'ancrage du ou de chaque élément de rigidification à ancrage radialement intérieur agencée dans le sommet,
le ou chaque élément de rigidification à ancrage radialement intérieur comprend une portion s'étendant dans la cavité torique entre :
   - un point d'ancrage radialement intérieur auquel le ou chaque élément de rigidification à ancrage radialement intérieur passe au travers de la surface interne pour aller s'ancrer dans ou autour de la structure de renfort radialement intérieure d'ancrage du ou de chaque élément de rigidification à ancrage radialement intérieur,
   - un point d'ancrage radialement extérieur auquel le ou chaque élément de rigidification à ancrage radialement intérieur passe au travers de la surface interne pour aller s'ancrer dans ou autour de la ou plusieurs des structure(s) de renfort radialement extérieure(s) d'ancrage du ou de chaque élément de rigidification à ancrage radialement intérieur,
le ou chaque élément de rigidification à ancrage radialement extérieur est ancré dans ou autour de:
   - une structure de renfort radialement intérieure d'ancrage du ou de chaque élément de rigidification à ancrage radialement extérieur agencée dans le même flanc et/ou le même bourrelet que la structure de renfort radialement intérieure autour ou dans laquelle est ancré le ou chaque élément de rigidification à ancrage radialement intérieur, et
   - au moins une structure de renfort radialement extérieure d'ancrage du ou de chaque élément de rigidification à ancrage radialement extérieur agencée dans le sommet,
le ou chaque élément de rigidification à ancrage radialement extérieur comprend une portion s'étendant dans la cavité torique entre :
   - un point d'ancrage radialement intérieur auquel le ou chaque élément de rigidification à ancrage radialement extérieur passe au travers de la surface interne pour aller s'ancrer dans ou autour de la structure de renfort radialement intérieure d'ancrage du ou de chaque élément de rigidification à ancrage radialement extérieur,
   - un point d'ancrage radialement extérieur auquel le ou chaque élément de rigidification à ancrage radialement extérieur passe au travers de la surface interne pour aller s'ancrer dans ou autour de la ou plusieurs des structure(s) de renfort radialement extérieure(s) d'ancrage du ou de chaque élément de rigidification à ancrage radialement extérieur,
le point d'ancrage radialement extérieur du ou de chaque élément de rigidification à ancrage radialement intérieur est agencé au droit d'une des nervures, et/ou
le point d'ancrage radialement extérieur du ou de chaque élément de rigidification à ancrage radialement extérieur est agencé au droit d'une des nervures.

On parle d'élément de rigidification à ancrage radialement intérieur et extérieur en raison du décalage radial du ou des points d'ancrage radialement intérieur(s) de chaque élément de rigidification dans chaque flanc et/ou chaque bourrelet. Ainsi, on dit d'un élément de rigidification qu'il est à ancrage radialement extérieur car son point d'ancrage dans chaque flanc et/ou chaque bourrelet est radialement plus éloigné de l'axe de rotation du pneumatique qu'un autre élément de rigidification à ancrage radialement intérieur dont le point d'ancrage dans le sommet est radialement plus proche de l'axe de rotation du pneumatique.

De préférence, le point d'ancrage radialement extérieur du ou de chaque élément de rigidification à ancrage radialement intérieur et extérieur est agencé au droit d'une des nervures. Néanmoins, on pourra envisager dans une variante que seulement le point d'ancrage radialement extérieur du ou de chaque élément de rigidification à ancrage radialement intérieur est agencé au droit d'une des nervures alors que le point d'ancrage radialement extérieur du ou de chaque élément de rigidification à ancrage radialement extérieur est agencé au droit d'une des découpures circonférentielles principales. A l'inverse, on pourra imaginer une variante dans laquelle seulement le point d'ancrage radialement extérieur du ou de chaque élément de rigidification à ancrage radialement extérieur est agencé au droit d'une des nervures alors que le point d'ancrage radialement extérieur du ou de chaque élément de rigidification à ancrage radialement intérieur est agencé au droit d'une des découpures circonférentielles principales.

De préférence, les points d'ancrage radialement extérieurs sont agencés du même côté du plan médian du pneumatique.

Dans une variante du cinquième mode de réalisation, le point d'ancrage radialement extérieur du ou de chaque élément de rigidification à ancrage radialement intérieur et le point d'ancrage radialement extérieur du ou de chaque élément de rigidification à ancrage radialement extérieur sont radialement et axialement alignés sur une même ligne circonférentielle. Dans une autre variante du cinquième mode de réalisation, le point d'ancrage radialement extérieur du ou de chaque élément de rigidification à ancrage radialement intérieur et le point d'ancrage radialement extérieur du ou de chaque élément de rigidification à ancrage radialement extérieur sont axialement décalés l'un par rapport à l'autre, comme cela est envisagé dans le quatrième mode de réalisation décrit ci-dessus.

Dans une variante du cinquième mode de réalisation, chaque point d'ancrage radialement intérieur et extérieur du ou de chaque élément de rigidification à ancrage radialement intérieur est dans un même plan de coupe méridien que chaque point d'ancrage radialement intérieur et extérieur du ou de chaque élément de rigidification à ancrage radialement extérieur. Dans une autre variante du cinquième mode de réalisation, chaque point d'ancrage radialement intérieur et extérieur du ou de chaque élément de rigidification à ancrage radialement intérieur est dans un plan de coupe méridien différent que chaque premier d'ancrage radialement intérieur et extérieur du ou de chaque élément de rigidification à ancrage radialement extérieur.

Dans une configuration du cinquième mode de réalisation, le ou chaque élément de rigidification à ancrage radialement intérieur est ancré dans ou autour de:
- une première structure de renfort radialement intérieure d'ancrage du ou de chaque élément de rigidification à ancrage radialement intérieur agencée dans un premier flanc et/ou un premier bourrelet, et
- au moins une structure de renfort radialement extérieure d'ancrage du ou de chaque élément de rigidification à ancrage radialement intérieur agencée dans le sommet,
- une deuxième structure de renfort radialement intérieure d'ancrage du ou de chaque élément de rigidification à ancrage radialement intérieur agencée dans un deuxième flanc et/ou un deuxième bourrelet situé de l'autre côté que le premier flanc et/ou le premier bourrelet par rapport au plan médian du pneumatique,

de sorte que le ou chaque élément de rigidification à ancrage radialement intérieur s'étend continûment depuis le premier flanc et/ou le premier bourrelet jusqu'au deuxième flanc et/ou deuxième bourrelet en passant dans le sommet,
le ou chaque élément de rigidification à ancrage radialement intérieur comprend :
   - une première portion s'étendant dans la cavité torique entre :
   - un premier point d'ancrage radialement intérieur auquel le ou chaque élément de rigidification à ancrage radialement intérieur passe au travers de la surface interne pour aller s'ancrer dans ou autour de la première structure de renfort radialement intérieure d'ancrage du ou de chaque élément de rigidification à ancrage radialement intérieur,
   - un premier point d'ancrage radialement extérieur auquel le ou chaque élément de rigidification à ancrage radialement intérieur passe au travers de la surface interne pour aller s'ancrer dans ou autour de la ou plusieurs des structure(s) de renfort radialement extérieure(s) d'ancrage du ou de chaque élément de rigidification à ancrage radialement intérieur,
   - une deuxième portion s'étendant dans la cavité torique entre :
   - un deuxième point d'ancrage radialement intérieur auquel le ou chaque élément de rigidification à ancrage radialement intérieur passe au travers de la surface interne pour aller s'ancrer dans ou autour de la deuxième structure de renfort radialement intérieure d'ancrage du ou de chaque élément de rigidification à ancrage radialement intérieur,
   - un deuxième point d'ancrage radialement extérieur auquel le ou chaque élément de rigidification à ancrage radialement intérieur passe au travers de la surface interne pour aller s'ancrer dans ou autour de la ou plusieurs des structure(s) de renfort radialement extérieure(s) d'ancrage du ou de chaque élément de rigidification à ancrage radialement intérieur,
le ou chaque élément de rigidification à ancrage radialement extérieur est ancré dans ou autour de:
   - une première structure de renfort radialement intérieure d'ancrage du ou de chaque élément de rigidification à ancrage radialement extérieur agencée dans le premier flanc et/ou le premier bourrelet, et
   - au moins une structure de renfort radialement extérieure d'ancrage du ou de chaque élément de rigidification à ancrage radialement extérieur agencée dans le sommet,
   - une deuxième structure de renfort radialement intérieure d'ancrage du ou de chaque élément de rigidification à ancrage radialement extérieur agencée dans le deuxième flanc et/ou le deuxième bourrelet situé de l'autre côté que le premier flanc et/ou le premier bourrelet par rapport au plan médian du pneumatique,
de sorte que le ou chaque élément de rigidification à ancrage radialement extérieur s'étend continûment depuis le premier flanc et/ou le premier bourrelet jusqu'au deuxième flanc et/ou deuxième bourrelet en passant dans le sommet,
le ou chaque élément de rigidification à ancrage radialement extérieur comprend :
   - une première portion s'étendant dans la cavité torique entre :
   - un premier point d'ancrage radialement intérieur auquel le ou chaque élément de rigidification à ancrage radialement extérieur passe au travers de la surface interne pour aller s'ancrer dans ou autour de la première structure de renfort radialement intérieure d'ancrage du ou de chaque élément de rigidification à ancrage radialement extérieur,
   - un premier point d'ancrage radialement extérieur auquel le ou chaque élément de rigidification à ancrage radialement extérieur passe au travers de la surface interne pour aller s'ancrer dans ou autour de la ou plusieurs des structure(s) de renfort radialement extérieure(s) d'ancrage du ou de chaque élément de rigidification à ancrage radialement extérieur,
   - une deuxième portion s'étendant dans la cavité torique entre :
   - un deuxième point d'ancrage radialement intérieur auquel le ou chaque élément de rigidification à ancrage radialement extérieur passe au travers de la surface interne pour aller s'ancrer dans ou autour de la deuxième structure de renfort radialement intérieure d'ancrage du ou de chaque élément de rigidification à ancrage radialement extérieur,
   - un deuxième point d'ancrage radialement extérieur auquel le ou chaque élément de rigidification à ancrage radialement extérieur passe au travers de la surface interne pour aller s'ancrer dans ou autour de la ou plusieurs des structure(s) de renfort radialement extérieure(s) d'ancrage du ou de chaque élément de rigidification à ancrage radialement extérieur,
chaque premier et deuxième point d'ancrage radialement extérieur du ou de chaque élément de rigidification à ancrage radialement intérieur est agencé au droit d'une des nervures, et/ou chaque premier et deuxième point d'ancrage radialement extérieur du ou de chaque élément de rigidification à ancrage radialement extérieur est agencé au droit d'une des nervures.

De préférence, chaque premier et deuxième point d'ancrage radialement extérieur du ou de chaque élément de rigidification à ancrage radialement intérieur et extérieur est agencé au droit d'une des nervures. Néanmoins, on pourra envisager dans une variante que seulement chaque premier et deuxième point d'ancrage radialement extérieur du ou de chaque élément de rigidification à ancrage radialement intérieur est agencé au droit d'une des nervures alors que chaque premier et deuxième point d'ancrage radialement extérieur du ou de chaque élément de rigidification à ancrage radialement extérieur est agencé au droit d'une des découpures circonférentielles principales. A l'inverse, on pourra imaginer une variante dans laquelle seulement chaque premier et deuxième point d'ancrage radialement extérieur du ou de chaque élément de rigidification à ancrage radialement extérieur est agencé au droit d'une des nervures alors que chaque premier et deuxième point d'ancrage radialement extérieur du ou de chaque élément de rigidification à ancrage radialement intérieur est agencé au droit d'une des découpures circonférentielles principales.

Quelle que soit la configuration du cinquième mode de réalisation, dans une variante, chaque premier et deuxième point d'ancrage radialement extérieur du ou de chaque élément de rigidification à ancrage radialement intérieur et chaque premier et deuxième premier point d'ancrage radialement extérieur du ou de chaque élément de rigidification à ancrage radialement extérieur sont respectivement axialement alignés sur une même ligne circonférentielle. Dans une autre variante, chaque premier et deuxième premier point d'ancrage radialement extérieur du ou de chaque élément de rigidification à ancrage radialement intérieur et chaque premier et deuxième premier point d'ancrage radialement extérieur du ou de chaque élément de rigidification à ancrage radialement extérieur sont respectivement axialement décalés l'un par rapport à l'autre, comme cela est envisagé dans le quatrième mode de réalisation décrit ci-dessus.

Quelle que soit la configuration du cinquième mode de réalisation, dans une variante, chaque premier et deuxième point d'ancrage radialement intérieur et extérieur du ou de chaque élément de rigidification à ancrage radialement intérieur est dans un même plan de coupe méridien que chaque premier et deuxième point d'ancrage radialement intérieur et extérieur du ou de chaque élément de rigidification à ancrage radialement extérieur. Dans une autre variante, chaque premier et deuxième point d'ancrage radialement intérieur et extérieur du ou de chaque élément de rigidification à ancrage radialement intérieur est dans un plan de coupe méridien différent que chaque premier et deuxième d'ancrage radialement intérieur et extérieur du ou de chaque élément de rigidification à ancrage radialement extérieur.

De façon très avantageuse, chaque première et deuxième structure de renfort radialement intérieure d'ancrage du ou de chaque élément de rigidification à ancrage radialement intérieur est chaque première et deuxième structure de renfort radialement intérieure d'ancrage du ou de chaque élément de rigidification à ancrage radialement extérieur. En variante, chaque première et deuxième structure de renfort radialement intérieure d'ancrage du ou de chaque élément de rigidification à ancrage radialement intérieur est distincte de chaque première et deuxième structure de renfort radialement intérieure d'ancrage du ou de chaque élément de rigidification à ancrage radialement extérieur.

De façon très avantageuse, la ou les structure(s) de renfort radialement extérieure(s) d'ancrage du ou de chaque élément de rigidification à ancrage radialement intérieur est la ou sont les structure(s) de renfort radialement extérieure(s) d'ancrage du ou de chaque élément de rigidification à ancrage radialement extérieur. En variante, la ou les structure(s) de renfort radialement extérieure(s) d'ancrage du ou de chaque élément de rigidification à ancrage radialement intérieur de la ou des structure(s) de renfort radialement extérieure(s) d'ancrage du ou de chaque élément de rigidification à ancrage radialement extérieur.

On notera que l'on pourra combiner les quatrième et cinquième modes de réalisation de façon à différencier les ancrage dans le sommet et chaque flanc et/ou chaque bourrelet et avoir des éléments de rigidification radialement et axialement intérieurs ou bien des éléments de rigidification radialement et axialement extérieurs ou bien des éléments de rigidification radialement intérieurs et axialement extérieurs ou bien encore des éléments de rigidification radialement extérieurs et axialement intérieurs.

Dans une autre variante de la ou chaque structure de renfort radialement intérieure et/ou la ou chaque structure de renfort radialement extérieure, la ou chaque structure de renfort radialement intérieure et/ou la ou chaque structure de renfort radialement extérieure comprend un tissu, un tricot ou un non-tissé, de préférence un tissu ou un tricot.

De préférence, le ou chaque élément de rigidification passe au travers du tissu, du tricot ou du non-tissé, de préférence au travers du tissu ou du tricot de la ou chaque structure de renfort radialement intérieure et/ou de la ou chaque structure de renfort radialement extérieure.

Dans encore une autre variante de la ou chaque structure de renfort radialement intérieure, le pneumatique comprenant une armature de carcasse ancrée dans chaque bourrelet et s'étendant dans chaque flanc, la ou chaque structure de renfort radialement intérieure comprend une portion de l'armature de carcasse s'étendant dans radialement le flanc et/ou le bourrelet.

Dans encore une autre variante de la ou chaque structure de renfort radialement extérieure, le pneumatique comprenant une armature de carcasse s'étendant axialement dans le sommet, la ou chaque structure de renfort radialement extérieure comprend une portion de l'armature de carcasse s'étendant axialement dans le sommet.

Ainsi, dans un exemple de réalisation, l'armature de carcasse comprenant des éléments de renfort filaires de carcasse, le ou chaque élément de rigidification est enroulé au moins en partie autour d'un ou de plusieurs des éléments de renfort filaires de carcasse de la portion de l'armature de carcasse s'étendant radialement dans le flanc et/ou le bourrelet et/ou de la portion de l'armature de carcasse s'étendant axialement dans le sommet.

Suite à la description générique qui vient d'être faite, l'invention sera mieux comprise à la lecture de la description détaillée qui va suivre, donnée uniquement à titre d'exemple non limitatif et faite en se référant aux dessins dans lesquels:
- la figure 1 rassemblant les figures 1A, 1B, 1C, illustre un pneumatique selon un premier mode de réalisation de l'invention, la figure 1Aest une vue, dans un plan de coupe méridien parallèle à l'axe de rotation du pneumatique, les figures 1B et 1C étant des vues de l'intérieur du pneumatique de la figure 1A selon différentes directions,
- la figure 2 est une vue en arraché du pneumatique de la figure 1 illustrant l'agencement des éléments de renforcement filaires dans le sommet,
- la figure 3 est un schéma illustrant l'agencement de la structure de rigidification du pneumatique de la figure 1,
- les figures 4 et 5 sont des vues de détails respectivement des zones IV et V de la figure 1A,
- les figures 6 à 10 sont des vues analogues à celle de la figure 1A de pneumatiques selon respectivement des deuxième, troisième, quatrième, cinquième et sixième modes de réalisation,
- les figures 11 à 13 sont des vues analogues aux figures 3 à 5 du pneumatique de la figure 10 selon le sixième mode de réalisation, et
- les figures 14 et 15 sont des vues analogues à celle de la figure 1Ade pneumatiques selon des septième et huitième modes de réalisation,
- les figures 16 et 17 sont des vues dans un plan de coupe méridien parallèle à l'axe de rotation du pneumatique, respectivement du pneumatique de la figure 1A et d'un pneumatique témoin non conforme à l'invention soumis à un effort latéral F,
- les figures 18 et 19 sont des vues de l'aire de contact respectivement du pneumatique de la figure 1A et du pneumatique témoin non conforme à l'invention soumis à l'effort latéral F, et
- la figure 20 rassemblant les figures 20A, 20B, la figure 21 rassemblant les figures 21A, 21B, la figure 22 et la figure 23 rassemblant les figures 23A et 23F illustrent un outillage et un procédé permettant de fabriquer le pneumatique selon le premier mode de réalisation.

Dans les figures relatives au pneumatique, on a représenté un repère X, Y, Z correspondant aux directions habituelles respectivement axiale (Y), radiale (Z) et circonférentielle (X) d'un pneumatique.

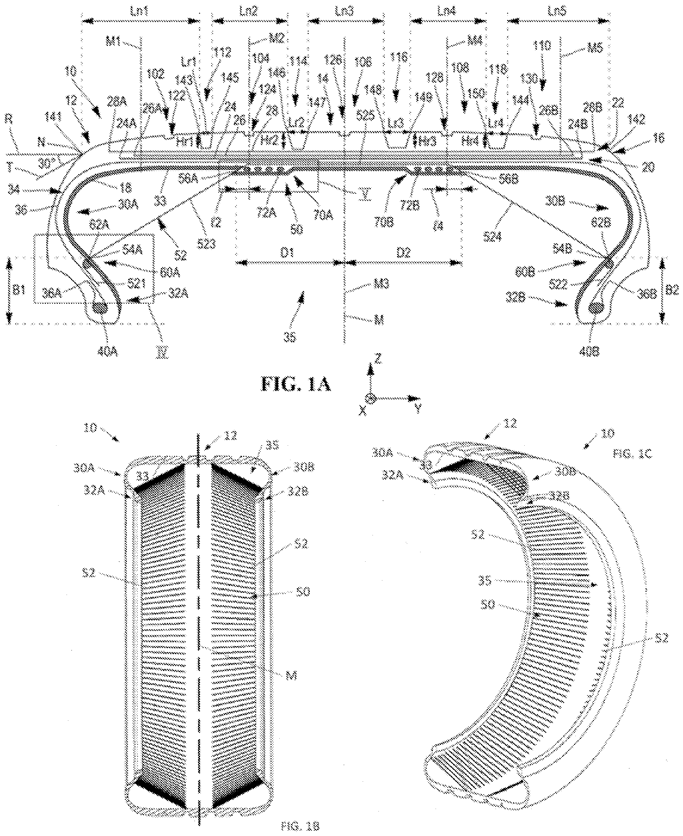

On a représenté sur les figures 1A, 1B, 1C un pneumatique, conforme à l'invention et désigné par la référence générale 10. Le pneumatique 10 présente une forme sensiblement torique autour d'un axe de révolution sensiblement parallèle à la direction axiale Y. Le pneumatique 10 est destiné à un véhicule de tourisme et présente une dimension 275/35ZR19. Sur les différentes figures, le pneumatique 10 est représenté à l'état neuf, c'est-à-dire n'ayant pas encore roulé.

Le pneumatique 10 comprend un sommet 12 comprenant une bande de roulement 14 destinée à entrer en contact avec un sol lors du roulage et une armature de sommet 16 s'étendant dans le sommet 12 selon la direction circonférentielle X. Le pneumatique 10 comprend également une couche d'étanchéité 18 à un gaz de gonflage.

La bande de roulement 14 est délimitée axialement par des bords axiaux 141, 142 passant par chaque point N agencé de part et d'autre du plan médian M et pour lequel l'angle entre la tangente T à la surface de roulement 15 et une droite parallèle R à la direction axiale Y passant par ce point est égal à 30°. La bande de roulement 14 comprend cinq nervures 102, 104, 106, 108, 110 comprenant deux nervures latérales 102, 110 et trois nervures centrales 104, 106, 108. La bande de roulement 14 comprend également quatre découpures circonférentielles principales 112, 114, 116, 118 ainsi que cinq découpures circonférentielles secondaires 122, 124, 126, 128, 130 ménagées chacune respectivement dans chaque nervure 102, 104, 106, 108, 110.

La nervure latérale 102 est agencée axialement entre le bord axial 141 et la découpure circonférentielle principale 112 adjacente au bord axial 141. La nervure latérale 102 est délimitée axialement par un bord axial axialement extérieur 141 confondu avec le bord axial 141 et par un bord axial intérieur 143 définissant une largeur Ln1 de la nervure latérale 102.

La nervure latérale 110 est agencée axialement entre le bord axial 142 et la découpure circonférentielle principale 118 adjacente au bord axial 142. La nervure latérale 110 est délimitée axialement par un bord axial axialement extérieur 142 confondu avec le bord axial 142 et par un bord axial intérieur 144 définissant une largeur Ln5 de la nervure latérale 110.

La nervure centrale 104 est agencée axialement entre les découpures circonférentielles principales 112, 114. La nervure centrale 104 est délimitée axialement par un bord axial axialement extérieur 145 et par un bord axial intérieur 146 définissant une largeur Ln2 de la nervure centrale 104.

La nervure centrale 106 est agencée axialement entre les découpures circonférentielles principales 114, 116. La nervure centrale 106 est délimitée axialement par un bord axial axialement extérieur 147 et par un bord axial intérieur 148 définissant une largeur Ln3 de la nervure centrale 106.

La nervure centrale 108 est agencée axialement entre les découpures circonférentielles principales 116, 118. La nervure centrale 108 est délimitée axialement par un bord axial axialement extérieur 149 et par un bord axial intérieur 150 définissant une largeur Ln4 de la nervure centrale 108.

La nervure latérale 102 et la nervure centrale 104 sont adjacentes et séparées axialement l'une de l'autre par la découpure circonférentielle principale 112. Les nervures centrales 104, 106 sont adjacentes et séparées axialement l'une de l'autre par la découpure circonférentielle principale 114. Les nervures centrales 106, 108 sont adjacentes et séparées axialement l'une de l'autre par la découpure circonférentielle principale 116. La nervure latérale 110 et la nervure centrale 108 sont adjacentes et séparées axialement l'une de l'autre par la découpure circonférentielle principale 118.

Le pneumatique 10 présente, à l'état neuf, une hauteur de sculpture Hs égale ici à 8,6 mm. Chaque découpure circonférentielle principale 112 à 118 présente respectivement une profondeur Hr1, Hr2, Hr3, Hr4 supérieur ou égale à 50%, de préférence supérieur ou égal à 75% de la hauteur de sculpture Hs. En l'espèce, Hr1=Hr4=7,7 mm et Hs=Hr2=Hr3=8,6 mm. Chaque découpure circonférentielle principale 112 à 118 présente une largeur respectivement désignée par la référence Lr1, Lr2, Lr3, Lr4 et supérieure ou égale à 1,0 mm, de préférence supérieure ou égale à 5,0 mm et plus préférentiellement supérieure ou égale à 8,0 mm et encore plus préférentiellement allant de 8,0 mm à 15,0 mm. Ici, Lr1=Lr4=7,7 mm et Lr2=11,5 mm et Lr3=13,5 mm.

Chaque largeur axiale Ln2, Ln3, Ln4 va de 20 mm à 60 mm. Ici, Ln2=Ln3=Ln4=35 mm et chaque largeur axiale Ln1, Ln5 va de 20 mm à 100 mm. Ici, Ln1=48 mm Ln5=43 mm. Chaque nervure 102 à 110 présente un plan médian respectivement désigné par la référence M1, M2, M3, M4, M5 et situé axialement à équidistance de chaque bord axial de ladite nervure.

L'armature de sommet 16 comprend une armature de travail 20 et une armature de frettage 22. L'armature de travail 20 comprend au moins une couche de travail et ici comprend deux couches de travail 24, 26. En l'espèce, l'armature de travail 20 est constituée des deux couches de travail 24, 26. La couche de travail 24 radialement intérieure est agencée radialement à l'intérieur de la couche de travail 26 radialement extérieure.

L'armature de frettage 22 comprend au moins une couche de frettage et comprend ici une couche de frettage 28. L'armature de frettage 22 est ici constituée de la couche de frettage 28.

L'armature de sommet 16 est surmontée radialement de la bande de roulement 14. Ici, l'armature de frettage 22, ici la couche de frettage 28, est agencée radialement à l'extérieur de l'armature de travail 20 et est donc radialement intercalée entre l'armature de travail 20 et la bande de roulement 14.

Le pneumatique 10 comprend des premier et deuxième flancs 30A, 30B prolongeant le sommet 12 radialement vers l'intérieur. Le deuxième flanc 30B est situé de l'autre côté que le premier flanc 30A par rapport au plan médian M. Le pneumatique 10 comporte en outre des premier et deuxième bourrelets 32A, 32B prolongeant respectivement chaque premier et deuxième flanc 30A, 30B radialement vers l'intérieur. Le deuxième bourrelet 32B est situé de l'autre côté que le premier bourrelet 32A par rapport au plan médian M. Chaque premier et deuxième flanc 30A, 30B relie respectivement chaque premier et deuxième bourrelet 32A, 32B au sommet 12. Une surface interne 33, destinée à être au contact du gaz de gonflage du pneumatique, délimite une cavité torique 35 de gonflage du pneumatique 10. La surface interne 33 est ici portée par la couche d'étanchéité 18. Chaque premier et deuxième bourrelet 32A, 32B comprend respectivement un premier et deuxième élément de renforcement circonférentiel 40A, 40B, ici une tringle permettant l'accrochage du pneumatique 10 sur un support de montage du pneumatique 10, par exemple une jante.

Le pneumatique 10 comprend une armature de carcasse 34 ancrée dans chaque premier et deuxième bourrelet 32A, 32B, en l'espèce est enroulée autour de chaque premier et deuxième élément de renforcement circonférentiel 40A, 40B. L'armature de carcasse 34 s'étend radialement dans chaque flanc 30 et radialement intérieurement à l'armature de sommet 16 axialement dans le sommet 12. L'armature de sommet 16 est agencée radialement entre la bande de roulement 14 et l'armature de carcasse 34. L'armature de carcasse 34 comprend au moins une couche de carcasse et ici comprend une unique couche de carcasse 36. En l'espèce, l'armature de carcasse 34 est constituée de l'unique couche de carcasse 36.

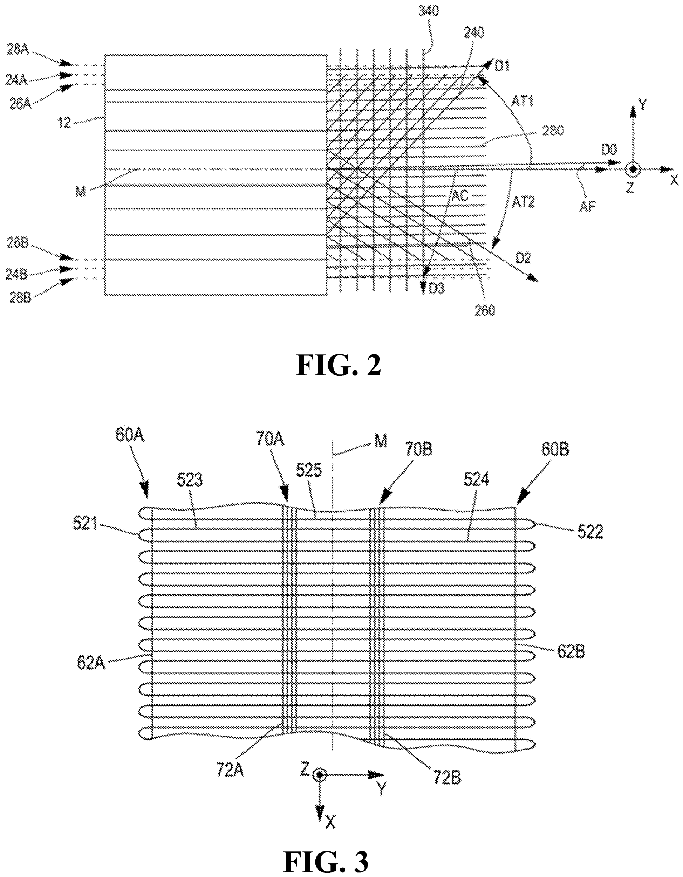

Chaque couche de travail 24, 26 de frettage 28 et de carcasse 36 comprend une matrice élastomérique dans laquelle sont noyés un ou des éléments de renfort filaires de la couche correspondante. On va maintenant décrire ces couches en référence à la figure 2.

L'armature de frettage 22, ici la couche de frettage 28, est délimitée axialement par deux bords axiaux 28A, 28B de l'armature de frettage 22. L'armature de frettage 22 comprend un ou plusieurs éléments de renfort filaires de frettage 280 enroulés circonférentiellement hélicoïdalement de façon à s'étendre axialement du bord axial 28A à l'autre bord axial 28B de la couche de frettage 28 selon une direction principale D0 de chaque élément de renfort filaire de frettage 280. La direction principale D0 forme, avec la direction circonférentielle X du pneumatique 10, un angle AF, en valeur absolue, inférieur ou égal à 10°, de préférence inférieur ou égal à 7° et plus préférentiellement inférieur ou égal à 5°. Ici, AF=-5°.

La couche de travail radialement intérieure 24 est délimitée axialement par deux bords axiaux 24A, 24B. La couche de travail radialement intérieure 24 comprend des éléments de renfort filaires de travail 240 s'étendant axialement du bord axial 24A à l'autre bord axial 24B les uns sensiblement parallèlement aux autres selon une direction principale D1. De façon analogue, la couche de travail radialement extérieure 26 est délimitée axialement par deux bords axiaux 26A, 26B. La couche de travail radialement extérieure 26 comprend des éléments de renfort filaires de travail 260 s'étendant axialement du bord axial 26A à l'autre bord axial 26B les uns sensiblement parallèlement aux autres selon une direction principale D2. La direction principale D1 selon laquelle s'étend chaque élément de renfort filaire de travail 240 de la couche de travail radialement intérieure 24 et la direction principale D2 selon laquelle s'étend chaque élément de renfort filaire de travail 260 de l'autre de la couche de travail radialement extérieure 26 forment, avec la direction circonférentielle X du pneumatique 10, des angles respectivement AT1 et AT2 d'orientations opposées. Chaque direction principale D1, D2 forme, avec la direction circonférentielle X du pneumatique 10, un angle respectivement AT1, AT2, en valeur absolue, strictement supérieur à 10°, de préférence allant de 15° à 50° et plus préférentiellement allant de 15° à 30°. Ici, AT1=-26° et AT2=+26°.

La couche de carcasse 36 est délimitée axialement par deux bords axiaux 36A, 36B. La couche de carcasse 36 comprend des éléments de renfort filaires de carcasse 340 s'étendant axialement du bord axial 36A à l'autre bord axial 36B de la couche de carcasse 36 selon une direction principale D3 formant avec la direction circonférentielle X du pneumatique 10, un angle AC, en valeur absolue, supérieur ou égal à 60°, de préférence allant de 80° à 90° et ici AC=+90°.

Chaque élément de renfort filaire de frettage 280 comprend classiquement deux brins multifilamentaires comprenant un brin multifilamentaire constitué d'un filé de monofilaments de polyamide aliphatique, ici de nylon d'un titre égal à 140 tex et un brin multifilamentaire constitué d'un filé de monofilaments de polyamide aromatique, ici d'aramide d'un titre égal à 167 tex, ces deux brins multifilamentaires étant mis en hélice individuellement à 290 tours par mètre dans un sens puis mis en hélice ensemble à 290 tours par mètre dans le sens opposé. Ces deux brins multifilamentaires sont enroulés en hélice l'un autour de l'autre. Bien évidemment, on pourra utiliser tout autre élément de renfort filaire de frettage connu par l'homme du métier.

Chaque élément de renfort filaire de travail 240, 260 est un assemblage de quatre monofilaments en acier comprenant une couche interne de deux monofilaments en acier initialement enroulés en hélice à un pas infini et une couche externe de deux monofilaments en acier initialement enroulés en hélice au pas de 14,3 mm dans un sens, les quatre monofilaments étant ensuite enroulés au pas de 14,3 mm sans le sens opposé, chaque monofilament en acier présentant un diamètre égal à 0,26 mm. Dans une autre variante, chaque élément de renfort filaire de travail 240, 260 est constitué d'un monofilament en acier présentant un diamètre égal à 0,30 mm. Dans encore une autre variante, chaque élément de renfort filaire de travail est un assemblage de deux monofilaments en enroulés ensemble en hélice présentant un diamètre égal à 0,30 mm. D'une manière plus générale, les monofilaments en acier présentent des diamètres allant de 0,25 mm à 0,32 mm. Bien évidemment, on pourra utiliser tout autre élément de renfort filaire de travail connu par l'homme du métier.

Chaque élément de renfort filaire de carcasse 340 comprend classiquement deux brins multifilamentaires, chaque brin multifilamentaire étant constitué d'un filé de monofilaments de polyester, ici de PET, ces deux brins multifilamentaires étant mis en hélice individuellement à 270 tours par mètre dans un sens puis mis en hélice ensemble à 270 tours par mètre dans le sens opposé. Chacun de ces brins multifilamentaires présente un titre égal à 334 tex. Dans d'autres variantes, on pourra utiliser des titres égaux à 144 tex et des torsions égales à 420 tours par mètre ou des titres égaux à 220 tex et des torsions égales à 240 tours par mètre.

En référence aux figures 1A, 1B et 1C, le pneumatique 10 comprend une structure de rigidification 50 comprenant plusieurs éléments de rigidification 52 s'étendant continûment dans la cavité torique 35. Les éléments de rigidification 52 sont répartis circonférentiellement dans la cavité torique 35. Les éléments de rigidification 52 sont répartis circonférentiellement selon un pas angulaire de répétition de préférence compris entre 1 degré et 5 degrés, de préférence entre 1 degré et 3 degrés. Ainsi, en fonction des dimensions du pneumatique 10, la structure de rigidification 50 compte entre 72 et 360 éléments de rigidification 52, de préférence entre 120 et 360 éléments de rigidification 52, et ici 240 éléments de rigidification 52. Le nombre d'éléments de rigidification 52 permet d'obtenir un bon compromis entre un nombre d'éléments de rigidification 52 qui est d'une part suffisamment élevé pour obtenir une rigidification efficace du pneumatique 10, et d'autre part suffisamment modéré pour pouvoir aménager un nombre correspondant de passages 1500 dans le noyau 1000 sans fragiliser excessivement la structure du noyau 1000 ou compliquer les opérations de démoulage comme cela est expliqué ci-dessous.

Chaque élément de rigidification 52 est un élément de rigidification filaire textile, ici constitué d'un assemblage de trois brins multifilamentaires de polyester, ici de PET, ces trois brins multifilamentaires étant mis en hélice individuellement à 220 tours par mètre dans un sens puis mis en hélice ensemble à 220 tours par mètre dans le sens opposé. Chacun de ces brins multifilamentaires présente un titre égal à 220 tex.

Chaque élément de rigidification filaire 52 s'étend continûment depuis le premier flanc 30A et/ou le premier bourrelet 32A jusqu'au deuxième flanc 30B et/ou le deuxième bourrelet 32B en passant dans le sommet 12 et ici depuis le premier flanc 30A jusqu'au deuxième flanc 30B en passant dans le sommet 12. La direction principale selon laquelle s'étend chaque élément de rigidification 52 dans la cavité torique 35 forme, avec la direction circonférentielle X, un angle allant, en valeur absolue, de 85° à 90°.

La structure de rigidification 50 comprend également des première et deuxième structure de renfort 60A, 60B radialement intérieures respectivement agencées dans chaque premier et deuxième flanc 30A, 30B et/ou dans chaque premier et deuxième bourrelet 32A, 32B, et ici respectivement agencées dans chaque premier et deuxième flanc 30A, 30B. Chaque première et deuxième structure de renfort radialement intérieure 60A, 60B est respectivement distincte de chaque premier et deuxième élément de renforcement circonférentiel 40A, 40B situé du même côté du plan médian que respectivement chaque premier et deuxième flanc 30A, 30B. En l'espèce, chaque première et deuxième structure de renfort radialement intérieure 60A, 60B est agencée radialement à l'extérieure respectivement de chaque premier et deuxième élément de renforcement circonférentiel 40A, 40B.

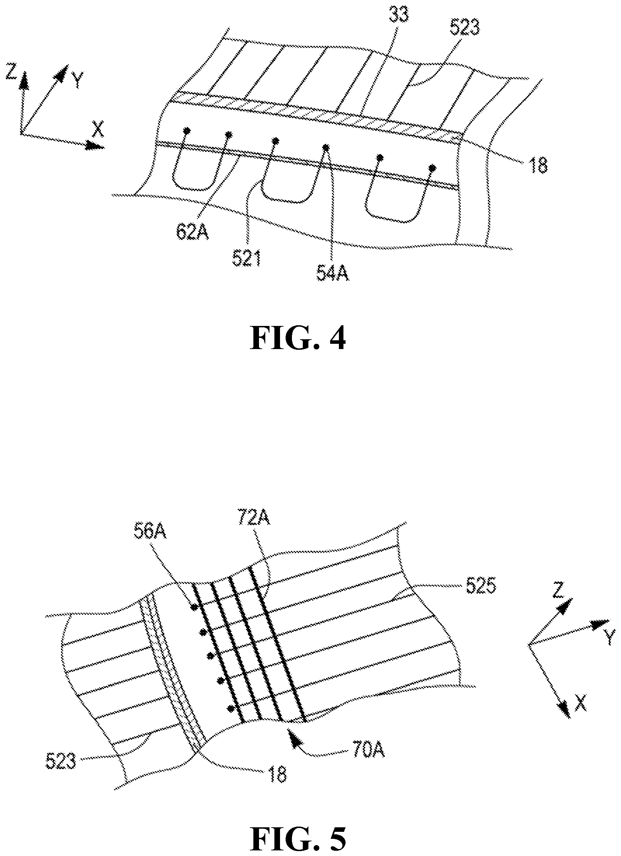

Chaque première et deuxième structure de renfort radialement intérieure 60A, 60B comprend respectivement un premier et deuxième élément de renfort filaire 62A, 62B métallique comprenant ici un assemblage d'une couche interne de quatre monofilaments élémentaires métallique de 0,35 mm enroulés en hélice au pas de 5 mm et d'une couche externe de neuf monofilaments élémentaires métallique de 0,35 mm enroulés en hélice autour de la couche interne au pas de 10 mm. Chaque élément de renfort filaire 62A, 62B s'étend selon une direction principale formant avec la direction circonférentielle X un angle inférieur ou égal à 10°, de de préférence inférieur ou égal à 5° et ici sensiblement nul comme cela est visible sur les figures 3 et 4. Chaque premier et deuxième élément de renfort filaire 62A, 62B de chaque première et deuxième structure de renfort radialement intérieure 60A, 60B est enroulé circonférentiellement sur au plus deux tours complets, et ici sur au plus un tour complet autour de l'axe de révolution Y.

Afin d'assurer un ancrage optimal de chaque élément de rigidification 52, chaque première et deuxième structure de renfort radialement intérieure 60A, 60B présente des rigidités d'extension et de flexion relativement importantes. En outre, toujours dans le but d'optimiser l'ancrage de chaque élément de rigidification 52, chaque première et deuxième structure de renfort radialement intérieure 60A, 60B est noyée dans une masse d'un ou de plusieurs matériaux, de préférence élastomériques, dont le module sécant nominal à 10% d'allongement est supérieur ou égal à 20 MPa, de préférence à 30 MPa et ici égal à 56 MPa. La mesure est effectuée conformément à la norme française NF T 46-002 de septembre 1988. On mesure en seconde élongation (c'est-à-dire après accommodation) le module sécant nominal calculé en se ramenant à la section initiale de l'éprouvette (ou contrainte apparente, en MPa) à 10% d'allongement. Cette mesure de traction est effectuée dans les conditions normales de température (23±2°C) et d'hygrométrie (50±5% d'humidité relative), selon la norme française NF T 40-101 (décembre 1979).

La structure de rigidification 50 comprend en outre des première et deuxième structures de renfort 70A, 70B radialement extérieures respectivement agencées dans le sommet 12. Les première et deuxième structures de renfort radialement extérieures 70A, 70B sont agencées axialement de part et d'autre du plan médian M du pneumatique 10 et ici sensiblement symétriquement par rapport au plan médian M du pneumatique 10. Chaque structure de renfort radialement extérieures 70A, 70B est agencée radialement à l'intérieur de l'armature de carcasse 34.

Chaque première et deuxième structure de renfort radialement extérieure 70A, 70B comprend respectivement un premier et deuxième élément de renfort filaire 72A, 72B textile comprenant ici un assemblage de deux brins multifilamentaires constitués chacun d'un filé de monofilaments de polyamide aromatique, ici d'aramide d'un titre égal à 330 tex et d'un brin multifilamentaire constitué d'un filé de monofilaments de polyamide aliphatique, ici de nylon d'un titre égal à 188 tex, chacun des brins multifilamentaires étant mis en hélice individuellement à 270 tours par mètre dans un sens puis mis en hélice ensemble à 270 tours par mètre dans le sens opposé. Ces trois brins multifilamentaires sont enroulés en hélice l'un autour de l'autre. Chaque élément de renfort filaire 72A, 72B s'étend selon une direction principale formant avec la direction circonférentielle X un angle inférieur ou égal à 10°, de de préférence inférieur ou égal à 5° et ici sensiblement nul comme cela est visible sur les figures 3 et 5. Chaque premier et deuxième élément de renfort filaire 72A, 72B de chaque première et deuxième structure de renfort radialement extérieure 70A, 70B est enroulé circonférentiellement sur au moins deux tours complets et au plus dix tours complets autour de l'axe de révolution, et ici sur quatre tours complets autour de l'axe de révolution Y.

Afin d'assurer un ancrage optimal de chaque élément de rigidification 52, chaque première et deuxième structure de renfort radialement extérieure 70A, 70B présente une rigidité d'extension relativement importante et une rigidité de flexion relativement faible afin de limiter le sur-frettage du sommet 12 et ne pas risquer de détériorer la mise à plat de la bande de roulement 14. En outre, toujours dans le but d'optimiser l'ancrage de chaque élément de rigidification 52, chaque première et deuxième structure de renfort radialement extérieure 70A, 70B est noyée dans une masse d'un ou de plusieurs matériaux, de préférence élastomériques, dont le module sécant nominal à 10% d'allongement est supérieur ou égal à 2,5 MPa et de préférence inférieur ou égal à 15 MPa, plus préférentiellement inférieur ou égal à 10 MPa et encore plus préférentiellement inférieur ou égal à 5 MPa et ici égal à 3 MPa.

Chaque élément de rigidification 52 est ancré, dans le premier flanc 30A, autour de la première structure de renfort radialement intérieure 60A et dans le deuxième flanc 30B, autour de la deuxième structure de renfort radialement intérieure 60B. Ici, chaque élément de rigidification 52 est enroulé au moins en partie autour de chaque premier et deuxième élément de renfort filaire 62A, 62B. Chaque élément de rigidification 52 est également ancré, dans le sommet 12, autour de chaque première et deuxième structure de renfort radialement extérieure 70A, 70B. Ici, chaque élément de rigidification 52 est enroulé au moins en partie autour de chaque premier et deuxième élément de renfort filaire 72A, 72B.

Chaque élément de rigidification 52 passe au travers de la surface interne 33 en un premier point d'ancrage radialement intérieur 54A pour aller s'ancrer autour de la première structure de renfort radialement intérieure 60A et en un premier point d'ancrage radialement extérieur 56A pour aller s'ancrer autour de la première structure de renfort radialement extérieure 70A. L'élément de rigidification 52 passe au travers de la surface interne 33 en un deuxième point d'ancrage radialement intérieur 54B pour aller s'ancrer autour de la deuxième structure de renfort radialement intérieure 60B et en un deuxième point d'ancrage radialement extérieur 56B pour aller s'ancrer autour de la deuxième structure de renfort radialement extérieure 70B.

Ainsi, chaque élément de rigidification 52 comprend des portions 521, 522 noyée respectivement dans chaque flanc 30A, 30B, des première et deuxième portions 523, 524 s'étendant dans la cavité torique 35 respectivement entre les premiers points d'ancrage radialement intérieur 54A et extérieur 56A et entre les deuxièmes points d'ancrage radialement intérieur 54B et extérieur 56B ainsi qu'une portion 525 noyée dans le sommet 12 agencée entre les première et deuxième portions 523, 524.

Afin d'assurer un ancrage optimal de chaque élément de rigidification, chaque portion 521, 522 présente une longueur relativement importante, ici supérieure ou égale à 20 mm et est couplée à une longueur supérieure ou égale à 1 mm de chaque structure de renfort radialement intérieure 60A, 60B.

Comme illustré sur la figure 1A, le premier point d'ancrage radialement extérieur 56A est agencé axialement du même côté que le premier point d'ancrage radialement intérieur 54A et que la première structure radialement intérieure 60A par rapport au plan médian M. Le deuxième point d'ancrage radialement extérieur 56B est agencé axialement du même autre côté que le deuxième point d'ancrage radialement intérieur 54B et que la deuxième structure radialement intérieure 60B par rapport au plan médian M. Chaque premier et deuxième point d'ancrage radialement intérieur 54A, 54B et extérieur 56A, 56B est agencé de sorte que les première et deuxième portions 523, 524 ne se croisent pas dans la cavité torique 35.

Chaque premier et deuxième point d'ancrage radialement extérieur 56A, 56B est agencé axialement respectivement à une distance axiale D1, D2 au plus égale à 0,45 x SW, de préférence allant de 0,05 x SW à 0,45 x SW du plan médian M du pneumatique 10, SW étant la largeur de section nominale du pneumatique 10. La largeur de section nominale est telle que définie dans le manuel de la norme ETRTO 2020 et est notamment visible sur le marquage apposé sur au moins un des flancs 30A, 30B du pneumatique 10 sous la forme SW/AR α V U β avec SW désignant la largeur de section nominale, AR désignant le rapport d'aspect nominal, α désignant la structure et pouvant être R ou ZR, V désignant le diamètre de jante nominale, U désignant l'indice de charge et β désignant le symbole de vitesse. Ici, D1=D2=45 mm.

Chaque premier et deuxième point d'ancrage radialement intérieur 54A, 54B est agencé radialement respectivement à une distance B1, B2 allant de 0,10 x H à 0,50 x H, de préférence allant de 0,10 x H à 0,35 x H du point radialement le plus intérieur du pneumatique 10, H étant la hauteur de section du pneumatique définie par H=SW x AR / 100 avec SW la largeur de section nominale et AR le rapport d'aspect nominal du pneumatique selon le manuel de la norme ETRTO 2020. La largeur de section nominale SW et le rapport d'aspect nominal AR sont ceux du marquage de la dimension inscrite sur le flanc du pneumatique et conformes au manuel de la norme ETRTO 2020. Ici, B1=B2=30 mm.

Chaque premier et deuxième point d'ancrage radialement extérieur 56A, 56B est agencé au droit d'une des nervures et ici respectivement au droit de chaque nervure centrale 104 et 108 qui sont séparées par deux découpures circonférentielles 114, 116. Chaque premier et deuxième point d'ancrage radialement extérieur 56A, 56B est agencé à respectivement une distance axiale I2, I4 de chaque plan médian M2, M4 telle que 2 x l2 / Ln2 ≤ 0,90 et que 2 x I4 / Ln4 ≤ 0,90, de préférence 2 x I2 / Ln2 ≤ 0,75 et 2 x I4 / Ln4 ≤ 0,75 et plus préférentiellement 2 x I2 / Ln2 ≤ 0,50 et 2 x I4 / Ln4 ≤ 0,50 et encore plus préférentiellement 2 x I2 / Ln2 ≤ 0,25 et 2 x I4 / Ln2 ≤ 0,25. Ici l2=l4=1 mm et 2 x I2 / Ln2 = 2 x l4 / Ln4=0,06.

Comme cela est illustré sur les figures 3 et 4, les éléments de rigidification 52 forment un élément de rigidification continu de façon à décrire une trajectoire en boustrophédon entre le premier flanc 30A et le deuxième flanc 30B en passant par le sommet 12. En variante, on pourrait tout à fait envisager des éléments de rigidification 52 séparés et donc discontinus les uns des autres.

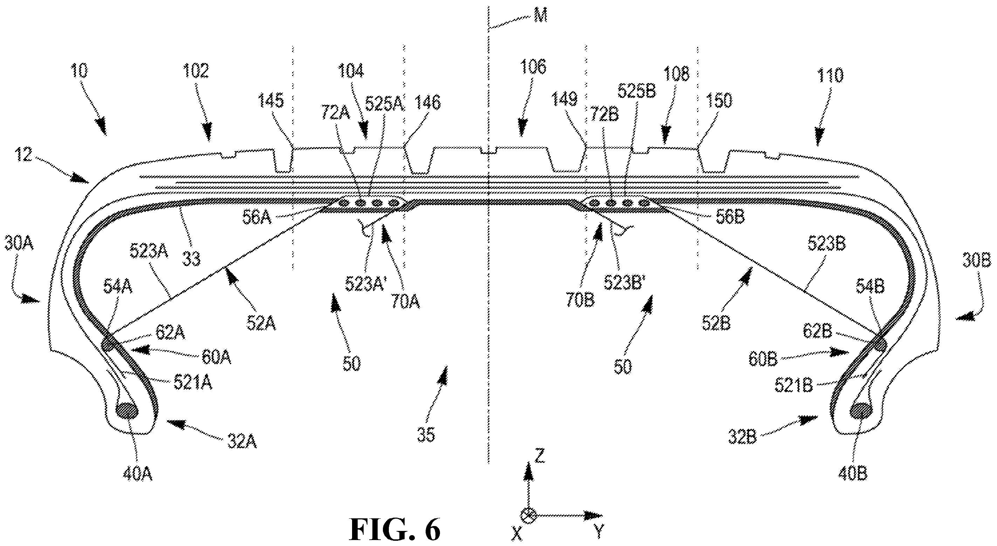

On a représenté sur la figure 6 un pneumatique selon un deuxième mode de réalisation de l'invention. Les éléments analogues à ceux du pneumatique selon le premier mode de réalisation sont désignés par des références identiques.

A la différence du pneumatique selon le premier mode de réalisation, la structure de rigidification 50 du pneumatique 10 selon le deuxième mode de réalisation comprend des premier et deuxième éléments de rigidification 52A, 52B distincts les uns des autres. Chaque premier élément de rigidification 52A est ancré autour de la première structure de renfort radialement intérieure 60A agencée dans le premier flanc 30A et autour de la première structure de renfort radialement extérieure 70A agencée dans le sommet 12. Chaque deuxième élément de rigidification 52B est ancré autour d'une deuxième structure de renfort radialement intérieure 60B agencée dans le deuxième flanc 30B et autour de la deuxième structure de renfort radialement extérieure 70B agencée dans le sommet 12 de sorte que chaque premier élément de rigidification 52A s'étend continûment dans la cavité torique 35 depuis le premier flanc 30A jusqu'au sommet 12 et de sorte que chaque deuxième élément de rigidification 52B s'étend continûment dans la cavité torique 35 depuis le deuxième flanc 30B jusqu'au sommet 12.

Les premiers éléments de rigidification 52A forment un premier élément de rigidification continu de façon à décrire une trajectoire en boustrophédon entre le premier flanc 30A et le sommet 12. Les deuxièmes éléments de rigidification 52B forment un deuxième élément de rigidification continu de façon à décrire une trajectoire en boustrophédon entre le premier flanc 30B et le sommet 12.

Chaque premier et deuxième élément de rigidification 52A, 52B comprend une première et deuxième portion 521A, 521B noyée respectivement dans chaque premier et deuxième flanc 30A, 30B, une première et deuxième portion 523A, 523B s'étendant dans la cavité torique 35 respectivement entre les premiers points d'ancrage radialement intérieur 54A et extérieur 56A et entre les deuxièmes points d'ancrage radialement intérieur 54B et extérieur 56B ainsi qu'une première et une deuxième portion 525A, 525B noyée dans le sommet 12. Sur la figure 6, par soucis de clarté, on a représenté une partie de chaque première et deuxième portion 523A, 523B' d'éléments de rigidification 52A', 52B' continus avec chaque premier et deuxième élément de rigidification 52A, 52B mais agencé hors du plan méridien de la figure 6.

Tout comme dans le premier mode de réalisation, le premier point d'ancrage radialement extérieur 56A est agencé axialement du même côté que le premier point d'ancrage radialement intérieur 54A et que la première structure radialement intérieure 60A par rapport au plan médian M. Le deuxième point d'ancrage radialement extérieur 56B est agencé axialement du même côté que le deuxième point d'ancrage radialement intérieur 54B et que la deuxième structure radialement intérieure 60B par rapport au plan médian M. Chaque premier et deuxième point d'ancrage radialement intérieur 54A, 54B et extérieur 56A, 56B est agencé de sorte que les première et deuxième portions 523A, 523B ne se croisent pas dans la cavité torique 35.

Dans une variante non représentée du deuxième mode de réalisation, on pourra envisager un mode de réalisation analogue au deuxième mode de réalisation mais dans lequel la structure de rigidification 50 ne comprend pas deux structures de renfort radialement extérieures mais une unique structure de renfort radialement extérieure, comme cela est le cas pour le troisième mode de réalisation décrit ci-après.

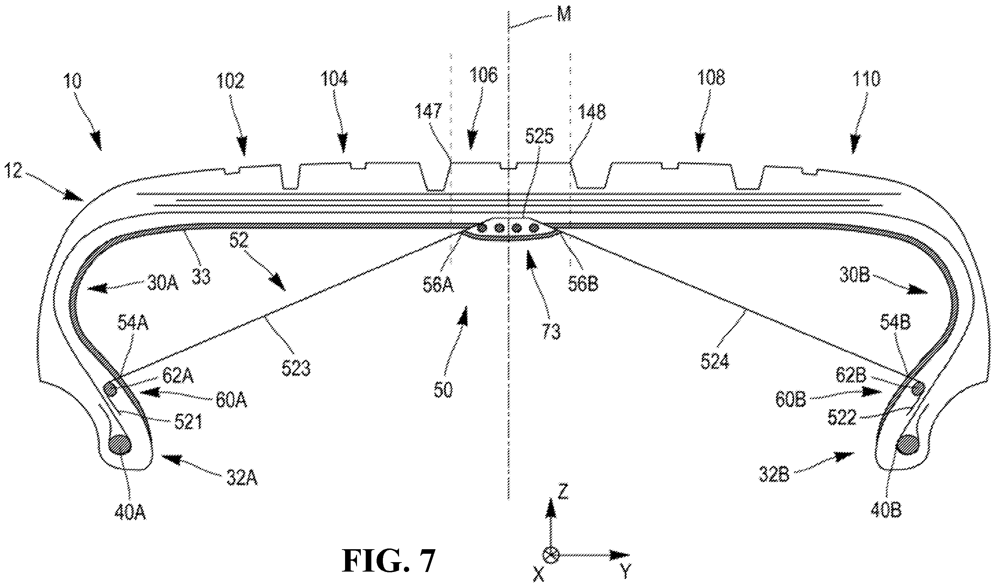

On a représenté sur la figure 7 un pneumatique selon un troisième mode de réalisation de l'invention. Les éléments analogues à ceux des pneumatiques selon les modes de réalisation précédents sont désignés par des références identiques.

A la différence du pneumatique selon le premier mode de réalisation, la structure de rigidification du pneumatique 10 selon le troisième mode de réalisation comprend une unique structure de renfort radialement extérieure 73. Chaque élément de rigidification 52 est ancré autour de la première structure de renfort radialement intérieure 60A, autour de la structure de renfort radialement extérieure 73 agencée dans le sommet 12 et autour de la deuxième structure de renfort radialement intérieure 60B de sorte que chaque élément de rigidification 52 s'étend continûment depuis le premier flanc 30A jusqu'au deuxième flanc 30B en passant dans le sommet 12.

A la différence du premier mode de réalisation, chaque premier et deuxième point d'ancrage radialement extérieur 56A, 56B est agencé au droit d'une même nervure, ici la nervure centrale 106.

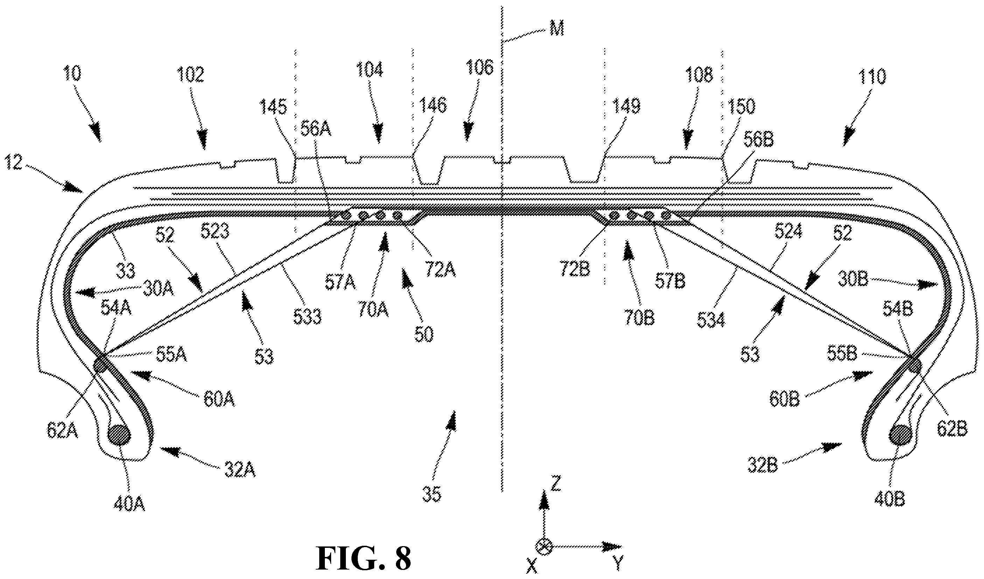

On a représenté sur la figure 8 un pneumatique selon un quatrième mode de réalisation de l'invention. Les éléments analogues à ceux des pneumatiques selon les modes de réalisation précédents sont désignés par des références identiques.

A la différence du premier mode de réalisation, la structure de rigidification 50 comprend des éléments de rigidification 52 à ancrage axialement extérieur et des éléments de rigidification 53 à ancrage axialement intérieur. La structure de rigidification 52 comprend des première et deuxième structures de renfort radialement extérieures 70A, 70B agencées de part et d'autre et sensiblement symétriquement par rapport au plan médian M.

Chaque élément de rigidification à ancrage axialement extérieur 52 est ancré autour de la première structure de renfort radialement intérieure 60A, autour des première et deuxième structures de renfort radialement extérieures 70A, 70B et autour de la deuxième structure de renfort radialement intérieure 60B de sorte que chaque élément de rigidification à ancrage axialement extérieur 52 s'étend continûment depuis le premier flanc 30A jusqu'au deuxième flanc 30B en passant dans le sommet 12. Chaque élément de rigidification à ancrage axialement extérieur 52 comprend une première portion 523 s'étendant dans la cavité torique 35 entre un premier point d'ancrage radialement intérieur 54A auquel chaque élément de rigidification à ancrage axialement extérieur 52 passe au travers de la surface interne 33 pour aller s'ancrer autour de la première structure de renfort radialement intérieure 60A et un premier point d'ancrage radialement extérieur 56A auquel chaque élément de rigidification à ancrage axialement extérieur 52 passe au travers de la surface interne 33 pour aller s'ancrer autour des première et deuxième structures de renfort radialement extérieures 70A, 70B. Chaque élément de rigidification à ancrage axialement extérieur 52 comprend une deuxième portion 524 s'étendant dans la cavité torique 35 entre un deuxième point d'ancrage radialement intérieur 54B auquel chaque élément de rigidification à ancrage axialement extérieur 52 passe au travers de la surface interne 33 pour aller s'ancrer autour de la deuxième structure de renfort radialement intérieure 60B et un deuxième point d'ancrage radialement extérieur 56B auquel chaque élément de rigidification à ancrage axialement extérieur 52 passe au travers de la surface interne 33 pour aller s'ancrer autour des première et deuxième structures de renfort radialement extérieures 70A, 70B.

Chaque élément de rigidification à ancrage axialement intérieur 53 est ancré autour de la première structure de renfort radialement intérieure 60A, autour des première et deuxième structures de renfort radialement extérieures 70A, 70B et autour de la deuxième structure de renfort radialement intérieure 60B de sorte que chaque deuxième élément de rigidification 53 s'étend continûment depuis le premier flanc 30A jusqu'au deuxième flanc 30B en passant dans le sommet 12. Chaque élément de rigidification à ancrage axialement intérieur 53 comprend une première portion 533 s'étendant dans la cavité torique 35 entre un premier point d'ancrage radialement intérieur 55A auquel chaque élément de rigidification à ancrage axialement intérieur 53 passe au travers de la surface interne 33 pour aller s'ancrer autour de la première structure de renfort radialement intérieure 60A et un premier point d'ancrage radialement extérieur 57A auquel chaque élément de rigidification à ancrage axialement intérieur 53 passe au travers de la surface interne 33 pour aller s'ancrer dans les première et deuxième structures de renfort radialement extérieures 70A, 70B. Chaque élément de rigidification à ancrage axialement intérieur 53 comprend une deuxième portion 534 s'étendant dans la cavité torique 35 entre un deuxième point d'ancrage radialement intérieur 55B auquel chaque élément de rigidification à ancrage axialement intérieur 53 passe au travers de la surface interne 33 pour aller s'ancrer autour de la deuxième structure de renfort radialement intérieure 60B et un deuxième point d'ancrage radialement extérieur 57B auquel chaque élément de rigidification à ancrage axialement intérieur 53 passe au travers de la surface interne 33 pour aller s'ancrer dans les première et deuxième structures de renfort radialement extérieures 70A, 70B.

De façon analogue au premier mode de réalisation, chaque premier et deuxième point d'ancrage radialement intérieur 54A, 55A, 54B, 55B et extérieur 56A, 57A, 56B, 57B de chaque élément de rigidification à ancrage axialement intérieur 53 et extérieur 52 est agencé de sorte que la portion 533 et la portion 534 ne se croisent pas dans la cavité torique, la portion 523 et la portion 524 ne se croisent pas dans la cavité torique, les premiers points d'ancrage radialement extérieurs 56A, 57A et radialement intérieurs 54A, 55A sont agencés axialement du même côté du plan médian du pneumatique, et les deuxièmes points d'ancrage radialement extérieurs 56B, 57B et radialement intérieurs 54B, 55B sont agencés axialement du même autre côté du plan médian du pneumatique.

Chaque premier et deuxième point d'ancrage radialement extérieur 57A, 57B de chaque élément de rigidification à ancrage axialement intérieur 53 est agencé axialement à l'intérieur par rapport respectivement à chaque premier et deuxième point d'ancrage radialement extérieur 56A, 56B de chaque élément de rigidification à ancrage axialement extérieur 52.

Chaque premier et deuxième point d'ancrage radialement extérieur 57A, 57B, 56A, 56B de chaque élément de rigidification à ancrage axialement intérieur 53 et extérieur 52 est agencé au droit d'une des nervures, ici au droit de chaque nervure 104 et 108.

On notera que chaque premier point d'ancrage radialement intérieur 55A et chaque premier point d'ancrage radialement intérieur 54A sont radialement et axialement alignés sur une même ligne circonférentielle. De façon analogue, chaque deuxième point d'ancrage radialement intérieur et chaque deuxième point d'ancrage radialement intérieur 54B sont radialement et axialement alignés sur une même ligne circonférentielle.

On notera également que chaque premier et deuxième point d'ancrage radialement intérieur et extérieur 55A, 55B, 57A, 57B est dans un même plan de coupe méridien que chaque premier et deuxième point d'ancrage radialement intérieur et extérieur 54A, 54B, 56A, 56B. On pourra également envisager, dans une variante non illustrée que chaque premier et deuxième point d'ancrage radialement intérieur et extérieur 55A, 55B, 57A, 57B est dans un plan de coupe méridien différent que chaque premier et deuxième point d'ancrage radialement intérieur et extérieur 54A, 54B, 56A, 56B.

Dans ce quatrième mode de réalisation, chaque première et deuxième structure de renfort radialement intérieure d'ancrage 60A, 60B de chaque élément de rigidification à ancrage axialement intérieur 53 est chaque première et deuxième structure de renfort radialement intérieure d'ancrage 60A, 60B de chaque élément de rigidification à ancrage axialement extérieur 52. En outre, les première et deuxième structures de renfort radialement extérieures 70A, 70B d'ancrage de chaque élément de rigidification à ancrage axialement intérieur 53 sont les structures de renfort radialement extérieures 70A, 70B d'ancrage de chaque élément de rigidification à ancrage axialement extérieur 52. Dans une variante, on pourrait les envisager distinctes.

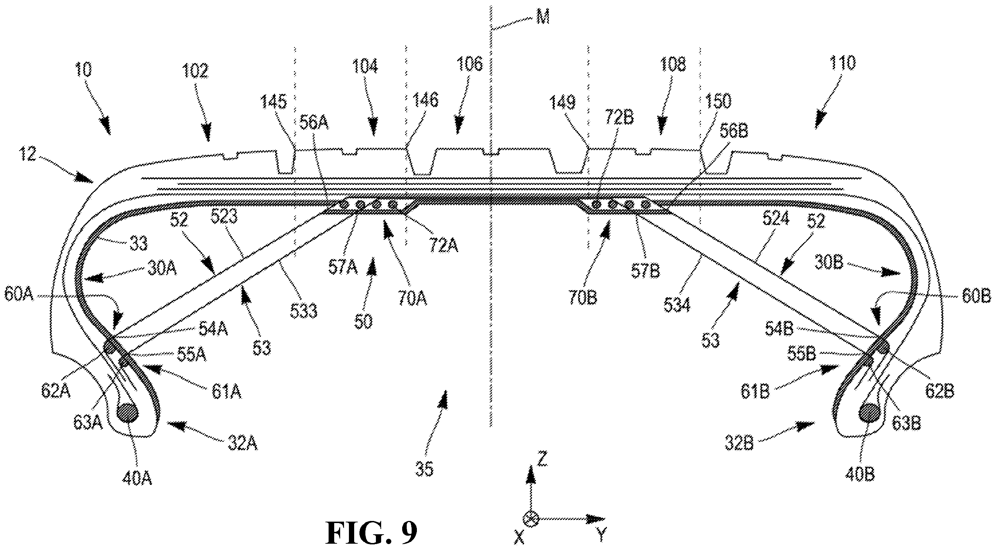

On a représenté sur la figure 9 un pneumatique selon un cinquième mode de réalisation de l'invention. Les éléments analogues à ceux des pneumatiques selon les modes de réalisation précédents sont désignés par des références identiques.

A la différence du quatrième mode de réalisation, la structure de rigidification 50 comprend des éléments de rigidification 52 à ancrage radialement et axialement extérieur et des éléments de rigidification 53 à ancrage radialement et axialement intérieur. La structure de rigidification 50 comprend une première structure de renfort radialement extérieure 60A d'ancrage de chaque élément de rigidification à ancrage radialement et axialement extérieur 52 agencée dans le premier flanc 30A et une première structure de renfort radialement intérieure 61A d'ancrage de chaque élément de rigidification à ancrage radialement et axialement intérieur 53 agencée dans le premier flanc 30A et distincte de la première structure de renfort radialement extérieure 60A mais également du premier élément de renforcement circonférentiel 40A. La structure de rigidification 50 comprend également une deuxième structure de renfort radialement extérieure 60B d'ancrage de chaque élément de rigidification à ancrage radialement et axialement extérieur 52 agencée dans le deuxième flanc 30B et une deuxième structure de renfort radialement intérieure 61B d'ancrage de chaque élément de rigidification à ancrage radialement et axialement intérieur 53 agencée dans le deuxième flanc 30B et distincte de la deuxième structure de renfort radialement extérieure 60B mais également du deuxième élément de renforcement circonférentiel 40B.

A la différence du quatrième mode de réalisation, chaque premier et deuxième point d'ancrage radialement intérieur 55A, 55B de chaque élément de rigidification à ancrage radialement et axialement intérieur 53 est agencé radialement à l'intérieur par rapport respectivement à chaque premier et deuxième point d'ancrage radialement intérieur 54A, 54B de chaque élément de rigidification à ancrage radialement et axialement extérieur 52.

Tout comme dans le quatrième mode de réalisation, chaque premier et deuxième point d'ancrage radialement extérieur 57A, 57B, 56A, 56B de chaque élément de rigidification à ancrage radialement et axialement intérieur 53 et extérieur 52 est agencé au droit d'une des nervures, ici au droit de chaque nervure 104 et 108.

On notera que chaque premier et deuxième point d'ancrage radialement extérieur 57A, 57B et chaque premier et deuxième premier point d'ancrage radialement extérieur 56A, 56B sont respectivement axialement décalés l'un par rapport à l'autre. On pourra, en variante envisager qu'ils soient radialement et axialement alignés sur une même ligne circonférentielle.

On notera que chaque première et deuxième structure de renfort radialement intérieure 60A, 60B est distincte de chaque première et deuxième structure de renfort radialement intérieure 61A, 61B. En l'espèce, chaque structure de renfort radialement intérieure 60A, 60B, 61A, 61B comprend respectivement un élément de renfort filaire 62A, 62B, 63A, 63B distinct de et discontinu par rapport à l'élément de renfort filaire de l'autre structure de renfort radialement intérieure agencée dans le même flanc et/ou le même bourrelet. En variante, on pourra envisager que ces structures de renfort radialement intérieures soient les mêmes.

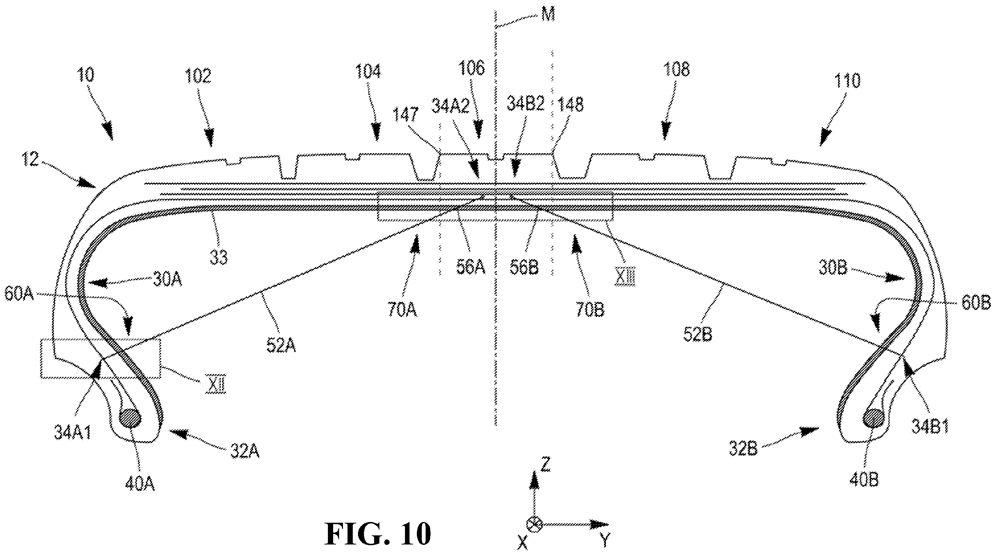

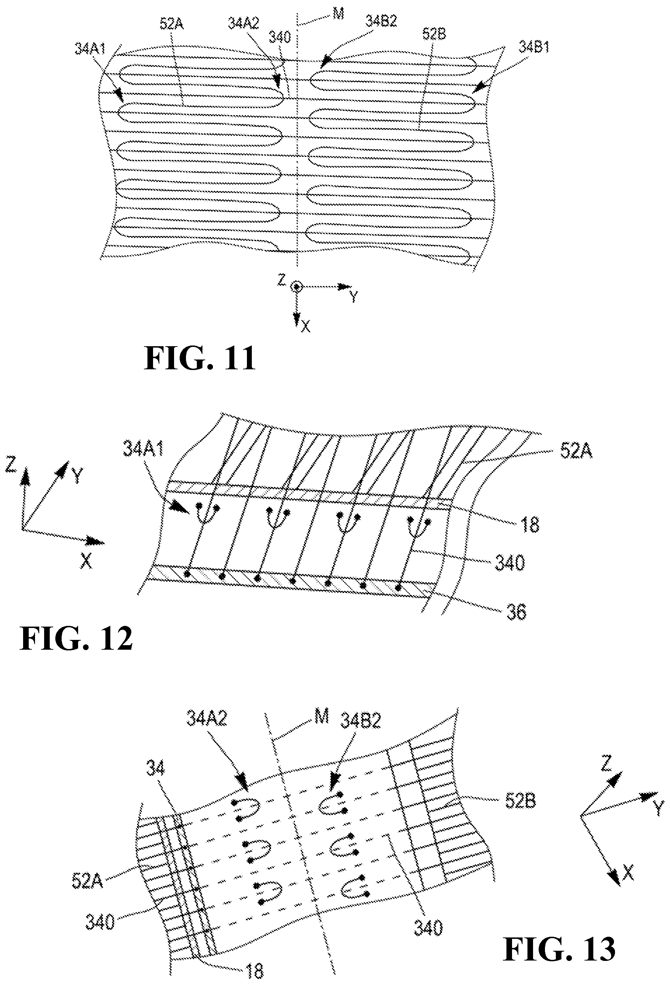

On a représenté sur les figures 10 à 13 un pneumatique selon un sixième mode de réalisation de l'invention. Les éléments analogues à ceux des pneumatiques selon les modes de réalisation précédents sont désignés par des références identiques.

A la différence des modes de réalisation précédents, chaque première et deuxième structure de renfort radialement intérieure 60A, 60B comprend respectivement une portion 34A1, 34B1 de l'armature de carcasse 34 s'étendant radialement dans chaque flanc 30A, 30B. En l'espèce, chaque élément de rigidification 52A, 52B est enroulé au moins en partie autour d'un élément de renfort filaire de carcasse 340 de chaque portion 34A1, 34B1 de l'armature de carcasse 34 s'étendant radialement dans chaque flanc 30A, 30B.

De façon analogue, chaque première et deuxième structure de renfort radialement extérieure 70A, 70B comprend respectivement une portion 34A2, 34B2 de l'armature de carcasse 34 s'étendant axialement dans le sommet 12. En l'espèce, chaque élément de rigidification 52B est enroulé au moins en partie autour d'un élément de renfort filaire de carcasse 340 de chaque portion 34A2, 34B2 de l'armature de carcasse 34 s'étendant axialement dans le sommet 12.

Dans ce sixième mode de réalisation, à la différence des modes de réalisation précédents, chaque premier et deuxième élément de rigidification 52A, 52B est ancré dans, et non pas autour de, chaque première et deuxième structure de renfort radialement intérieure 60A, 60B et chaque première et deuxième structure de renfort radialement extérieure 70A, 70B formée par chaque portion correspondante 34A1, 34B1, 34A2, 34B2 de l'armature de carcasse 34.

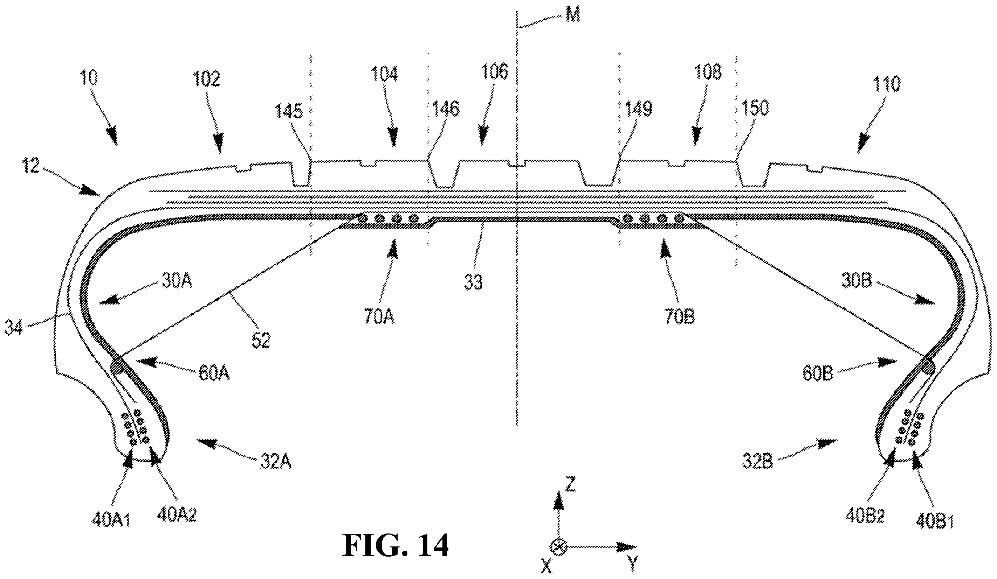

On a représenté sur la figure 14 un pneumatique selon un septième mode de réalisation de l'invention. Les éléments analogues à ceux des pneumatiques selon les modes de réalisation précédents sont désignés par des références identiques.

A la différence du premier mode de réalisation, chaque premier et deuxième bourrelet 32A, 32B comprend deux éléments de renforcement circonférentiels respectivement 40A1, 40A2 et 40B1, 40B2 et permettant l'ancrage de l'armature de carcasse 34. Chacun de ces éléments de renforcement circonférentiel est un élément de renforcement filaire continu comprenant plusieurs tours circonférentiels autour de l'axe de révolution, radialement superposés les uns sur les autres.

Bien évidemment, on pourra envisager des modes de réalisation comprenant des éléments de renforcement circonférentiels identiques à ceux du septième mode de réalisation en combinaison avec les structures de rigidification des deuxième, troisième, quatrième cinquième et sixième mode de réalisation.

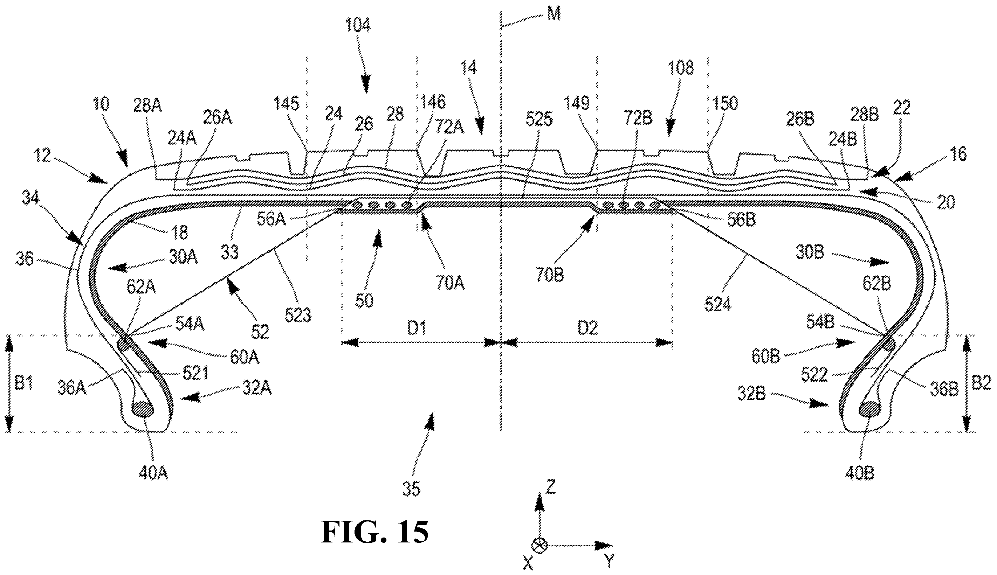

On a représenté sur la figure 15 un pneumatique selon un huitième mode de réalisation de l'invention. Les éléments analogues à ceux des pneumatiques selon les modes de réalisation précédents sont désignés par des références identiques.

L'armature de sommet 16 comprend des couches de travail 24, 26 et de frettage 28 comprenant des ondulations. De telles ondulations sont notamment décrites dans les documents WO2018/073546, WO2018/073547, WO2018/073548 et WO2018/224743.

### Tests comparatifs

Afin de démontrer l'intérêt de l'invention concernant l'endurance de la structure de rigidification, on a comparé le pneumatique 10 selon le premier mode de réalisation et un pneumatique R de l'état de la technique tel que décrit dans WO2020/128225 mais dans sa dimension 275/35R19. Chaque pneumatique 10 et R est monté sur une jante nominale et gonflé à une pression égale à 250 kPa. Puis, on a conduit un test analogue à l'essai de performance charge/vitesse décrit en annexe VII du Règlement n°30 de la CEE-ONU, mais cela dans des conditions de charge et de vitesse plus sollicitantes. On a alors noté le nombre de kilomètres parcourus avant d'observer les premières désolidarisations des éléments de rigidification. On a rapporté ce nombre de kilomètres parcourus à une base 100 correspondant au nombre de kilomètres parcourus par le pneumatique R de l'état de la technique de sorte qu'un nombre de kilomètres parcourus supérieur à 100 indique une amélioration de l'endurance de la structure de rigidification.

On satisfait le test si le pneumatique est en état de rouler à l'issue d'un seuil kilométrique que chaque manufacturier fixera en fonction de son cahier des charges, par exemple entre 10000 et 50000 kilomètres. On a fait rouler le pneumatique R de l'état de la technique dans les conditions précédemment décrites et au bout d'un nombre de kilomètres inférieur au seuil kilométrique fixé, le pneumatique R de l'état de la technique n'était plus en état de rouler en raison d'une perte de pression consécutive à une détérioration de sa structure. Au contraire, le pneumatique 10 selon le premier mode de réalisation a franchi le seuil kilométrique sans détérioration et était en état de rouler encore de nombreux kilomètres.

On a en outre comparé les rigidités radiale Kzz, axiale Kyy ainsi que la rigidité de dérive D(z) du pneumatique 10 selon le premier mode de réalisation et du pneumatique R. Ces rigidités sont sensiblement identiques à celles du pneumatique décrit dans WO2020/128225 dans sa dimension 275/35R19 et bien meilleures que celles d'un pneumatique classique de l'état de la technique dépourvu de toute structure de rigidification.

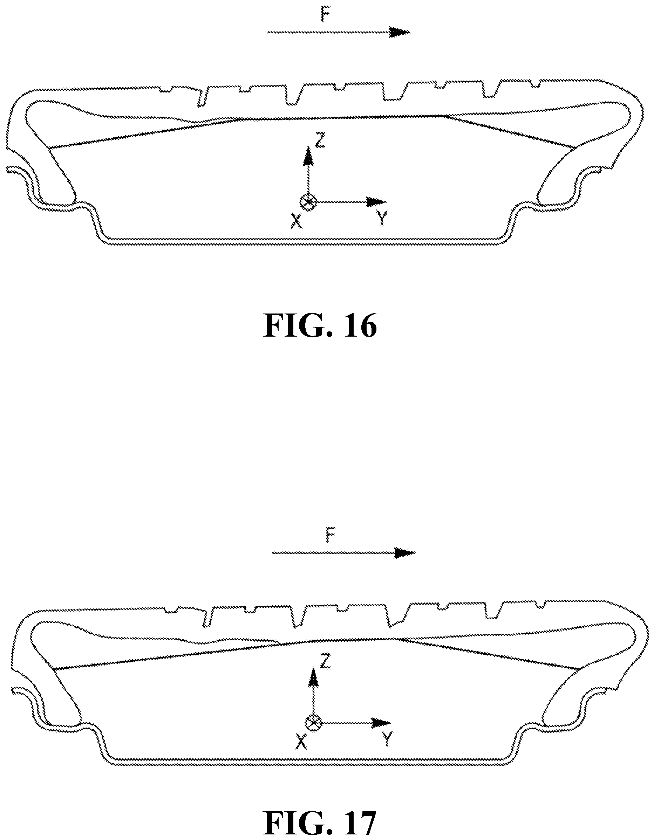

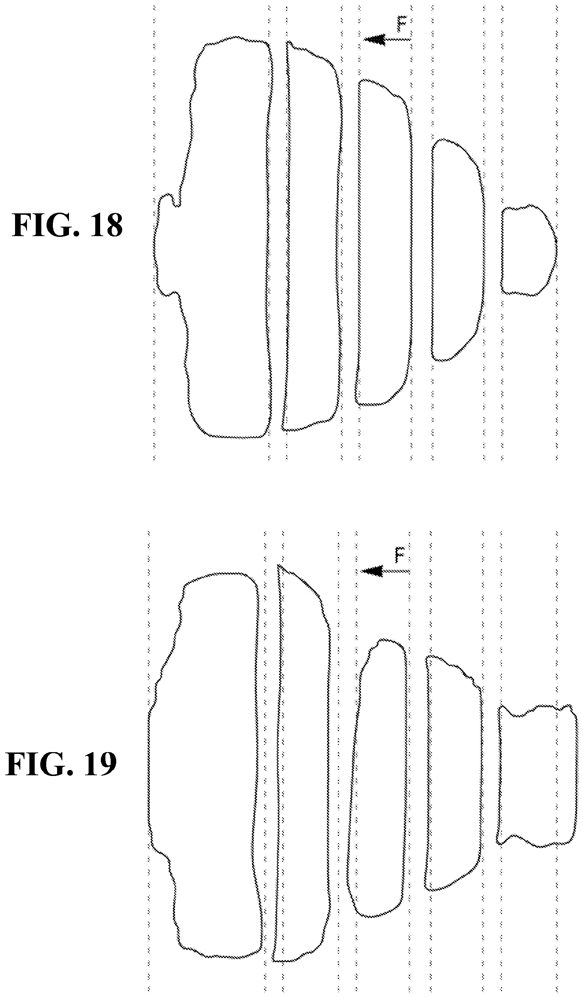

Afin de démontrer l'intérêt de l'invention concernant la bonne mise à plat de la bande de roulement, on a comparé le pneumatique 10 selon le premier mode de réalisation et un pneumatique R' témoin non conforme à l'invention dans lequel chaque premier et deuxième point d'ancrage radialement extérieur est agencé au droit d'une découpure circonférentielle principale. On a simulé l'aire de contact de chaque pneumatique 10 et R' avec un sol de roulage lorsque chaque pneumatique 10 et R' est soumis à une force latérale F donnée, monté sur une jante nominale, gonflé à une pression égale à 250 kPa et sous une charge supérieure à la charge nominale de façon à simuler un transfert de charge équivalent au transfert de charge que l'on observerait sur une roue extérieure d'un véhicule prenant un virage. Sur les figures 16 et 17, on note que le nombre de zones de flexion axiale est moindre pour le pneumatique 10 que pour le pneumatique témoin R'. Sur les figures 18 et 19, on a représenté les limites axiales de chaque nervure de la bande de roulement du pneumatique 10 par des lignes en traits pointillés afin de pouvoir comparer les aires de contact entre elles. On constate que chaque nervure de la bande de roulement du pneumatique 10 présente une largeur d'aire de contact significativement supérieure à celle de la nervure correspondante du pneumatique R'. Comme expliqué précédemment, le fait que chaque premier et deuxième point d'ancrage radialement extérieur est agencé au droit d'une des découpures circonférentielles principales entraine l'apparition de plusieurs zones de flexion axiale de la bande de roulement et donc une diminution de la largeur axiale des nervures au contact du sol de roulage, notamment en raison d'un déplacement des bords axiaux de chaque nervure radialement dans l'espace formé par les découpures circonférentielles principales de la bande de roulement délimités par les bords axiaux de chaque nervure.

On va désormais décrire un outillage et un procédé permettant de fabriquer le pneumatique selon l'invention.

Afin de fabriquer le pneumatique 10 selon le premier mode de réalisation, on utilise un outillage et un procédé que l'on va décrire ci-dessous.

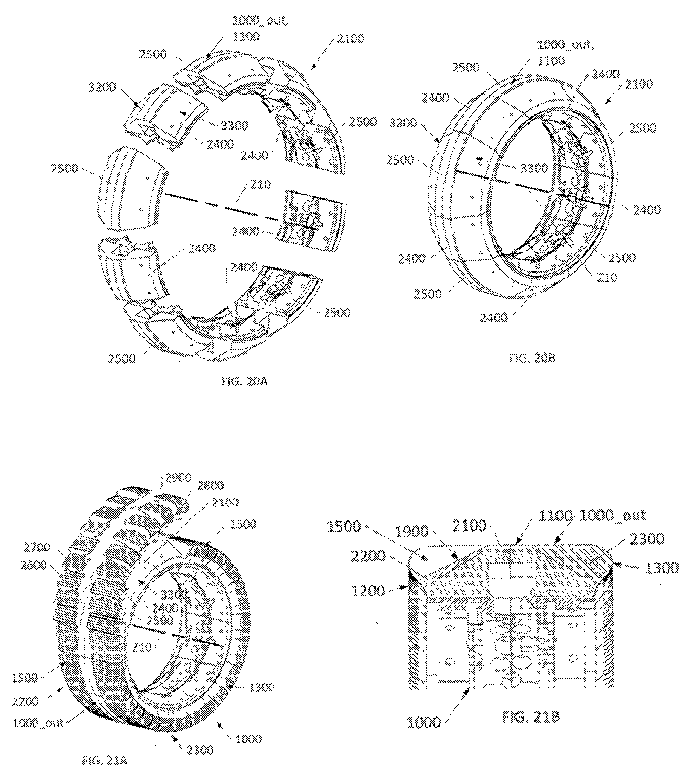

Comme illustré sur les figures 20A, 20B et 21A, 21B, l'outillage comprend un noyau 1000 toroïdal présentant, autour de son axe principal Z10, une surface externe de réception 1000_out convexe et qui comprend une zone sommitale 1100, radialement externe, destinée à recevoir des composants constitutifs du sommet 12, une première zone latérale 1200 rabattue vers l'axe principal Z10 du noyau et destinée à recevoir des composants constitutifs du premier flanc 30A et du premier bourrelet 32A et une seconde zone latérale 1300 rabattue vers l'axe principal Z10 du noyau et destinée à recevoir des composants constitutifs du second flanc 30B et du second bourrelet 32B.

De la sorte, le noyau 1000 matérialise un volume, dit volume réservé, qui est délimité extérieurement par la surface de réception 1000_out et qui correspond à la cavité interne 35. Le noyau 1000 peut ainsi occuper, et donc réserver temporairement, pendant la fabrication du pneumatique, le volume dont la forme et les dimensions correspondent à celles de la cavité interne 35, volume qui deviendra la cavité interne 35.

Le noyau 1000 possède une pluralité de passages 1500 qui s'étendent à l'intérieur du volume réservé, sous la surface de réception 1000_out, et qui s'ouvrent sur ladite surface de réception 1000_out de manière que chacun desdits passages 1500 relie la zone sommitale 1100 de la surface de réception 1000_out à l'une des première et seconde zones latérales 1200, 1300 afin que le noyau 10 puisse recevoir, à l'intérieur desdits passages 1500, les éléments de rigidification 52. Les rainures 1500 sont borgnes et présentent un fond 1900 plein, situé sous la surface de réception 1000_out, dans le volume réservé.

Le noyau 1000 comprend, tel que cela est notamment visible sur la figure 21A, un assemblage de plusieurs sous-ensembles 2100, 2200, 2300 annulaires comportant : i) un premier sous-ensemble 2100 annulaire dit couronne centrale 2100, qui forme une portion centrale de la zone sommitale 1100 de la surface de réception 1000_out destinée à recevoir un ou des composants constitutifs du sommet 12, ii) un second sous-ensemble 2200 annulaire dit oreille gauche 2200 contenant les rainures 1500 formant les passages destinés aux éléments de rigidification 52 qui relient le premier flanc 30A au sommet 12, et iii) un troisième sous-ensemble 2300 annulaire dit oreille droite 2300 contenant les rainures 1500 formant les passages destinés aux éléments de rigidification 52 qui relient le second flanc 30B au sommet 12.

Lesdits sous-ensembles 2100, 2200, 2300 annulaires sont chacun fractionnés angulairement en secteurs 2400, 2500, 2600, 2700, 2800, 2900, en azimut autour de l'axe principal Z10, selon une alternance de secteurs dits « clefs » 2400, 2600, 2800, et de secteurs dits « voûtes » 2500, 2700, 2900, soutenus et bloqués en position par les clefs 2400, 2600, 2800, et conçus pour devenir manoeuvrables après qu'ils ont été libérés par le retrait des clefs 2400, 2600, 2800. La couronne centrale 2100 est subdivisée en une pluralité de clefs de couronne 2400 et de voûtes de couronne 2500. De préférence, aussi bien les clefs d'oreille 2600, 2800 que les voûtes d'oreille 2700, 2900, seront réalisées dans un alliage métallique, plus préférentiellement dans un alliage d'aluminium.

Le procédé permettant la fabrication du pneumatique 10 revient en pratique à utiliser un outillage tel que décrit précédemment. Le procédé comprend une étape (S0) de préparation, au cours de laquelle on prépare l'outillage. Lors de ladite étape (S0) de préparation, on assemblera les clefs 2400 et voûtes 2500 pour former ladite couronne centrale, tel que cela est illustré sur les figures 21A et 21B, puis l'on fixera, sur chacune des faces de dépouille 3200, 3300 une succession de clefs d'oreille 2600, 2800 et de voûtes 2700, 2900 d'oreilles pour former les oreilles 2200, 2300.

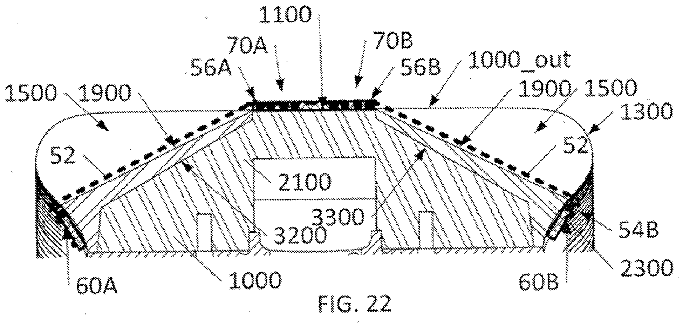

Le procédé comprend ensuite une étape (S2) de mise en place des éléments de rigidification 52, au cours de laquelle on passe l'élément de rigidification 52 à travers chaque passage 1500. Pour ce faire, on dispose l'élément de rigidification 52 continu en boustrophédon à travers les passages 1500 successifs, ici en insérant l'élément de rigidification 52 continu dans les rainures 1500 et en faisant ressortir l'élément de rigidification 52 continu par-dessus la surface de réception 1000_out dans la zone sommitale 1100 et dans les zones latérales 1200, 1300, au niveau des points d'ancrage radialement intérieurs 54A, 54B et extérieurs 56A, 56B, tel que cela est visible sur la figure 22. Puis, dans une étape non illustrée, le procédé comprend une étape (S3) de protection, au cours de laquelle on met en oeuvre un dispositif anti-pénétration (non illustré) qui, pendant l'étape (S4) de garnissage et pendant l'étape (S5) de cuisson, coopère avec le noyau 1000 pour faire obstacle à une pénétration des composants constitutifs du sommet 12, des flancs 30A, 30B ou des bourrelets 32A, 32B dans les rainures 1500 dans lesquelles sont engagés les éléments de rigidification 52. Un tel dispositif anti-pénétration pourra comprendre des éléments de comblement des rainures 1500 ou bien encore des bandeaux de masquage ou des coques que l'on pose sur les rainures de façon à couvrir les rainures 1500.

Le procédé comprend ensuite une étape (S4) de garnissage au cours de laquelle on dépose sur la surface de réception 1000_out les composants constitutifs du sommet 12, des flancs 30A, 30B et des bourrelets 32A, 32B. Lesdits composants comprennent des bandes ou des nappes à base de compositions polymériques et les éléments de renfort filaires permettant de former les différentes couches du pneumatique 10.

Le procédé comprend ensuite une étape (S5) de cuisson lors de laquelle on place le noyau 1000 et l'ébauche du pneumatique 10 porté par ledit noyau 1000 dans un moule de cuisson, afin de vulcaniser les composants.

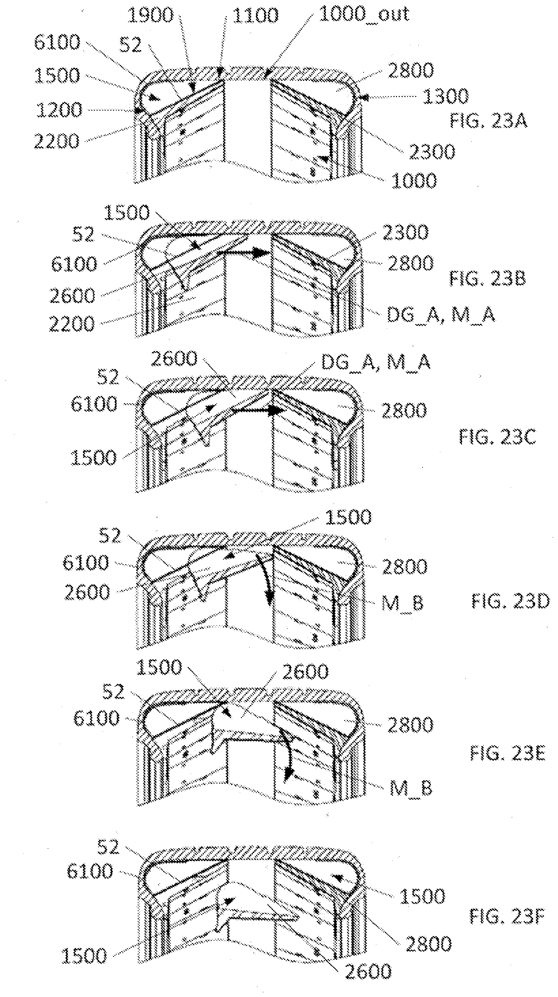

Le procédé comprend ensuite une étape (S6) de démoulage au cours de laquelle on dégage le noyau 1000 du pneumatique 10 en laissant les éléments de rigidification 52 en place dans la cavité interne 35, tel que cela est notamment illustré sur les séquences des figures 23A à 23F. On procède au démontage et à l'extraction progressive desdites pièces pour libérer le pneumatique 10. L'étape (S6) de démoulage comprend d'abord une première sous-étape de retrait de la couronne centrale 2100, au cours de laquelle on retire radialement les clefs 2400 de la couronne centrale, puis les voûtes 2500 de la couronne centrale, afin de libérer les oreilles 2200, 2300, et qu'on se retrouve donc dans une configuration dans laquelle les secteurs 2600, 2700, 2800, 2900 des oreilles 2200, 2300 sont accessibles par l'intérieur du pneumatique 10 tel que cela est illustré sur la figure 23A, puis une seconde sous-étape d'extraction d'une première oreille 2200 au cours de laquelle on extrait les clefs 2600 de l'une des oreilles gauche et droite hors de la cavité interne 35, puis on extrait les voûtes 2700 de ladite oreille 2200 hors de la cavité interne 35, afin de libérer la portion de cavité interne 35 correspondante et les éléments de rigidification 52 qui se trouvent dans ladite portion, puis une troisième sous-étape d'extraction de l'autre oreille 2300 réalisée de façon analogue à la seconde sous-étape. L'extraction des secteurs 2600, 2700, 2800, 2900 est ici effectuée suivant un mouvement d'extraction en translation axiale M_A, si les parois latérales des rainures 1500 sont générées en suivant une direction génératrice axiale DG_A colinéaire à l'axe principal Z10, tel que cela est illustré sur la figure 23B; ledit mouvement d'extraction en translation axiale M_A pouvant être suivi d'un mouvement de basculement M_B en tangage autour d'un axe normal au plan méridien sagittal du secteur 2600, 2700, 2800, 2900 considéré, tel que cela est illustré sur les figures 23D, 23E. Une fois le secteur 2600, 2700, 2800, 2900 dégagé des éléments de rigidification 52, la séquence d'extraction peut s'achever librement par l'intérieur du pneumatique 10, par exemple en suivant, tel que cela est illustré sur la figure 23F, un mouvement radial qui rapproche le secteur 2600, 2700, 2800, 2900 concerné de l'axe principal Z10, pour faire sortir complètement ledit secteur hors du pneumatique 10. Une fois extraits les secteurs 2600, 2700 d'une oreille 2200, ou après que l'on a dégagé chacune des oreilles 2200, 2300, le dispositif anti-pénétration peut être extrait à son tour. Par exemple dans le cas de bandeaux de masquage, ces derniers peuvent être extrait par un glissement spiral qui les fait passer dans l'espace compris entre deux éléments de rigidification 52 successifs.

Suite à l'étape (S0) de préparation, et avant l'étape (S2), ledit procédé comprend une étape (S1) de pré-garnissage au cours de laquelle, tel que cela est illustré sur la figure 22, on pose sur les zones latérales 1200, 1300 et sur la zone sommitale 1100 de la surface de réception 1000_out du noyau 1000, en vis-à-vis des points d'ancrage radialement intérieurs 54A, 54B et extérieurs 56A, 56B, les structures de renfort radialement intérieures 60A, 60B et extérieures 70A, 70B. Les boucles formant les portions 521, 522 se retrouveront captives des structures de renfort radialement intérieures 60A, 60B et des autres composants adjacents du pneumatique 10 placés sur les zones latérale 1200, 1300, tandis que les portions 525 se retrouveront captives des structures de renfort radialement extérieures 70A, 70B et des autres composants adjacents du pneumatique 10.L'invention ne se limite pas aux modes de réalisation décrits précédemment mais à ceux couverts par les revendications.

En effet, on pourra tout à fait envisager de combiner le deuxième mode de réalisation avec les quatrième et cinquième modes de réalisation.

On pourra, sans sortir du cadre de l'invention, envisager d'utiliser un absorbeur de bruit de cavité, par exemple fixé au support de montage du pneumatique ou au pneumatique lui-même de façon à réduire le bruit de cavité du pneumatique. De tels absorbeurs de bruit sont notamment décrits dans WO2018046376, WO2013182477, WO2011051203, EP2660075, EP1253025, EP1876038 ou EP3406462.

## Revendications

1. Pneumatique (10) comprenant un sommet (12) prolongé radialement vers l'intérieur, par deux flancs (30A, 30B) puis par deux bourrelets (32A, 32B), le sommet (12) comprenant une bande de roulement (14), le pneumatique (10) comprenant une surface interne (33) délimitant une cavité torique (35) de gonflage du pneumatique et une structure de rigidification (50) comprenant au moins un élément de rigidification (52; 52A, 52B; 53) s'étendant continûment dans la cavité torique (35) depuis au moins un des flancs (30A, 30B) ou un des bourrelets (32A, 32B) jusqu'au moins le sommet (12), **caractérisé en ce que** le ou chaque élément de rigidification (52; 52A, 52B; 53) est ancré dans ledit flanc (30A, 30B) et/ou ledit bourrelet (32A, 32B) dans ou autour d'au moins une structure de renfort radialement intérieure agencée dans ledit flanc (30A, 30B) et/ou ledit bourrelet (32A, 32B), **en ce que** le ou chaque élément de rigidification (52; 52A, 52B; 53) est ancré dans le sommet (12) dans ou autour d'au moins une structure de renfort radialement extérieure (70A, 70B; 73) agencée dans le sommet (12), **en ce que** le ou chaque élément de rigidification (52; 52A, 52B; 53) comprend une portion (523) s'étendant dans la cavité torique (35) entre :
- un point d'ancrage radialement intérieur (54A, 54B; 55A, 55B) auquel le ou chaque élément de rigidification (52; 52A, 52B; 53) passe au travers de la surface interne (33) pour aller s'ancrer dans ou autour de la ou d'une des structure(s) de renfort radialement intérieure(s) (60A; 60B; 61A, 61B),
- un point d'ancrage radialement extérieur (56A, 56B; 57A, 57B) auquel le ou chaque élément de rigidification (52; 52A, 52B; 53) passe au travers de la surface interne (33) pour aller s'ancrer dans ou autour de la ou d'une des structure(s) de renfort radialement extérieure(s) (70A, 70B; 73),
et **en ce que**, la bande de roulement (14) présentant une hauteur de sculpture (Hs) et comprenant une pluralité de nervures (102, 104, 106, 108), deux nervures adjacentes étant séparées axialement l'une de l'autre par une découpure circonférentielle principale (112, 114, 116, 118) présentant une profondeur (Hr1, Hr2, Hr3, Hr4) supérieure ou égale à 50% de la hauteur de sculpture (Hs), le point d'ancrage radialement extérieur (56A, 56B; 57A, 57B) est agencé au droit d'une des nervures (102, 104, 106, 108).

2. Pneumatique (10) selon la revendication précédente, dans lequel chaque bourrelet (32A, 32B) comprenant au moins un élément de renforcement circonférentiel (40A, 40B) destiné à permettre l'accrochage du pneumatique (10) sur un support de montage du pneumatique (10), la structure de renfort radialement intérieure (60A, 60B; 61A, 61B) est distincte du ou de chaque élément de renforcement circonférentiel (40A, 40B) situé du même côté du plan médian (M) du pneumatique (10) que ledit flanc (30A, 30B) et/ou ledit bourrelet (32A, 32B).

3. Pneumatique (10) selon l'une quelconque des revendications précédentes, dans lequel la structure de rigidification (50) comprend plusieurs éléments de rigidification (52; 52A, 52B; 53) répartis circonférentiellement dans la cavité torique (35).

4. Pneumatique (10) selon l'une quelconque des revendications précédentes, dans lequel la ou chaque nervure (102, 104, 106, 108) au droit de laquelle est agencé le ou chaque point d'ancrage radialement extérieur (56A, 56B; 57A, 57B) étant délimitée axialement par deux bords axiaux (141, 142, 143, 144, 145, 146, 147, 148, 149, 150) définissant la largeur L de la nervure (102, 104, 106, 108) et un plan médian (M1, M2, M3, M4, M5) de la nervure étant situé axialement à équidistance des deux bords axiaux, le ou chaque point d'ancrage radialement extérieur (56A, 56B; 57A, 57B) est agencé à une distance axiale I du plan médian de la nervure telle que 2 x I / L ≤ 0,90, de préférence 2 x I / L ≤ 0,75 et plus préférentiellement 2 x I / L ≤ 0,50 et encore plus préférentiellement 2 x I / L ≤ 0,25.

5. Pneumatique (10) selon l'une quelconque des revendications 1 à 4, dans lequel le sommet (12) étant prolongé radialement vers l'intérieur respectivement de chaque côté du plan médian (M) du pneumatique (10) par un premier et un deuxième flanc (30A, 30B) puis par un premier et un deuxième bourrelet (32A, 32B),
le ou chaque élément de rigidification (52,53) est ancré dans ou autour de:
- une première structure de renfort radialement intérieure (60A; 61A) agencée dans le premier flanc (30A) et/ou le premier bourrelet (32A),
- la ou plusieurs des structure(s) de renfort radialement extérieure(s) (70A, 70B; 73) agencée dans le sommet (12),
- une deuxième structure de renfort radialement intérieure (60B; 61B) agencée dans le deuxième flanc (30B) et/ou le deuxième bourrelet (32B),
de sorte que le ou chaque élément de rigidification (52, 53) s'étend continûment depuis le premier flanc (30A) et/ou le premier bourrelet (32A) jusqu'au deuxième flanc (30B) et/ou deuxième bourrelet (32B) en passant dans le sommet (12),
le ou chaque élément de rigidification (52, 53) comprend une portion (523) s'étendant dans la cavité torique (35) entre :
- un premier point d'ancrage radialement intérieur (54A, 55A) auquel le ou chaque élément de rigidification (52, 53) passe au travers de la surface interne (33) pour aller s'ancrer dans ou autour de la première structure de renfort radialement intérieure (60A, 61A),
- un premier point d'ancrage radialement extérieur (56A, 57A) auquel le ou chaque élément de rigidification (52, 53) passe au travers de la surface interne (33) pour aller s'ancrer dans ou autour de la ou de plusieurs des structure(s) de renfort radialement extérieure(s) (70A, 70B; 73),
le ou chaque élément de rigidification (52, 53) comprend une portion (524) s'étendant dans la cavité torique (35) entre :
- un deuxième point d'ancrage radialement intérieur (54B, 55B) auquel le ou chaque élément de rigidification (52, 53) passe au travers de la surface interne (33) pour aller s'ancrer dans ou autour de la deuxième structure de renfort radialement intérieure (60B, 61B),
- un deuxième point d'ancrage radialement extérieur (56B, 57B) auquel le ou chaque élément de rigidification (52, 53) passe au travers de la surface interne (33) pour aller s'ancrer dans ou autour de la ou de plusieurs des structure(s) de renfort radialement extérieure(s) (70A, 70B; 73),
chaque premier et deuxième point d'ancrage radialement extérieur (56A, 56B; 57A, 57B) étant agencé au droit d'une des nervures (102, 104, 106, 108).

6. Pneumatique (10) selon la revendication précédente, dans lequel le ou chaque élément de rigidification (52; 53) est ancré dans ou autour de:
- la première structure de renfort radialement intérieure (60A; 61A),
- des première et deuxième structures de renfort radialement extérieures (70A, 70B; 73) agencées dans le sommet (12),
- la deuxième structure de renfort radialement intérieure (60B; 61B).

7. Pneumatique (10) selon l'une quelconque des revendications 1 à 4, dans lequel le sommet (12) étant prolongé radialement vers l'intérieur respectivement de chaque côté du plan médian (M) du pneumatique (10) par un premier et un deuxième flanc (30A, 30B) puis par un premier et un deuxième bourrelet (32A, 32B), la structure de rigidification (50) comprend au moins des premier et deuxième éléments de rigidification (52A, 52B),
le ou chaque premier élément de rigidification (52A) est ancré dans ou autour de:
- une première structure de renfort radialement intérieure (60A, 61A) agencée dans le premier flanc (30A) et/ou le premier bourrelet (32A),
- la ou plusieurs des structure(s) de renfort radialement extérieure(s) (70A, 70B; 73) agencée dans le sommet (12),
le ou chaque deuxième élément de rigidification est ancré dans ou autour de:
- une deuxième structure de renfort radialement intérieure (60B, 61B) agencée dans le deuxième flanc (30B) et/ou le deuxième bourrelet (32B), et
- la ou plusieurs des structure(s) de renfort radialement extérieure(s) (70A, 70B; 73) agencée dans le sommet (12),
de sorte que le ou chaque premier et deuxième élément de rigidification (52A, 52B) s'étend continûment dans la cavité torique (35) respectivement depuis le premier flanc (30A) et/ou le premier bourrelet (32A) et le deuxième flanc (30B) et/ou le deuxième bourrelet (32B) jusqu'au sommet (12) dans la cavité torique (35),
le ou chaque premier élément de rigidification (52A) comprend une portion (523A) s'étendant dans la cavité torique (35) entre :
- un premier point d'ancrage radialement intérieur (54A; 55A) auquel le ou chaque premier élément de rigidification (52A) passe au travers de la surface interne (33) pour aller s'ancrer dans ou autour de la première structure de renfort radialement intérieure (60A; 61A),
- un premier point d'ancrage radialement extérieur (56A; 57A) auquel le ou chaque premier élément de rigidification (52A) passe au travers de la surface interne (33) pour aller s'ancrer dans ou autour de la ou plusieurs des structure(s) de renfort radialement extérieure(s) (70A, 70B; 73),
le ou chaque deuxième élément de rigidification (52B) comprend une portion (523B) s'étendant dans la cavité torique (35) entre :
- un deuxième point d'ancrage radialement intérieur (54B; 55B) auquel le ou chaque deuxième élément de rigidification (52B) passe au travers de la surface interne (33) pour aller s'ancrer dans ou autour de la deuxième structure de renfort radialement intérieure (60B; 61B),
- un deuxième point d'ancrage radialement extérieur (56B; 57B) auquel le ou chaque deuxième élément de rigidification (52B) passe au travers de la surface interne (33) pour aller s'ancrer dans ou autour de la ou plusieurs des structure(s) de renfort radialement extérieure(s) (70A, 70B; 73),
chaque premier et deuxième point d'ancrage radialement extérieur (56A, 56B; 57A, 57B) est agencé au droit d'une des nervures (102, 104, 106, 108).

8. Pneumatique (10) selon la revendication précédente, dans lequel le ou chaque premier élément de rigidification (52A) est ancré dans ou autour de:
- la première structure de renfort radialement intérieure (60A, 61A), et
- une première structure de renfort radialement extérieure (70A, 70B) agencée dans le sommet (12),
le ou chaque deuxième élément de rigidification (52B) est ancré dans ou autour de:
- la deuxième structure de renfort radialement intérieure (60B, 61B), et
- une deuxième structure de renfort radialement extérieure (70A, 70B) agencée dans le sommet (12), distincte de la première structure de renfort radialement extérieure (70A, 70B).

9. Pneumatique (10) selon la revendication 6 ou 8, dans lequel les première et deuxième structures de renfort radialement extérieures (70A, 70B) sont agencées axialement de part et d'autre du plan médian (M) du pneumatique (10), de préférence sensiblement symétriquement par rapport au plan médian (M) du pneumatique (10).

10. Pneumatique (10) selon l'une quelconque des revendications 5 à 9, dans lequel chaque premier et deuxième point d'ancrage radialement intérieur (54A, 54B; 55A, 55B) et extérieur (56A, 56B; 57A, 57B) est agencé de sorte que :
- les premiers points d'ancrage radialement extérieur (56A; 57A) et radialement intérieur (54A; 55A) sont agencés axialement du même côté du plan médian (M) du pneumatique (10),
- les deuxièmes points d'ancrage radialement extérieur (56B; 57B) et radialement intérieur (54B; 55B) sont agencés axialement du même autre côté du plan médian (M) du pneumatique (10), et
- la portion (523; 533) s'étendant entre les premiers points d'ancrage radialement extérieur (56A; 57A) et radialement intérieur (54A; 55A) et la portion (524; 534) s'étendant entre les deuxièmes points d'ancrage radialement extérieur (56B; 57B) et radialement intérieur (54B; 55B) ne se croisent pas dans la cavité torique (35).

11. Pneumatique (10) selon l'une quelconque des revendications 5 à 10, dans lequel, chaque premier et deuxième bourrelet (32A, 32B) comprenant au moins un élément de renforcement circonférentiel (40A, 40B) destiné à permettre l'accrochage du pneumatique (10) sur un support de montage du pneumatique (10),
la première structure de renfort radialement intérieure (60A; 61A) est distincte du ou de chaque élément de renforcement circonférentiel (40A) situé du même premier côté du plan médian (M) du pneumatique (10) que ledit premier flanc (30A) et/ou ledit premier bourrelet (32B), et
la deuxième structure de renfort radialement intérieure (60B; 61B) est distincte du ou de chaque élément de renforcement circonférentiel (40B) situé du même deuxième côté du plan médian (M) du pneumatique (10) que ledit deuxième flanc (30B) et/ou ledit deuxième bourrelet (32B).

12. Pneumatique (10) selon l'une quelconque des revendications 5 à 11, dans lequel la pluralité de nervures (102, 104, 106, 108) comprenant au moins des première et deuxième nervures séparées axialement par la, une des ou plusieurs des découpure(s) circonférentielle(s) principale(s) (112, 114, 116, 118), chaque premier et deuxième point d'ancrage radialement extérieur (56A, 56B; 57A, 57B) est agencé respectivement au droit de chaque première et deuxième nervure (102, 104, 106, 108).

13. Pneumatique (10) selon l'une quelconque des revendications 5 à 11, dans lequel, chaque premier et deuxième point d'ancrage radialement extérieur (56A, 56B; 57A, 57B) est agencé respectivement au droit d'une même nervure (102, 104, 106, 108) parmi la pluralité de nervures (102, 104, 106, 108).

## Patentansprüche

1. Reifen (10), welcher einen Scheitel (12) umfasst, der durch zwei Flanken (30A, 30B) und danach durch zwei Wülste (32A, 32B) radial nach innen verlängert wird, wobei der Scheitel (12) einen Laufstreifen (14) umfasst, wobei der Reifen (10) eine Innenoberfläche (33), die einen torischen Hohlraum (35) zum Aufpumpen des Reifens begrenzt, und eine mindestens ein Versteifungselement (52; 52A, 52B; 53) umfassende Versteifungsstruktur (50), die sich in dem torischen Hohlraum (35) durchgehend von mindestens einer der Flanken (30A, 30B) oder einem der Wülste (32A, 32B) bis mindestens zu dem Scheitel (12) erstreckt, umfasst, **dadurch gekennzeichnet, dass** das oder jedes Versteifungselement (52; 52A, 52B; 53) in der Flanke (30A, 30B) und/oder dem Wulst (32A, 32B) in oder um mindestens eine radial innenliegende Verstärkungsstruktur verankert ist, die in der Flanke (30A, 30B) und/oder dem Wulst (32A, 32B) angeordnet ist, dadurch, dass das oder jedes Versteifungselement (52; 52A, 52B; 53) in dem Scheitel (12) in oder um mindestens eine radial außenliegende Verstärkungsstruktur (70A, 70B; 73) verankert ist, die in dem Scheitel (12) angeordnet ist, dadurch, dass das oder jedes Versteifungselement (52; 52A, 52B; 53) einen Abschnitt (523) umfasst, der sich in dem torischen Hohlraum (35) erstreckt zwischen:
- einem radial innenliegenden Verankerungspunkt (54A, 54B; 55A, 55B), an dem das oder jedes Versteifungselement (52; 52A, 52B; 53) durch die Innenoberfläche (33) hindurchgeht, um in der oder um die oder eine der radial innenliegende(n) Verstärkungsstruktur(en) (60A; 60B; 61A, 61B) verankert zu werden,
- einem radial außenliegenden Verankerungspunkt (56A, 56B; 57A, 57B), an dem das oder jedes Versteifungselement (52; 52A, 52B; 53) durch die Innenoberfläche (33) hindurchgeht, um in der oder um die oder eine der radial außenliegende(n) Verstärkungsstruktur(en) (70A, 70B; 73) verankert zu werden,
und dadurch, dass der Laufstreifen (14) eine Profiltiefe (Hs) aufweist und mehrere Rippen (102, 104, 106, 108) umfasst, wobei zwei benachbarte Rippen axial durch einen umlaufenden Hauptausschnitt (112, 114, 116, 118) voneinander getrennt sind, der eine Tiefe (Hr1, Hr2, Hr3, Hr4) aufweist, die größer oder gleich 50 % der Profiltiefe (Hs) ist, wobei der radial außenliegende Verankerungspunkt (56A, 56B; 57A, 57B) an einer der Rippen (102, 104, 106, 108) angeordnet ist.

2. Reifen (10) nach dem vorhergehenden Anspruch, wobei jeder Wulst (32A, 32B) mindestens ein Umfangsverstärkungselement (40A, 40B) umfasst, das dazu bestimmt ist, das Aufziehen des Reifens (10) auf einen Montageträger des Reifens (10) zu ermöglichen, wobei die radial innenliegende Verstärkungsstruktur (60A, 60B; 61A, 61B) verschieden von dem oder von jedem Umfangsverstärkungselement (40A, 40B) ist, das sich auf derselben Seite der Mittelebene (M) des Reifens (10) wie die Flanke (30A, 30B) und/oder der Wulst (32A, 32B) befindet.

3. Reifen (10) nach einem der vorhergehenden Ansprüche, wobei die Versteifungsstruktur (50) mehrere Versteifungselemente (52; 52A, 52B; 53) umfasst, die in dem torischen Hohlraum (35) über den Umfang verteilt sind.

4. Reifen (10) nach einem der vorhergehenden Ansprüche, wobei die oder jede Rippe (102, 104, 106, 108), an welcher der oder jeder radial außenliegende Verankerungspunkt (56A, 56B; 57A, 57B) angeordnet ist, axial von zwei axialen Rändern (141, 142, 143, 144, 145, 146, 147, 148, 149, 150) begrenzt wird, welche die Breite L der Rippe (102, 104, 106, 108) definieren, und eine Mittelebene (M1, M2, M3, M4, M5) der Rippe sich axial im gleichen Abstand von den zwei axialen Rändern befindet, wobei der oder jeder radial außenliegende Verankerungspunkt (56A, 56B; 57A, 57B) in einem solchen axialen Abstand I von der Mittelebene der Rippe angeordnet ist, dass 2 x I / L ≤ 0,90, vorzugsweise 2 x I / L ≤ 0,75 und stärker bevorzugt 2 x I / L ≤ 0,50 und noch stärker bevorzugt 2 x I / L ≤ 0,25 ist.

5. Reifen (10) nach einem der Ansprüche 1 bis 4, wobei, wenn der Scheitel (12) auf jeder Seite der Mittelebene (M) des Reifens (10) durch eine erste bzw. eine zweite Flanke (30A, 30B) und danach durch einen ersten bzw. einen zweiten Wulst (32A, 32B) radial nach innen verlängert ist,
das oder jedes Versteifungselement (52, 53) in oder um Folgendes verankert ist:
- eine erste radial innenliegende Verstärkungsstruktur (60A; 61A), die in der ersten Flanke (30A) und/oder dem ersten Wulst (32A) angeordnet ist,
- die oder mehrere der radial außenliegende(n) Verstärkungsstruktur (en) (70A, 70B; 73), die in dem Scheitel (12) angeordnet ist,
- eine zweite radial innenliegende Verstärkungsstruktur (60B; 61B), die in der zweiten Flanke (30B) und/oder dem zweiten Wulst (32B) angeordnet ist,
sodass sich das oder jedes Versteifungselement (52, 53) durchgehend von der ersten Flanke (30A) und/oder dem ersten Wulst (32A) bis zu der zweiten Flanke (30B) und/oder dem zweiten Wulst (32B) erstreckt und dabei durch den Scheitel (12) geht,
wobei das oder jedes Versteifungselement (52, 53) einen Abschnitt (523) beinhaltet, der sich in dem torischen Hohlraum (35) zwischen Folgendem erstreckt:
- einem ersten radial innenliegenden Verankerungspunkt (54A, 55A), an dem das oder jedes Versteifungselement (52, 53) durch die Innenoberfläche (33) hindurchgeht, um in der oder um die erste radial innenliegende Verstärkungsstruktur (60A, 61A) verankert zu werden,
- einem ersten radial außenliegenden Verankerungspunkt (56A, 57A), an dem das oder jedes Versteifungselement (52, 53) durch die Innenoberfläche (33) hindurchgeht, um in der oder um die oder mehrere der radial außenliegende(n) Verstärkungsstruktur(en) (70A, 70B; 73) verankert zu werden,
wobei das oder jedes Versteifungselement (52, 53) einen Abschnitt (524) beinhaltet, der sich in dem torischen Hohlraum (35) zwischen Folgendem erstreckt:
- einem zweiten radial innenliegenden Verankerungspunkt (54B, 55B), an dem das oder jedes Versteifungselement (52, 53) durch die Innenoberfläche (33) hindurchgeht, um in der oder um die zweite radial innenliegende Verstärkungsstruktur (60B, 61B) verankert zu werden,
- einem zweiten radial außenliegenden Verankerungspunkt (56B, 57B), an dem das oder jedes Versteifungselement (52, 53) durch die Innenoberfläche (33) hindurchgeht, um in der oder um die oder mehrere der radial außenliegende(n) Verstärkungsstruktur(en) (70A, 70B; 73) verankert zu werden,
wobei jeder erste und zweite radial außenliegende Verankerungspunkt (56A, 56B; 57A, 57B) an einer der Rippen (102, 104, 106, 108) angeordnet ist.

6. Reifen (10) nach dem vorhergehenden Anspruch, wobei das oder jedes Versteifungselement (52; 53) in oder um Folgendes verankert ist:
- die erste radial innenliegende Verstärkungsstruktur (60A; 61A),
- eine erste und eine zweite radial außenliegende Verstärkungsstruktur (70A, 70B; 73), die in dem Scheitel (12) angeordnet sind,
- die zweite radial innenliegende Verstärkungsstruktur (60B; 61B).

7. Reifen (10) nach einem der Ansprüche 1 bis 4, wobei, wenn der Scheitel (12) auf jeder Seite der Mittelebene (M) des Reifens (10) durch eine erste bzw. eine zweite Flanke (30A, 30B) und danach durch einen ersten bzw. einen zweiten Wulst (32A, 32B) radial nach innen verlängert ist, die Versteifungsstruktur (50) mindestens ein erstes und ein zweites Versteifungselement (52A, 52B) umfasst,
das oder jedes erste Versteifungselement (52A) in oder um Folgendes herum verankert ist:
- eine erste radial innenliegende Verstärkungsstruktur (60A, 61A), die in der ersten Flanke (30A) und/oder dem ersten Wulst (32A) angeordnet ist,
- die oder mehrere der radial außenliegende(n) Verstärkungsstruktur (en) (70A, 70B; 73), die in dem Scheitel (12) angeordnet ist,
das oder jedes zweite Versteifungselement in oder um Folgendes herum verankert ist:
- eine zweite radial innenliegende Verstärkungsstruktur (60B, 61B), die in der zweiten Flanke (30B) und/oder dem zweiten Wulst (32B) angeordnet ist, und
- die oder mehrere der radial außenliegende(n) Verstärkungsstruktur (en) (70A, 70B; 73), die in dem Scheitel (12) angeordnet ist,
sodass sich das oder jedes erste und zweite Versteifungselement (52A, 52B) in dem torischen Hohlraum (35) jeweils durchgehend von der ersten Flanke (30A) und/oder dem ersten Wulst (32A) und der zweiten Flanke (30B) und/oder dem zweiten Wulst (32B) bis zu dem Scheitel (12) in dem torischen Hohlraum (35) erstreckt, wobei das oder jedes erste Versteifungselement (52A) einen Abschnitt (523A) beinhaltet, der sich in dem torischen Hohlraum (35) zwischen Folgendem erstreckt:
- einem ersten radial innenliegenden Verankerungspunkt (54A; 55A), an dem das oder jedes erste Versteifungselement (52A) durch die Innenoberfläche (33) hindurchgeht, um in oder um die erste radial innenliegende Verstärkungsstruktur (60A; 61A) herum verankert zu werden,
- einem ersten radial außenliegenden Verankerungspunkt (56A; 57A), an dem das oder jedes erste Versteifungselement (52A) durch die Innenoberfläche (33) hindurchgeht, um in der oder um die oder mehrere der radial außenliegende(n) Verstärkungsstruktur(en) (70A, 70B; 73) verankert zu werden,
wobei das oder jedes zweite Versteifungselement (52B) einen Abschnitt (523B) beinhaltet, der sich in dem torischen Hohlraum (35) zwischen Folgendem erstreckt:
- einem zweiten radial innenliegenden Verankerungspunkt (54B; 55B), an dem das oder jedes zweite Versteifungselement (52B) durch die Innenoberfläche (33) hindurchgeht, um in der oder um die zweite radial innenliegende Verstärkungsstruktur (60B; 61B) herum verankert zu werden,
- einem zweiten radial außenliegenden Verankerungspunkt (56B; 57B), an dem das oder jedes zweite Versteifungselement (52B) durch die Innenoberfläche (33) hindurchgeht, um in der oder um die oder mehrere der radial außenliegende(n) Verstärkungsstruktur(en) (70A, 70B; 73) verankert zu werden,
jeder erste und zweite radial außenliegende Verankerungspunkt (56A, 56B; 57A, 57B) an einer der Rippen (102, 104, 106, 108) angeordnet ist.

8. Reifen (10) nach dem vorhergehenden Anspruch, wobei das oder jedes Versteifungselement (52A) in oder um Folgendes herum verankert ist:
- die erste radial innenliegende Verstärkungsstruktur (60A, 61A) und
- eine erste radial außenliegende Verstärkungsstruktur (70A, 70B), die in dem Scheitel (12) angeordnet ist,
das oder jedes zweite Versteifungselement (52B) in oder um Folgendes herum verankert ist:
- die zweite radial innenliegende Verstärkungsstruktur (60B, 61B) und
- eine im Scheitel (12) angeordnete zweite radial außenliegende Verstärkungsstruktur (70A, 70B), die von der ersten radial außenliegenden Verstärkungsstruktur (70A, 70B) verschieden ist.

9. Reifen (10) nach Anspruch 6 oder 8, wobei die erste und die zweite radial außenliegende Verstärkungsstruktur (70A, 70B) axial zu beiden Seiten der Mittelebene (M) des Reifens (10), vorzugsweise im Wesentlichen symmetrisch in Bezug auf die Mittelebene (M) des Reifens (10), angeordnet sind.

10. Reifen (10) nach einem der Ansprüche 5 bis 9, wobei jeder erste und zweite radial innenliegende (54A, 54B; 55A, 55B) und außenliegende Verankerungspunkt (56A, 56B; 57A, 57B) so angeordnet ist, dass:
- der erste radial außenliegende (56A; 57A) und radial innenliegende Verankerungspunkt (54A; 55A) axial auf derselben Seite der Mittelebene (M) des Reifens (10) angeordnet sind,
- der zweite radial außenliegende (56B; 57B) und radial innenliegende Verankerungspunkt (54B; 55B) axial auf derselben, anderen Seite der Mittelebene (M) des Reifens (10) angeordnet sind und
- sich der Abschnitt (523; 533), der sich zwischen dem ersten radial außenliegenden (56A; 57A) und radial innenliegenden Verankerungspunkt (54A; 55A) erstreckt, und der Abschnitt (524; 534), der sich zwischen dem zweiten radial außenliegenden (56B; 57B) und radial innenliegenden Verankerungspunkt (54B; 55B) erstreckt, in dem torischen Hohlraum (35) nicht kreuzen.

11. Reifen (10) nach einem der Ansprüche 5 bis 10, wobei, wenn jeder erste und zweite Wulst (32A, 32B) mindestens ein Umfangsverstärkungselement (40A, 40B) umfasst, das dazu bestimmt ist, das Aufziehen des Reifens (10) auf einen Montageträger des Reifens (10) zu ermöglichen,
die erste radial innenliegende Verstärkungsstruktur (60A; 61A) verschieden von dem oder von jedem Umfangsverstärkungselement (40A) ist, das sich auf derselben ersten Seite der Mittelebene (M) des Reifens (10) wie die erste Flanke (30A) und/oder der erste Wulst (32B) befindet, und
die zweite radial innenliegende Verstärkungsstruktur (60B; 61B) verschieden von dem oder von jedem Umfangsverstärkungselement (40B) ist, das sich auf derselben zweiten Seite der Mittelebene (M) des Reifens (10) wie die zweite Flanke (30B) und/oder der zweite Wulst (32B) befindet.

12. Reifen (10) nach einem der Ansprüche 5 bis 11, wobei, wenn die mehreren Rippen (102, 104, 106, 108) mindestens eine erste und eine zweite Rippe umfassen, die axial durch den, einen der oder mehrere der umlaufenden Hauptausschnitt(e) (112, 114, 116, 118) getrennt sind, jeder erste und zweite radial außenliegende Verankerungspunkt (56A, 56B; 57A, 57B) an der ersten bzw. zweiten Rippe (102, 104, 106, 108) angeordnet ist.

13. Reifen (10) nach einem der Ansprüche 5 bis 11, wobei jeder erste und zweite radial außenliegende Verankerungspunkt (56A, 56B; 57A, 57B) jeweils an derselben Rippe (102, 104, 106, 108) von den mehreren Rippen (102, 104, 106, 108) angeordnet ist.

## Claims

1. Tyre (10) comprising a crown (12) extended radially inwards by two sidewalls (30A, 30B) then by two beads (32A, 32B), the crown (12) comprising a tread (14), the tyre (10) having an internal surface (33) delimiting a toroidal inflation cavity (35) of the tyre and a stiffening structure (50) comprising at least one stiffening element (52; 52A, 52B; 53) extending continuously in the toroidal cavity (35) from at least one of the sidewalls (30A, 30B) of the beads (32A, 32B) at least as far as the crown (12), **characterised in that** the or each stiffening element (52; 52A, 52B; 53) is anchored in said sidewall (30A, 30B) and/or said bead (32A, 32B) in or around at least one radially inner reinforcing structure in said sidewall (30A, 30B) and/or said bead (32A, 32B), **in that** the or each stiffening element (52; 52A, 52B; 53) is anchored in the crown (12) in or around at least one radially outer reinforcing structure (70A, 70B; 73) in the crown (12), **in that** the or each stiffening element (52; 52A, 52B; 53) comprises a portion (523) extending in the toroidal cavity (35) between:
- a radially inner anchor point (54A, 54B; 55A, 55B) at which the or each stiffening element (52; 52A, 52B; 53) passes through the internal surface (33) to be anchored in or around the or one of the radially inner reinforcing structures (60A; 60B; 61A, 61B),
- a radially outer anchor point (56A, 56B; 57A, 57B) at which the or each stiffening element (52; 52A, 52B; 53) passes through the inner surface (33) to be anchored in or around the or one of the radially outer reinforcing structures (70A, 70B; 73),
and **in that** the tread (14) having a profile height (Hs) and comprising a plurality of ribs (102, 104, 106, 108), two adjacent ribs being separated axially from one another by a main circumferential cut-out (112, 114, 116, 118) having a depth (Hr1, Hr2, Hr3, Hr4) greater than or equal to 50% of the profile height (Hs), the radially outer anchor point (56A, 56B; 57A, 57B) is aligned with one of the ribs (102, 104, 106, 108).

2. Tyre (10) according to the preceding claim, wherein each bead (32A, 32B) comprising at least one circumferential reinforcing element (40A, 40B) intended to enable attachment of the tyre (10) onto a mounting support of the tyre (10), the radially inner reinforcing structure (60A, 60B; 61A, 61B) is distinct from the or each circumferential reinforcing element (40A, 40B) situated on the same side of the median plane (M) of the tyre (10) as said sidewall (30A, 30B) and/or said bead (32A, 32B).

3. Tyre (10) according to either one of the preceding claims, wherein the stiffening structure (50) comprises a plurality of stiffening elements (52; 52A, 52B; 53) circumferentially distributed in the toroidal cavity (35).

4. Tyre (10) according to any one of the preceding claims, wherein the or each rib (102, 104, 106, 108) with which the or each radially outer anchor point (56A, 56B; 57A, 57B) is aligned being delimited axially by two axial edges (141, 142, 143, 144, 145, 146, 147, 148, 149, 150) defining the width L of the rib (102, 104, 106, 108) and a median plane (M1, M2, M3, M4, M5) of the rib being situated axially equidistantly from the two axial edges, the or each radially outer anchor point (56A, 56B; 57A, 57B) is at an axial distance I from the median plane of the rib such that 2 x I / L ≤ 0.90, preferably 2 x I / L ≤ 0.75, more preferably 2 x I / L ≤ 0.50 and even more preferably 2 x I / L ≤ 0.25.

5. Tyre (10) according to any one of claims 1 to 4, wherein the crown (12) being extended radially inwards on each side of the median plane (M) of the tyre (10) by respective first and second sidewalls (30A, 30B) and then by first and second beads (32A, 32B),
the or each stiffening element (52, 53) is anchored in or around:
- a first radially inner reinforcing structure (60A; 61A) arranged in the first sidewall (30A) and/or the first bead (32A),
- the or a plurality of the radially outer reinforcing structures (70A, 70B; 73) in the crown (12),
- a second radially inner reinforcing structure (60B; 61B) in the second sidewall (30B) and/or dthe second bead (32B),
so that the or each stiffening element (52, 53) extends continuously from the first sidewall (30A) and/or the first bead (32A) as far as the second sidewall (30B) and/or the second bead (32B) in the crown (12),
the or each stiffening element (52, 53) comprises a portion (523) extending in the toroidal cavity (35) between:
- a first radially inner anchor point (54A, 55A) at which the or each stiffening element (52, 53) passes through the internal surface (33) to be anchored in or around the first radially inner reinforcing structure (60A, 61A),
- a first radially outer anchor point (56A, 57A) at which the or each stiffening element (52, 53) passes through the internal surface (33) to be anchored in or around the or a plurality of the radially outer reinforcing structures (70A, 70B; 73),
the or each stiffening element (52, 53) comprises a portion (524) extending in the toroidal cavity (35) between:
- a second radially inner anchor point (54B, 55B) at which the or each stiffening element (52, 53) passes through the internal surface (33) to be anchored in or around the second radially inner reinforcing structure (60B, 61B),
- a second radially outer anchor point (56B, 57B) at which the or each stiffening element (52, 53) passes through the internal surface (33) to be anchored in or around the or a plurality of the radially outer reinforcing structures (70A, 70B; 73),
each of the first and second radially outer anchor points (56A, 56B; 57A, 57B) being aligned with one of the ribs (102, 104, 106, 108).

6. Tyre (10) according to the preceding claim, wherein the or each stiffening element (52; 53) is anchored in or around:
- the first radially inner reinforcing structure (60A; 61A),
- first and second radially outer reinforcing structures (70A, 70B; 73) in the crown (12),
- the second radially inner reinforcing structure (60B; 61B).

7. Tyre (10) according to any one of claims 1 to 4, wherein, the crown (12) being extended radially inwards on each side of the median plane (M) of the tyre (10) by a first and second sidewall (30A, 30B) and then by a first and a second bead (32A, 32B), the stiffening structure (50) comprises at least first and second stiffening elements (52A, 52B),
the or each first stiffening element (52A) is anchored in or around:
- a first radially inner reinforcing structure (60A, 61A) in the first sidewall (30A) and/or the first bead (32A),
- the or a plurality of the radially outer reinforcing structures (70A, 70B; 73) in the crown (12),
the or each second stiffening element is anchored in or around:
- a second radially inner reinforcing structure (60B, 61B) in the second sidewall (30B) and/or the second bead (32B), and
- the or a plurality of the radially outer reinforcing structures (70A, 70B; 73) in the crown (12),
so that the or each of the first and second stiffening elements (52A, 52B) extends continuously in the toroidal cavity (35) from the first sidewall (30A) and/or the first bead (32A) and the second sidewall (30B) and/or the second bead (32B) as far as the crown (12) in the toroidal cavity (35),
the or each first stiffening element (52A) comprises a portion (523A) extending in the toroidal cavity (35) between:
- a first radially inner anchor point (54A; 55A) at which the or each stiffening element (52A) passes through the internal surface (33) to be anchored in or around the first radially inner reinforcing structure (60A; 61A),
- a first radially outer anchor point (56A; 57A) at which the or each first stiffening element (52A) passes through the internal surface (33) to be anchored in or around the or a plurality of the radially outer reinforcing structures (70A, 70B; 73),
the or each second stiffening element (52B) comprises a portion (523B) extending in the toroidal cavity (35) between:
- a second radially inner anchor point (54B; 55B) at which the or each second stiffening element (52B) passes through the internal surface (33) to be anchored in or around the second radially inner reinforcing structure (60B; 61B),
- a second radially anchor point (56B; 57B) at which the or each second stiffening element (52B) passes through the internal surface (33) to be anchored in or around the or a plurality of the radially outer reinforcing structures (70A, 70B; 73),
each of the first and second radially outer anchor points (56A, 56B; 57A, 57B) is aligned with one of the ribs (102, 104, 106, 108).

8. Tyre (10) according to the preceding claim, wherein the or each first stiffening element (52A) is anchored in or around:
- the first radially inner reinforcing structure (60A, 61A), and
- a first radially outer reinforcing structure (70A, 70B) in the crown (12),
the or each second stiffening element (52B) is anchored in or around:
- the second radially inner reinforcing structure (60B, 61B), and
- a second radially outer reinforcing structure (70A, 70B) in the crown (12) distinct from the first radially outer reinforcing structure (70A, 70B).

9. Tyre (10) according to claim 6 or 8, wherein the first and second radially outer reinforcing structures (70A, 70B) are axially on either side of the median plane (M) of the tyre (10), preferably substantially symmetrically with respect to the median plane (M) of the tyre (10).

10. Tyre (10) according to any one of claims 5 to 9, wherein each of the first and second radially inner anchor points (54A, 54B; 55A, 55B) and radially outer anchor points (56A, 56B; 57A, 57B) is such that:
- the first radially outer anchor points (56A; 57A) and radially inner anchor points (54A; 55A) are axially on same side of the median plane (M) of the tyre (10),
- the second radially outer anchor points (56B; 57B) and radially inner anchor points (54B; 55B) are axially on the same other side of the median plane (M) of the tyre (10), and
- the portion (523; 533) extending between the first radially outer anchor points (56A; 57A) and radially inner anchor points (54A; 55A) and the portion (524; 534) extending between the second radially outer anchor points (56B; 57B) and radially inner anchor points (54B; 55B) do not cross over in the toroidal cavity (35).

11. Tyre (10) according to any one of claims 5 to 10, wherein, each of the first and second beads (32A, 32B) comprising at least one circumferential reinforcing element (40A, 40B) intended to enable attachment of the tyre (10) onto a mounting support of the tyre (10), the first radially inner reinforcing structure (60A; 61A) is distinct from the or each circumferential reinforcing element (40A) situated on the same first side of the median plane (M) of the tyre (10) as said first sidewall (30A) and/or said first bead (32B), and the second radially inner reinforcing structure (60B; 61B) is distinct from the or each circumferential reinforcing element (40B) situated on the same second side of the median plane (M) of the tyre (10) as said second sidewall (30B) and/or said second bead (32B).

12. Tyre (10) according to any one of claims 5 to 11, wherein, the plurality of ribs (102, 104, 106, 108) comprising at least first and second ribs separated axially by the, one of the or a plurality of the main circumferential cut-outs (112, 114, 116, 118), each of the first and second radially outer anchor points (56A, 56B; 57A, 57B) is respectively aligned with each of the first and second ribs (102, 104, 106, 108).

13. Tyre (10) according to any one of claims 5 to 11, wherein each of the first and second radially outer anchor points (56A, 56B; 57A, 57B) is respectively aligned with the same rib (102, 104, 106, 108) of the plurality of ribs (102, 104, 106, 108).
